# EUROPEAN PATENT SPECIFICATION

(11) **EP 3 824 663 B1**
(45) Date of publication and mention of the grant of the patent: **05.03.2025**
(21) Application number: 19843211.4
(22) Date of filing: 26.07.2019
(51) Int. Cl.: H04W 12/106, H04W 36/00, H04W 80/02, H04W 84/04, H04W 92/20, H04W 28/02, H04W 40/12

(54) **WIRELESS NODE COMMUNICATION METHOD AND APPARATUS IN WIRELESS COMMUNICATION SYSTEM**
DRAHTLOSKNOTENKOMMUNIKATIONSVERFAHREN UND -VORRICHTUNG IN EINEM DRAHTLOSKOMMUNIKATIONSSYSTEM
PROCÉDÉ ET APPAREIL DE COMMUNICATION DE NOEUD SANS FIL DANS UN SYSTÈME DE COMMUNICATIONS SANS FIL

(30) Priority: 31.07.2018 KR 20180089513; 21.08.2018 KR 20180097645; 06.09.2018 KR 20180106510
(43) Date of publication of application: 26.05.2021
(73) Proprietor: Samsung Electronics Co., Ltd., Suwon-si, Gyeonggi-do 16677 (KR)
(72) Inventor: KIM, Donggun, Suwon-si, Gyeonggi-do 16677 (KR); KIM, Soenghun, Suwon-si, Gyeonggi-do 16677 (KR); BAEK, Sangkyu, Suwon-si, Gyeonggi-do 16677 (KR)
(74) Representative: Gulde & Partner
(86) International application number: PCT/KR2019/009353
(87) International publication number: WO 2020/027508

(56) References cited:
- WO-A1-2017/054538
- ZTE: "Considerations on adaptation layer in IAB", 25 May 2018 (2018-05-25), pages 1 - 5, XP051526968, Retrieved from the Internet <URL:http://www.3gpp.org/ftp/tsg%5Fran/WG3%5FIu/TSGR3%5F100/Docs/R3%2D182788%2Ezip>
- LG ELECTRONICS INC: "Flow control in IAB node", vol. RAN WG2, no. Montreal, Canada; 20180702 - 20180706, 1 July 2018 (2018-07-01), XP051467594, Retrieved from the Internet <URL:http://www.3gpp.org/ftp/Meetings%5F3GPP%5FSYNC/RAN2/Docs> [retrieved on 20180701]
- LG ELECTRONICS INC ET AL: "Bearer mapping in IAB node", vol. RAN WG2, no. Montreal, Canada; 20180702 - 20180706, 8 July 2018 (2018-07-08), XP051526556, Retrieved from the Internet <URL:http://www.3gpp.org/ftp/tsg%5Fran/WG2%5FRL2/TSGR2%5FAHs/2018%5F07%5FNR/Docs/R2%2D1810808%2Ezip> [retrieved on 20180708]
- SAMSUNG: "Adaptation layer location within the IAB donor node", vol. RAN WG3, no. Busan, Republic of Korea; 20180521 - 20180525, 20 May 2018 (2018-05-20), XP051445510, Retrieved from the Internet <URL:http://www.3gpp.org/ftp/Meetings%5F3GPP%5FSYNC/RAN3/Docs/> [retrieved on 20180520]
- AT&T ET AL: "Lossless Data Transfer for IAB Design with Hop-by-Hop RLC ARQ", vol. RAN WG3, no. Montreal, Canada; 20180702 - 20180706, 1 July 2018 (2018-07-01), XP051468460, Retrieved from the Internet <URL:http://www.3gpp.org/ftp/Meetings%5F3GPP%5FSYNC/RAN3/Docs> [retrieved on 20180701]
- "3rd Generation Partnership Project; Technical Specification Group Radio Access Network; Study on Integrated Access and Backhaul; (Release 15)", 3GPP STANDARD; TECHNICAL REPORT; 3GPP TR 38.874, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG2, no. V0.3.2, 21 June 2018 (2018-06-21), pages 1 - 39, XP051473122
- ZTE: "Considerations on adaptation layer in IAB", R3-182788, 3GPP TSG-RAN WG3 MEETING #100, 11 May 2018 (2018-05-11), XP051526968
- LG ELECTRONICS INC. ET AL.: "Bearer mapping in IAB node", R2-1810808, 3GPP TSG-RAN2 MEETING ADHOC#1807, 8 July 2018 (2018-07-08), XP051526556
- AT&T: "End-to-end vs. hop-by-hop RLC ARQ design for L2 relaying in IAB", R3-183195, 3GPP TSG-RAN WG3 #100, 12 May 2018 (2018-05-12), XP051527356
- HUAWEI: "Distributed RRC functions for IAB", R2-1810735, 3GPP TSG-RAN WG2#102, 22 June 2018 (2018-06-22), XP051526492

## Description

### [Technical Field]

The disclosure relates to a wireless node communication method and apparatus in a wireless communication system.

### [Background Art]

To meet increasing demand with respect to wireless data traffic after the commercialization of 4^{th} generation (4G) communication systems, considerable efforts have been made to develop pre-5^{th} generation (5G) communication systems or 5G communication systems. For this reason, '5G communication systems' or 'pre-5G communication systems' are called 'beyond 4G network communication systems' or 'post Long-Term Evolution (LTE) systems.' A 5G communication system defined by 3GPP is referred to as a new radio (NR) system. In order to achieve a high data transmission rate, 5G communication systems are being developed to be implemented in a super-high frequency band (millimeter wave (mmWave)), e.g., a band of 60 GHz. In order to reduce propagation path loss and increase a propagation distance in the millimeter wave frequency bands, in 5G communication systems, discussions are underway about technologies such as beam-forming, massive multiple input multiple output (MIMO), full dimensional MIMO (FD-MIMO), array antenna, analog beam-forming, and large scale antenna, and have been applied to NR systems. Also, in order to improve networks of systems, in 5G communication systems, developments of technologies such as evolved small cell, advanced small cell, cloud radio access network (cloud RAN), ultra-dense network, device to device communication (D2D), wireless backhaul, moving network, cooperative communication, coordinated multi-points (CoMP), and interference cancellation are underway. Furthermore, in 5G communication systems, developments of an advanced coding modulation (ACM) scheme such as hybrid FSK and QAM modulation (FQAM) and sliding window superposition coding (SWSC) and an enhanced network access scheme such as filter bank multi carrier (FBMC), non-orthogonal multiple access (NOMA), or sparse code multiple access (SCMA) are underway.

The Internet is evolving from a human-centered connection network through which humans create and consume information to an Internet of Things (IoT) network through which distributed elements, such as objects, exchange and process information. Internet of Everything (IoE) technology, which is a combination of IoT technology and big data processing technology through connection with a cloud server, is also emerging. In order to implement the IoT, technology elements such as sensing technology, wired/wireless communication and network infrastructure, service interface technology, and security technology are required, and thus technology for inter-object connection, such as a sensor network, machine to machine (M2M) communication, or machine type communication (MTC), has recently been studied. In an IoT environment, intelligent Internet technology (IT) services that collect and analyze data generated by connected objects and create new value in human life may be provided. The IoT may be applied to fields such as smart homes, smart buildings, smart cities, smart cars or connected cars, smart grids, health care, smart home appliances, and advanced medical services through convergence and integration of existing information technology (IT) and various industries.

Various attempts are being made to apply 5G communication systems to the IoT network. For example, technology such as a sensor network, M2M communication, or MTC is implemented by 5G communication technology such as beam-forming, MIMO, or array antenna. The application of a cloud RAN as big data processing technology may also be considered as an example of convergence of 5G technology and IoT technology.

Because mobile communication systems may provide various services due to the development of the above mobile communication systems, methods of effectively providing the services are required.

The publication "Considerations on adaptation layer in IAB" (3GPP document R3-182788) by ZTE makes a comparison between adaptation layer above RLC and adaptation layer below RLC.

The publication "Flow control in IAB node" (3GPP document R2-1810432) by LG Electronics Inc. discuss the data congestion issue for IAB.

### [Disclosure]

### [Technical Solution]

According to an embodiment of the disclosure, an Integrated Access Backhaul (IAB) node is provided as defined in the appended claims.

According to another embodiment of the disclosure, a communication method of an Integrated Access Backhaul (IAB) node is provided as defined in the appended claims.

### [Advantageous Effects]

According to an embodiment of the present invention, services may be effectively provided.

### [Description of Drawings]

The above and other aspects, features, and advantages of certain embodiments of the disclosure will be more apparent from the following description taken in conjunction with the accompanying drawings, in which:
FIG. 1A is a diagram showing a structure of a long term evolution (LTE) system to which an embodiment of the disclosure is applied;
FIG. 1B is a diagram illustrating a radio protocol architecture in an LTE system to which an embodiment of the disclosure is applied;
FIG. 1C is a diagram illustrating a structure of a next-generation mobile communication system, to which an embodiment of the disclosure is applied;
FIG. 1D is a diagram illustrating a radio protocol architecture of a next-generation mobile communication system to which an embodiment of the disclosure is applied;
FIG. 1E is a diagram illustrating a network structure of a next-generation mobile communication system to which an embodiment of the disclosure is applied;
FIG. 1F is a diagram illustrating a method, performed by a user terminal (UE), of performing radio resource control (RRC) connection establishment in a wireless backhaul network (integrated access backhaul (IAB)) network of a next-generation mobile connection system, according to an embodiment of the disclosure;
FIG. 1G is a diagram illustrating a protocol layer that each of wireless nodes (IAB nodes, IAB donors, or UEs) may include in a next-generation mobile communication system to which an embodiment of the disclosure is applied;
FIG. 1H is a diagram illustrating a bearer managing and processing method of wireless nodes in a next-generation mobile communication system, according to an embodiment of the disclosure;
FIG. 1I is a diagram showing a method of transmitting data without data loss in a wireless link of a next-generation mobile communication system to which an embodiment of the disclosure is applied, in a data level among radio link control (RLC) layers;
FIG. 1J is a diagram illustrating data loss that may occur in a wireless node of a next-generation mobile communication system to which an embodiment of the disclosure is applied;
FIG. 1K is a diagram illustrating a method of recovering data loss, according to an embodiment of the disclosure;
FIG. 1L is a diagram illustrating a method of recovering data loss, according to another embodiment of the disclosure;
FIG. 1M is a diagram illustrating operations of a wireless mode performing retransmission based on a packet data convergence protocol (PDCP) status report, according to an embodiment of the disclosure;
FIG. 1N is a diagram illustrating operations of a wireless node performing retransmission based on a PDCP status report, according to another embodiment of the disclosure;
FIG. 1O is a diagram illustrating a structure of a UE or a wireless node, according to an embodiment of the disclosure;
FIG. 1P is a block diagram illustrating a transmission/reception point (TRP) or a wireless node in a wireless communication system to which an embodiment of the disclosure is applied;
FIG. 2A is a diagram showing a structure of an LTE system to which an embodiment of the disclosure is applied;
FIG. 2B is a diagram illustrating a radio protocol architecture in an LTE system to which an embodiment of the disclosure is applied;
FIG. 2C is a diagram illustrating a structure of a next-generation mobile communication system, to which an embodiment of the disclosure is applied;
FIG. 2D is a diagram illustrating a radio protocol architecture of a next-generation mobile communication system to which an embodiment of the disclosure is applied;
FIG. 2E is a diagram illustrating a network structure of a next-generation mobile communication system to which an embodiment of the disclosure is applied;
FIG. 2F is a diagram illustrating a method, performed by a UE, of performing RRC connection establishment in a wireless backhaul network (IAB network) of a next-generation communication system, according to an embodiment of the disclosure;
FIG. 2G is a diagram illustrating a protocol layer that each of wireless nodes may include in a next-generation mobile communication system to which an embodiment of the disclosure is applied;
FIG. 2H is a diagram illustrating a bearer managing and processing method of wireless nodes in a next-generation mobile communication system, according to an embodiment of the disclosure;
FIG. 2I is a diagram illustrating a method, performed by a next-generation mobile communication system supporting wireless backhaul, of calculating a hop count between end wireless nodes, according to an embodiment of the disclosure;
FIG. 2J is a diagram illustrating operations of a wireless node, wherein a next-generation mobile communication system supporting wireless backhaul calculates a hop count and reflects the hop count, according to an embodiment of the disclosure;
FIG. 2K is a diagram illustrating a structure of a UE or a wireless node, according to an embodiment of the disclosure; and
FIG. 2L is a block diagram illustrating a TRP or a wireless node in a wireless communication system, according to an embodiment of the disclosure.

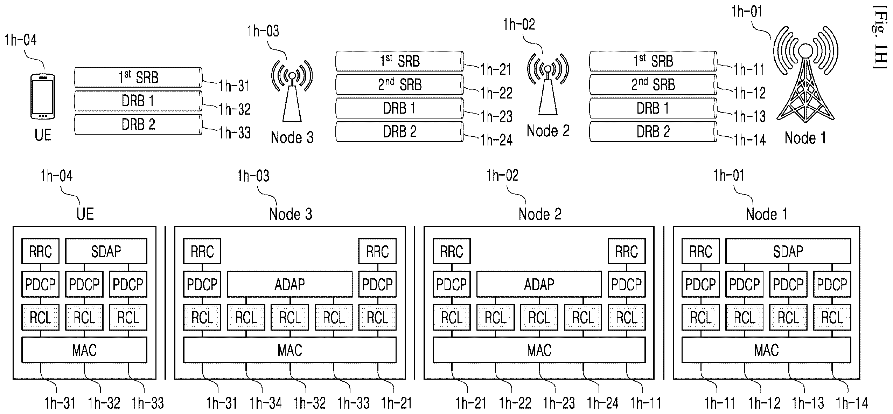

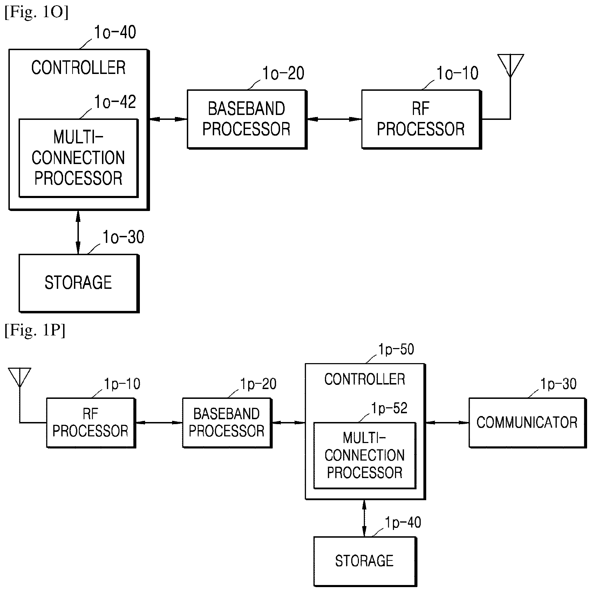

Among the above listed figures, the embodiments of Figs. 1H and 1P pertain to the claimed solution.

### [Best Mode]

Embodiments of the disclosure provide an apparatus and method for effectively providing a service in a wireless communication system.

Additional aspects will be set forth in part in the description which follows and, in part, will be apparent from the description, or may be learned by practice of the presented embodiments of the disclosure.

According to an embodiment of the disclosure, a wireless node includes a transceiver; and at least one controller coupled with the transceiver and configured to: provide, to a adaptation (ADAP) layer, data via at least one first radio link control (RLC) layer; map, the data provided via at least one first radio link control layer to at least one new RLC channel, in the ADAP layer; and transfer, from the ADAP layer, to the at least one second RLC layer corresponding to the at least one new RLC channel, the data mapped to the at least one new RLC channel.

The at least one controller may configured to identify, at least one data radio bearer (DRB) corresponding to the data provided via at least one first radio link control layer; group, the at least one identified data radio bearer based on a predetermined configuration; and map, the grouped data radio bearers to the at least one new RLC channel.

The at least one controller may configured to: group, the at least one data radio bearer based on at least one of UE identification, quality of service(QoS) or mapping information received from an upper node.

The first RLC layer may include a RLC layer processing the data received via at least one DRB, and the second RLC layer may include a RLC layer processing the data mapped to the at least one new RLC channel.

The first RLC layer and the second RLC layer may be an identical RLC layer.

The at least one controller may further configured to: configure, a signal radio bearer (SRB) connecting to packet data convergence protocol (PDCP) layer via third RLC layer bypassing the ADAP layer; and process, a radio resource control (RRC) message via the SRB.

The at least one controller may further configured to perform at least one of encoding, decoding, integrity protection, or integrity verification procedure using a security key in the PDCP layer, and the security key may be determined by an upper node.

The at least one controller may further configured to: configure, a SRB for transmitting and receiving a control message between an upper node and a lower node; and process, the control message via the SRB.

According to an embodiment of the disclosure, a communication method of a wireless node, the communication method includes providing, to a adaptation (ADAP) layer, data via at least one first radio link control (RLC) layer; mapping, the data provided via at least one first radio link control layer to at least one new RLC channel, in the ADAP layer; and transferring, from the ADAP layer, to the at least one second RLC layer corresponding to the at least one new RLC channel, the data mapped to the at least one new RLC channel.

The mapping the data provided via at least one first radio link control layer to at least one new RLC channel may include: identifying, at least one data radio bearer (DRB) corresponding to the data provided via at least one first radio link control layer; grouping, the at least one identified data radio bearer based on a predetermined configuration; and mapping, the grouped data radio bearers to the at least one new RLC channel.

The grouping, the at least one identified data radio bearer based on a predetermined configuration may include grouping the at least one data radio bearer based on at least one of UE identification, quality of service(QoS) or mapping information received from an upper node.

The first RLC layer may include a RLC layer processing the data received via at least one DRB, and the second RLC layer may include a RLC layer processing the data mapped to the at least one new RLC channel.

The first RLC layer and the second RLC layer may be an identical RLC layer.

The method may further include: configuring, a signal radio bearer (SRB) connecting to packet data convergence protocol (PDCP) layer via third RLC layer bypassing the ADAP layer; and processing, a radio resource control (RRC) message via the SRB.

The method may further include: performing at least one of encoding, decoding, integrity protection, or integrity verification procedure using a security key in the PDCP layer, and the security key may be determined by an upper node.

The method may further include configuring, a SRB for transmitting and receiving a control message between an upper node and a lower node; and processing, the control message via the SRB.

Before undertaking the DETAILED DESCRIPTION below, it may be advantageous to set forth definitions of certain words and phrases used throughout this patent document: the terms "include" and "comprise," as well as derivatives thereof, mean inclusion without limitation; the term "or," is inclusive, meaning and/or; the phrases "associated with" and "associated therewith," as well as derivatives thereof, may mean to include, be included within, interconnect with, contain, be contained within, connect to or with, couple to or with, be communicable with, cooperate with, interleave, juxtapose, be proximate to, be bound to or with, have, have a property of, or the like; and the term "controller" means any device, system or part thereof that controls at least one operation, such a device may be implemented in hardware, firmware or software, or some combination of at least two of the same. It should be noted that the functionality associated with any particular controller may be centralized or distributed, whether locally or remotely.

Moreover, various functions described below can be implemented or supported by one or more computer programs, each of which is formed from computer readable program code and embodied in a computer readable medium. The terms "application" and "program" refer to one or more computer programs, software components, sets of instructions, procedures, functions, objects, classes, instances, related data, or a portion thereof adapted for implementation in a suitable computer readable program code. The phrase "computer readable program code" includes any type of computer code, including source code, object code, and executable code. The phrase "computer readable medium" includes any type of medium capable of being accessed by a computer, such as read only memory (ROM), random access memory (RAM), a hard disk drive, a compact disc (CD), a digital video disc (DVD), or any other type of memory. A "non-transitory" computer readable medium excludes wired, wireless, optical, or other communication links that transport transitory electrical or other signals. A non-transitory computer readable medium includes media where data can be permanently stored and media where data can be stored and later overwritten, such as a rewritable optical disc or an erasable memory device.

Definitions for certain words and phrases are provided throughout this patent document. Those of ordinary skill in the art should understand that in many, if not most instances, such definitions apply to prior, as well as future uses of such defined words and phrases.

### [Mode for Invention]

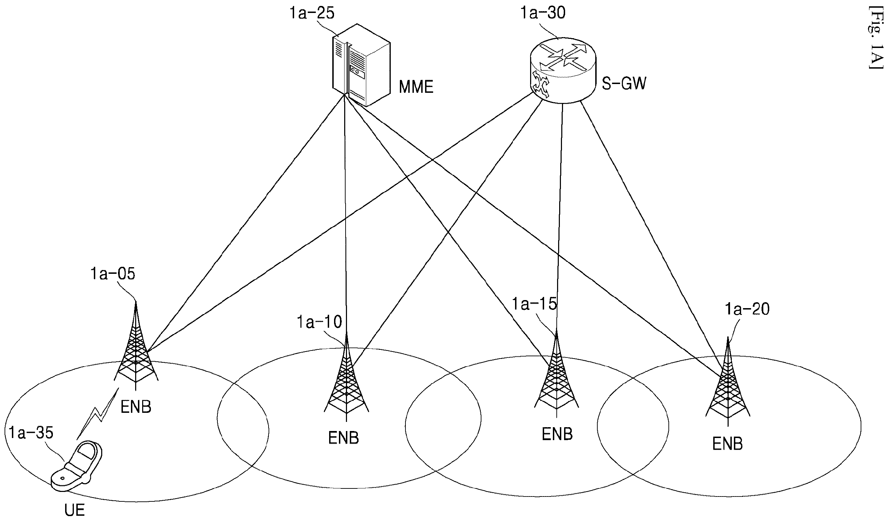

FIGS. 1A through 2L, discussed below, and the various embodiments used to describe the principles of the present disclosure in this patent document are by way of illustration only and should not be construed in any way to limit the scope of the disclosure. Those skilled in the art will understand that the principles of the present disclosure may be implemented in any suitably arranged system or device.

Hereinafter, embodiments of the disclosure will be described in detail with reference to the accompanying drawings. While describing the embodiments of the disclosure, descriptions of techniques which are well known in the technical fields to which this disclosure belongs and which are not directly related to the disclosure are omitted. By omitting the unnecessary description, the disclosure may be more clearly conveyed without blurring the gist of the disclosure.

For the same reasons, components may be exaggerated, omitted, or schematically illustrated in drawings for clarity. Also, the size of each component does not completely reflect the actual size. In the drawings, like reference numerals denote like elements.

Advantages and features of one or more embodiments of the disclosure and methods of accomplishing the same may be understood more readily by reference to the following detailed description of the embodiments of the disclosure and the accompanying drawings. In this regard, the embodiments of the disclosure may have different forms and should not be construed as being limited to the descriptions set forth herein. Rather, these embodiments of the disclosure are provided so that this disclosure will be thorough and complete and will fully convey the concept of the present embodiments of the disclosure to one of ordinary skill in the art, and the disclosure will only be defined by the appended claims. Throughout the specification, like reference numerals denote like elements.

Here, it will be understood that combinations of blocks in flowcharts or process flow diagrams may be performed by computer program instructions. Because these computer program instructions may be loaded into a processor of a general purpose computer, a special purpose computer, or another programmable data processing apparatus, the instructions, which are performed by a processor of a computer or another programmable data processing apparatus, create units for performing functions described in the flowchart block(s). The computer program instructions may be stored in a computer-usable or computer-readable memory capable of directing a computer or another programmable data processing apparatus to implement a function in a particular manner, and thus the instructions stored in the computer-usable or computer-readable memory may also be capable of producing manufacturing items containing instruction units for performing the functions described in the flowchart block(s). The computer program instructions may also be loaded into a computer or another programmable data processing apparatus, and thus, instructions for operating the computer or the other programmable data processing apparatus by generating a computer-executed process when a series of operations are performed in the computer or the other programmable data processing apparatus may provide operations for performing the functions described in the flowchart block(s).

In addition, each block may represent a portion of a module, segment, or code that includes one or more executable instructions for executing specified logical function(s). It should also be noted that in some alternative implementations, functions mentioned in blocks may occur out of order. For example, two blocks illustrated successively may actually be executed substantially concurrently, or the blocks may sometimes be performed in a reverse order according to the corresponding function.

Here, the term "unit" in the embodiments of the disclosure means a software component or hardware component such as a Field-Programmable Gate Array (FPGA) or an Application-Specific Integrated Circuit (ASIC), and performs a specific function. However, the term "unit" is not limited to software or hardware. The "unit" may be formed so as to be in an addressable storage medium, or may be formed so as to operate one or more processors. Thus, for example, the term "unit" may refer to components such as software components, object-oriented software components, class components, and task components, and may include processes, functions, attributes, procedures, subroutines, segments of program code, drivers, firmware, micro codes, circuits, data, a database, data structures, tables, arrays, or variables. A function provided by the components and "units" may be associated with the smaller number of components and "units", or may be divided into additional components and "units". Furthermore, the components and "units" may be embodied to reproduce one or more central processing units (CPUs) in a device or security multimedia card. Also, in the embodiments of the disclosure, the "unit" may include at least one processor.

Throughout the disclosure, the expression "at least one of a, b or c" indicates only a, only b, only c, both a and b, both a and c, both b and c, all of a, b, and c, or variations thereof.

Also, terms for identifying access nodes, terms denoting network entities, terms denoting messages, terms denoting interfaces between network entities, terms denoting various types of identification information, etc. used herein are exemplified for convenience of description. Thus, the terms used in the disclosure are not limited and other terms denoting targets having the same technical meanings may be used.

Hereinafter, for convenience of description, the disclosure uses terms and names defined by the 3rd Generation Partnership Project Long Term Evolution (3GPP LTE) standard, or terms and names modified based thereon. However, the disclosure is not limited by such terms and names, and may be equally applied to systems conforming to other standards. In the disclosure, an evolved node B (eNB) will be used interchangeably with a next generationnode B (gNB) for convenience of description. In other words, a base station described as an eNB may also indicate a gNB. Also, the term "UE" may indicate not only mobile phones, narrow band-Internet of Things (NB-IoT) devices, and sensors, but also various wireless communication devices.

In a next-generation mobile communication system, a base station having various structures may be realized and various wireless connection technologies may be present. In this case, in a network structure supporting wireless backhaul (integrated access backhaul (IAB)), a method, performed by each wireless node (IAB node, IAB donor, or UE), of recovering data lost due to disconnection or congestion of a wireless link.

According to an embodiment of the disclosure, a method regarding bearer management and data process of wireless nodes in a mobile communication system supporting wireless backhaul will be described. Also, a method, performed by wireless nodes, of recovering data loss that may occur due to disconnection or congestion of a wireless link will be described. In particular, a method and procedure of retransmitting lost data based on a packet data convergence protocol (PDCP) status report in a PDCP layer of two end wireless nodes of a wireless backhaul network will be described.

According to an embodiment of the disclosure, data loss may be prevented because a network structure supporting wireless backhaul is able to recover data lost due to disconnection or congestion of a wireless link in each wireless node.

FIG. 1A is a diagram showing a structure of a LTE system to which an embodiment of the disclosure is applied.

Referring to FIG. 1A, a radio access network (RAN) of the LTE system includes evolved base stations (e.g., eNBs or NBs) 1a-05, 1a-10, 1a-15, and 1a-20, a mobility management entity (MME) 1a-25, and a serving-gateway (S-GW) 1a-30. A user equipment (UE) or terminal 1a-35 may access an external network via the eNB 1a-05, 1a-10, 1a-15, or 1a-20 and the S-GW 1a-30.

In FIG. 1A, the eNB 1a-05, 1a-10, 1a-15, or 1a-20 may correspond to a Node B of a universal mobile telecommunication system (UMTS). Each eNB 1a-05, 1a-10, 1a-15, or 1a-20 may be connected to the UE 1a-35 through radio channels and may perform complex functions compared to the existing Node B. Because all user traffic including real-time services such as voice over Internet protocol (VoIP) is serviced through shared channels in the LTE system, an entity for collating buffer status information of UEs, available transmission power status information, channel state information, etc. and performing scheduling is used and each of the eNBs 1a-05, 1a-10, 1a-15, and 1a-20 serves as such an entity. A single eNB generally controls multiple cells. For example, the LTE system may use radio access technology such as OFDM at a bandwidth of 20 MHz to achieve a data rate of 100 Mbps. The LTE system may also use adaptive modulation and coding (AMC) to determine a modulation scheme and a channel coding rate in accordance with a channel state of the UE 1a-35. The S-GW 1a-30 is an entity for providing data bearers and may configure or release the data bearers under the control of the MME 1a-25. The MME 1a-25 is an entity for performing a mobility management function and various control functions for the UE 1a-35 and may be connected to the eNBs 1a-05, 1a-10, 1a-15, and 1a-20.

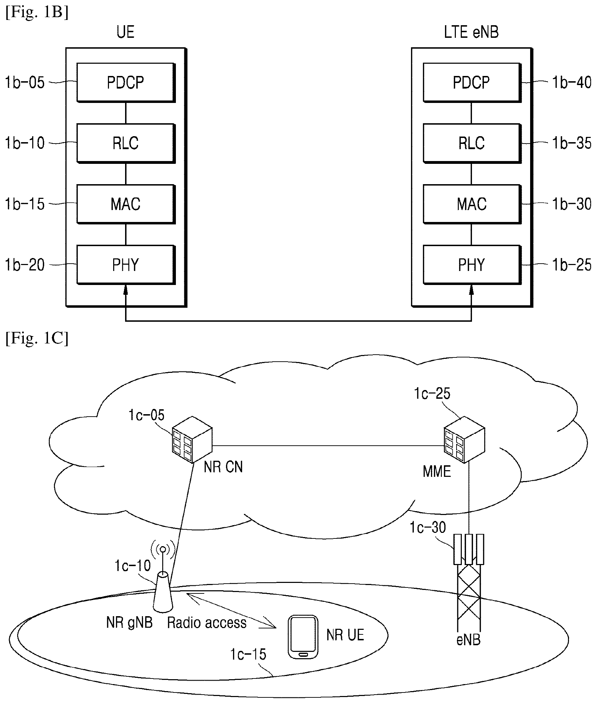

FIG. 1B is a diagram of a radio protocol architecture in an LTE system to which an embodiment of the disclosure is applied.

Referring to FIG. 1B, the radio protocol architecture of the LTE system may include packet data convergence protocol (PDCP) layers 1b-05 and 1b-40, radio link control (RLC) layers 1b-10 and 1b-35, and media access control (MAC) layers 1b-15 and 1b-30 respectively for a UE and an eNB. Hereinafter, a layer may also referred to as an entity. The PDCP layer 1b-05 or 1b-40 is in charge of IP header compression/decompression, etc. Main functions of the PDCP layer 1b-05 or 1b-40 are summarized below.
- Header compression and decompression: robust header compression (ROHC) only
- Transfer of user data
- In-sequence delivery of upper layer PDUs at PDCP re-establishment procedure for RLC acknowledgement mode (AM)
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The RLC layer 1b-10 or 1b-35 may perform, for example, an automatic repeat request (ARQ) operation by reconfiguring PDCP PDUs to appropriate sizes. Main functions of the RLC layer 1b-10 or 1b-35 are summarized below.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC layer 1b-15 or 1b-30 is connected to multiple RLC layers configured for a single UE and may multiplex RLC PDUs into a MAC PDU and demultiplex the RLC PDUs from the MAC PDU. Main functions of the MAC layer 1b-15 or 1b-30 are summarized below.
- Mapping between logical channels and transport channels
- Multiplexing/demultiplexing of MAC SDUs belonging to one or different logical channels into/from TB delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A physical (PHY) layer 1b-20 or 1b-25 may channel-code and modulate upper layer data into OFDM symbols and transmit the OFDM symbols through a radio channel, or demodulate OFDM symbols received through a radio channel and channel-decode and deliver the OFDM symbols to an upper layer.

FIG. 1C is a diagram of a structure of a next-generation mobile communication system, to which an embodiment of the disclosure is applied.

Referring to FIG. 1C, a RAN of the next-generation mobile communication system (e.g., a new radio (NR) or 5G system) may include a new radio node B (NR NB) or new radio next generation node B (NR gNB) 1c-10 and a new radio core network (NR CN) or next generation core network (NG CN) 1c-05. A new radio user equipment (NR UE) or UE 1c-15 may access an external network via the NR gNB 1c-10 and the NR CN 1c-05.

In FIG. 1C, the NR gNB 1c-10 may correspond to an eNB of an existing LTE system. The NR gNB 1c-10 is connected to the NR UE 1c-15 through radio channels and may provide superior services compared to an existing NB. Because all user traffic is serviced through shared channels in the next-generation mobile communication system, an entity for collating buffer status information of UEs, available transmission power status information, channel state information, etc. and performing scheduling is used and such operations may be performed by the NR gNB 1c-10. A single NR gNB 1c-10 may control multiple cells. In the next-generation mobile communication system, a bandwidth greater than the maximum bandwidth of LTE may be given to achieve an ultrahigh data rate, and beamforming technology may be added to radio access technology such as OFDM. The LTE system may also use AMC to determine a modulation scheme and a channel coding rate in accordance with a channel state of the NR UE 1c-15. The NR CN 1c-05 may perform functions such as mobility support, bearer configuration, quality of service (QoS) configuration, and the like. The NR CN 1c-05 is an entity for performing a mobility management function and various control functions for the NR UE 1c-15 and may be connected to multiple NR gNBs. The next generation mobile communication system may cooperate with the existing LTE system, and the NR CN 1c-05 may be connected to an MME 1c-25 through a network interface. The MME 1c-25 may be connected to an existing eNB 1c-30.

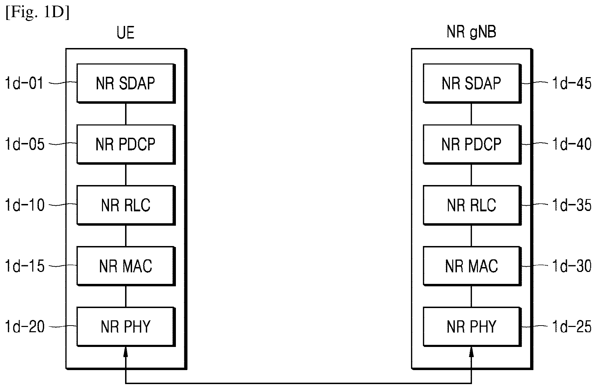

FIG. 1D is a diagram of a radio protocol architecture of a next-generation mobile communication system to which an embodiment of the disclosure is applied.

Referring to FIG. 1D, the radio protocol architecture of the next-generation mobile communication system may include NR service data adaptation protocol (SDAP) layers 1d-01 and 1d-45, NR PDCP layers 1d-05 and 1d-40, NR RLC layers 1d-10 and 1d-35, NR MAC layers 1d-15 and 1d-30, and NR PHY layers 1d-20 and 1d-25 respectively for a UE and a NR gNB. Main functions of the NR SDAP layers 1d-01 and 1d-45 may include some of the following functions.
- Transfer of user plane data
- Mapping between a QoS flow and a data radio bearer (DRB) for both DL and UL
- Marking QoS flow ID in both DL and UL packets
- Reflective QoS flow to DRB mapping for the UL SDAP PDUs

With respect to the NR SDAP layer 1d-01, the UE may receive, via an RRC message, setting on whether to use a header of the NR SDAP layer 1d-01 or whether to use a function of the NR SDAP layer 1d-01 for each NR PDCP layer 1d-05, for each bearer, or for each logical channel, and when an SDAP header is set, the UE may instruct a non-access stratum (NAS) reflective QoS 1-bit indicator and an access stratum (AS) reflective QoS 1-bit indicator of the SDAP header to update or reset mapping information regarding the data bearer and the QoS flow of uplink (UL) and downlink (DL). The SDAP header may include QoS flow ID indicating QoS. The QoS information may be used as data processing priority information, scheduling information, etc. for supporting a smooth service.

Meanwhile, main functions of the NR PDCP layer 1d-05 or 1d-40 may include some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Here, the reordering of the NR PDCP layer 1d-05 or 1d-40 may include at least one of a function of reordering PDCP PDUs received from a lower layer, based on a PDCP sequence number (SN) or a function of delivering data to an upper layer in an order. Alternatively, the reordering of the NR PDCP layer 1d-05 or 1d-40 may include at least one of a function of immediately delivering the reordered data without considering an order, a function of recording missing PDCP PDUs by reordering the PDCP PDUs, a function of reporting status information of the missing PDCP PDUs to a transmitter, or a function of requesting to retransmit the missing PDCP PDUs.

Main functions of the NR RLC layer 1d-10 or 1d-35 may include at least some of the following functions.
- Transfer of upper layer PDUs
- In-sequence delivery of upper layer PDUs
- Out-of-sequence delivery of upper layer PDUs
- Error correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

Here, the in-sequence delivery function of the NR RLC layer 1d-10 or 1d-35 may include a function of delivering RLC SDUs received from a lower layer to an upper layer in an order. The in-sequence delivery function of the NR RLC layer 1d-10 or 1d-35 may include at least one of a function of reassembling multiple RLC SDUs segmented from a RLC SDU and delivering the RLC SDU when the segmented RLC SDUs are received, a function of reordering received RLC PDUs, based ona RLC SN or PDCP SN, a function of recording missing RLC PDUs by reordering the RLC PDUs, a function of reporting status information of the missing RLC PDUs to a transmitter, a function of requesting to retransmit the missing RLC PDUs, a function of delivering only RLC SDUs previous to a missing RLC SDU, to the upper entity in order, when the missing RLC SDU exists, a function of delivering all RLC SDUs received before a timer is started, to the upper layer in order, although a missing RLC SDU exists, when a certain timer is expired, or a function of delivering all RLC SDUs received up to a current time, to the upper layer in order, although a missing RLC SDU exists, when a certain timer is expired.

Also, the out-of-sequence delivery function of the NR RLC layer 1d-10 or 1d-35 may process the RLC PDUs in order of reception (in order of arrival regardless of sequence numbers) and deliver the RLC PDUs to a PDCP layer out of order (out-of sequence delivery), and reassemble segments received or stored in a buffer, into a whole RLC PDU and process and deliver the RLC PDU to the PDCP layer. The NR RLC layer 1d-10 or 1d-35 may not have a concatenation function, and the concatenation function may be performed by the NR MAC layer 1d-15 or 1d-30 or be replaced with a multiplexing function of the NR MAC layer 1d-15 or 1d-30.

The out-of-sequence delivery function of the NR RLC layer 1d-10 or 1d-35 may include a function of delivering RLC SDUs received from a lower layer to an upper layer out of order. The out-of-sequence delivery function of the NR RLC layer 1d-10 or 1d-35 may include at least one of a function of reassembling multiple RLC SDUs segmented from a RLC SDU and delivering the RLC SDU when the segmented RLC SDUs are received or a function of storing RLC SNs or PDCP SNs of received RLC PDUs and recording missing RLC PDUs by ordering the RLC PDUs.

The NR MAC layer 1d-15 or 1d-30 may be connected to multiple NR RLC layers configured for a single UE, and main functions of the NR MAC layer 1d-15 or 1d-30 may include at least some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 1d-20 or 1d-25 may channel-code and modulate upper layer data into OFDM symbols and transmit the OFDM symbols through a radio channel or may demodulate OFDM symbols received through a radio channel and channel-decode and deliver the OFDM symbols to an upper layer.

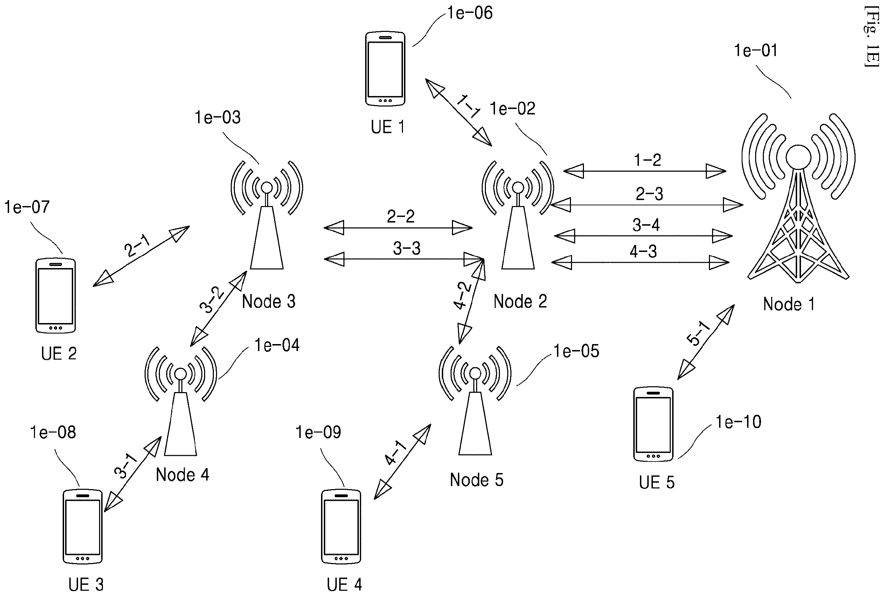

FIG. 1E is a diagram of a network structure of a next-generation mobile communication system to which an embodiment of the disclosure is applied. In particular, FIG. 1E is a diagram showing a network structure supporting wireless backhaul in the next-generation mobile communication system to which an embodiment of the disclosure is applied.

Referring to FIG. 1E, a wireless backhaul network (integrated access backhaul (IAB) network) may include a plurality of wireless nodes (for example, IAB nodes or IAB donors). In the wireless backhaul network, a UE may establish RRC connection by accessing any wireless node, and transmit or receive data. Also, each wireless node may be a child IAB node and have another wireless node as a parent IAB node, and establish RRC connection with a parent IAB node to transmit or receive data.

According to an embodiment of the disclosure, a child IAB node may denote a UE or an IAB node, and may denote a wireless node that receives, from a parent IAB node (or an IAB donor), and applies wireless connection establishment configuration, RRC configuration information, bearer configuration information, and configuration information of each PDCP, RLC, MAC, or PHY layer.

According to an embodiment of the disclosure, a parent IAB node may denote an IAB node or an IAB donor. The parent IAB node may denote a wireless node that configures, to the child IAB node, the wireless connection establishment configuration, the RRC configuration information, the bearer configuration information, and the configuration information of each PDCP, RLC, MAC, or PHY layer.

Referring to FIG. 1E, the IAB donor may denote a wireless node that is connected to a core network and transmits data to an upper layer, such as a node 1 1e-01. Also, the IAB node may denote any one of nodes 2 through 5 1e-02 through 1e-05 that assists delivery of data between a UE and an IAB donor end.

UEs 1 through 5 1e-06 through 1e-10 may establish RRC connection by accessing wireless nodes (for example, IAB nodes or IAB donors), and transmit or receive data. For example, the UE 2 1e-07 may establish RRC connection by accessing the node 3 1e-03 and transmit or receive data. The node 3 1e-03 may receive or transmit data received from the UE 2 1e-07 or data to be transmitted to the UE 2 1e-07 from or to the node 2 1e-02 that is a parent IAB node. Also, the node 2 1e-02 may receive or transmit data received from the node 3 1e-03 or data to be transmitted to the node 3 1e-03 from or to the node 1 1e-01 that is a parent IAB node.

The UE 1 1e-06 may establish RRC connection by accessing the node 2 1e-02 and transmit or receive data. The node 2 1e-02 may receive or transmit data received from the UE 1 1e-06 or data to be transmitted to the UE 1 1e-06 from or to the node 1 1e-01 that is a parent IAB node. UE 5 1e-10 may directly establish RRC connection by accessing the node 1 1e-01 that is a parent IAB node and transmit or receive data.

As described above with reference to FIG. 1E, according to an embodiment of the disclosure, a UE establishes RRC connection by accessing a wireless node having best signal strength, and transmit or receive data. Also, according to an embodiment of the disclosure, an IAB network may support delivery of multi-hop data through intermediate wireless nodes such that a UE delivers data to a wireless node connected to a core network and receives data from the wireless network connected to the core network.

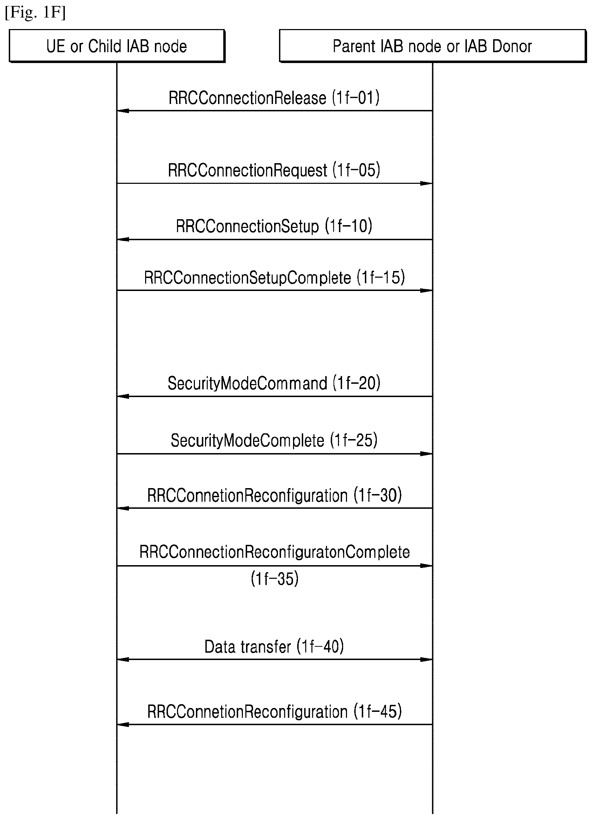

FIG. 1F is a diagram for describing a method, performed by a UE, of performing RRC connection establishment in an IAB network of a next-generation mobile communication system, according to an embodiment of the disclosure. In particular, FIG. 1F is a diagram for describing a method of performing RRC connection establishment when a UE establishes connection with a wireless node (IAB node or IAB donor) or when a child IAB node establishes connection with a parent IAB node (IAB node or IAB donor), in the IAB network of a next-generation mobile communication system according to an embodiment of the disclosure.

Referring to FIG. 1F, in operation 1f-01, when a UE or a child IAB node does not transmit or receive data due to a particular reason or for a certain period of time in an RRC connection mode, a parent IAB node may transmit an RRCConnectionRelease message to the UE or the child IAB node such that the UE or the child IAB node switch to an RRC idle mode or an RRC inactive mode. According to an embodiment of the disclosure, when data to be transmitted is generated, the UE or the child IAB node in which current connection is not established (hereinafter, referred to as an idle mode UE) may perform an RRC connection establishment process with the parent IAB node when in the RRC idle mode and perform an RRC connection resume process with the parent IAB node when in the RRC inactive mode.

In operation 1f-05, the UE or the child IAB node may establish reverse transmission synchronization with the parent IAB node through a random access process, and transmit an RRCConnectionRequest message (or an RRCResumeRequest message) to the parent IAB node. The RRCConnectionRequest message (or the RRCResumeRequest message) may include an identifier of the UE or the child IAB node, establishmentCause, and the like.

In operation 1f-10, the parent IAB node may transmit an RRCConnectionSetup message (or an RRCResume message) such that the UE or the child IAB node establishes RRC connection The RRCConnectionSetup message may include at least one of configuration information for each logical channel, configuration information for each bearer, configuration information of a PDCP layer, configuration information of an RLC layer, or configuration information of an MAC layer.

The RRCConnectionSetup message (or the RRCResume message) may include an indicator indicating, when the child IAB node performs handover, whether to retransmit pre-configured RRC messages to a target parent IAB node or cell. When the UE or the child IAB node performs handover, the parent IAB node may use such an indicator to configure whether the pre-configured RRC messages are to be retransmitted to the target parent IAB node or cell. For example, the parent IAB node may instruct the RRC messages that were transmitted within a few seconds before a handover indication message is received, before handover is performed, or before the RRC message is received, to be retransmitted. Also, the parent IAB node may instruct an indicator for each pre-configured RRC message. In other words, multiple indicators may indicate retransmission of each RRC message. Alternatively, the parent IAB node may instruct the retransmission in a form of a bitmap instructing each RRC message.

The RRCConnectionSetup message (or the RRCResume message) may add an indicator indicating a PDCP data recovery procedure to the PDCP configuration information. Also, the RRCConnectionSetup message may add an indicator indicating whether to perform a PDCP data recovery procedure with respect to a signaling radio bearer (SRB) or a data radio bearer (DRB) to the bearer configuration information. Also, the RRCConnectionSetup message may add an indicator indicating whether to discard data remaining in a PDCP layer with respect to the SRB or the DRB to the bearer configuration information.

The RRCConnectionSetup message (or the RRCResume message) may add an indicator indicating whether to perform accumulative retransmission or selective retransmission with respect to AM DRB while PDCP reestablishment procedure is performed, to the bearer configuration information.

The RRCConnectionSetup message (or the RRCResume message) may include an indicator indicating which ARQ function is to be used by the child IAB node. The parent IAB node may instruct whether to use a hop-by-hop ARQ function or an end-to-end ARQ function by using the indicator of the RRCConnectionSetup message. When the end-to-end ARQ function is set, the parent IAB node may instruct whether to perform a function of transmitting received RLC layer data intact or after split, or an ARQ function as an end of a child node. Also, the parent IAB node may instruct which ARQ function is to be used as a default function, and when an ARQ function is not configured in the above message, the parent IAB node may pre-configure to use one of the hop-by-hop ARQ function and the end-to-end ARQ function as the default function. The parent IAB node may also instruct the child IAB node whether to use a data split function, by using the RRCConnectionSetup message, and may instruct activation (or availability) of each function of an RLC layer described with reference to FIG. 1B or 1D.

The RRCConnectionSetup message (or the RRCResume message) may include an indicator indicating whether to use a data concatenation function in an adaptation layer. Also, the RRCConnectionSetup message may include an indicator indicating whether to configure a header of the adaptation layer, and may assign a type of the header. For example, the parent IAB node may use the RRCConnectionSetup message to configure which information with respect to a UE identifier, a UE bearer identifier, a QoS identifier, a wireless node identifier, a wireless node address, or QoS information is to be included in the header. According to an embodiment of the disclosure, the parent IAB node may configure to omit the header to reduce overhead.

The parent IAB node may configure an RLC channel to be used between a transmission adaptation layer and a reception adaptation layer, between a child IAB node and a parent IAB node, or between a UE and a wireless node, by using the RRCConnectionSetup message (or the RRCResume message). In particular, the RRCConnectionSetup message may include the number of usable RLC channels, a usable RLC channel identifier, or mapping information of data mapped to an RLC channel (for example, a UE identifier, a UE bearer identifier, QoS information, or QoS identifier mapping information). The RLC channel may be defined as a channel that transmits data according to QoS by grouping data of multiple UEs, based on the QoS information, and may be defined as a channel that transmits data by grouping data for each UE.

The RRCConnectionSetup message (or the RRCResume message) may include an indicator indicating whether to perform retransmission based on a PDCP status report in configuration information (pdcp-config) of the PDPC layer. The parent IAB node may instruct the retransmission based on a PDCP status report to be performed by using the indicator of the RRCConnectionSetup message. For example, when a value of the indicator is set to 0, data corresponding to NACK information of the PDCP status report may be checked and data corresponding to ACK information may be discarded even when the PDCP status report is received. On the other hand, when the value of the indicator is set to 1, the data corresponding to the ACK information of the PDCP status report may be discarded and the data corresponding to NACK information may be retransmitted when the PDCP status report is received.

In order for the RRCConnectionSetup message (or the RRCResume message) to indicate retransmission based on the PDCP status report to be performed, the configuration information (pdcp-config) of the PDCP layer may include a PDCP data recovery indicator (recoverPDCP). The parent IAB node may configure the UE or the child IAB node to trigger a PDCP data recovery procedure and transmit the PDCP status report, by using the indicator. Also, while the retransmission is performed during the PDCP data recovery procedure, the parent IAB node may perform selective retransmission based on the PDCP status report instead of successful transmission of a lower layer (for example, the RLC layer). In other words, retransmission may be performed only with respect to data indicated as NACK data in which successful transmission is not confirmed in the PDCP status report.

The RRCConnectionSetup message (or the RRCResume message) may include an indicator indicating to periodically transmit the PDCP status report such that the PDCP status report is periodically transmitted in the configuration information (pdcp-config) of the PDCP layer. Also, a period or a timer value may be set by using the RRCConnectionSetup message. When the indicator and the configuration are received, the UE or the child IAB node may triger and transmit the PDCP status report according to the period or whenever the timer value expires.

The RRCConnectionSetup message (or the RRCResume message) may include an indicator indicating to transmit the PDCP status report such that the PDCP status report is triggered and transmitted in the configuration information (pdcp-config) of the PDCP layer. Also, a timer value may be set by using the RRCConnectionSetup message. When the indicator and the configuration are received, the PDCP layer of the UE or the child IAB node may trigger a timer having the timer value whenever a gap is generated in a PDCP sequence number, and when the gap of the PDCP sequence number is not filled or data corresponding to the PDCP sequence number assumed to be missing is not received until the timer expires, the PDCP layer may trigger the PDCP status report when the timer expires, and configure and transmit the PDCP status report. When the gap of the PDCP sequence number is filled or the data corresponding to the PDCP sequence number assumed to be missing is received before the timer expires, the timer may be stopped and initialized. Here, the timer may be a PDCP reordering timer or a new timer having a value smaller or greater than that of the PDCP reordering timer may be defined.

A PDCP status report prohibit timer may be configured to prevent frequent trigerring of the PDCP status report in the configuration information (pdcp-config) of the PDCP layer, by using the RRCConnectionSetup message (or the RRCResume message). When the PDCP status report prohibit timer is configured, the UE or the child IAB node may trigger the PDCP status report, configure and transmit the PDCP status report, and trigger the PDCP status report prohibit timer. When the PDCP status report prohibit timer is being driven, the PDCP status report may not be additionally transmitted, and the PDCP status report may be transmitted after the PDCP status report prohibit timer expires.

Information about the parent IAB node or the child IAB node, such a congestion level useful to the wireless node, queuing delay, and one-hop air latency between wireless nodes, information about each hop, and the like may be transmitted by using the RRCConnectionSetup message (or a separate newly defined RRC message or the RRCResume message). Also, wireless hop count from a wireless node that received the RRCConnectionSetup message to an uppermost wireless node (IAB donor) may be indicated. A wireless node that received the wireless hop count via the RRC message may notify a following child node of the hop count after increasing the instructed hop count by 1.

In operation 1f-15, the UE or the child IAB node that established the RRC connection may transmit an RRCConnectionSetupComplete message (or an RRCResumeComplete message) to the parent IAB node.

The RRCConnectionSetupComplete message may include SERVICE REQUEST message that is a control message in which the UE or the child IAB node requests an AMF or an MME for bearer configuration for a certain service. The parent IAB node may transmit the SERVICE REQUEST message included in the RRCConnectionSetupComplete message to the AMF or the MME. The AMF or the MME may determine whether to provide a service requested by the UE or the child IAB node.

As a result of the determination, when the service requested by the UE or the child IAB node is to be provided, the AMF or MME may transmit an INITIAL CONTEXT SETUP REQUEST message to the parent IAB node. The INITIAL CONTEXT SETUP REQUEST message includes QoS information to be applied in configuring a DRB, security information (e.g., a security key, a security algorithm, or the like) to be applied to the DRB, or the like.

In operations 1f-20 through 1f-25, the parent IAB node may exchange a SecurityModeCommand message and a SecurityModeComplete message with the UE or the child IAB node to set security. In operation 1f-30, the parent IAB node may transmit an RRCConnectionReconfiguration message to the UE or the child IAB node when the security setting is completed.

The parent IAB node may set an indicator indicating, when the child IAB node performs handover, whether to retransmit pre-configured RRC messages to a target parent IAB node or cell, by using the RRCConnectionReconfiguration message. For example, the parent IAB node may instruct the RRC messages that were transmitted within a few seconds before a handover indication message is received, before handover is performed, or before the RRC message is received, to be retransmitted. Also, the indicator may be indicated for each pre-configured RRC message. In other words, multiple indicators may indicate retransmission of each RRC message. Alternatively, the indicator of the retransmission may be indicated in a form of a bitmap instructing each RRC message.

The RRCConnectionReconfiguration message may add an indicator indicating to perform the PDCP data recovery procedure to the PDCP configuration information. Also, the RRCConnectionReconfiguration message may add an indicator indicating whether to perform the PDCP data recovery procedure with respect to the SRB or the DRB to the bearer configuration information. Also, the RRCConnectionReconfiguration message may add an indicator indicating whether to discard data remaining in a PDCP layer with respect to the SRB or the DRB to the bearer configuration information.

The RRCConnectionReconfiguration message may add an indicator indicating whether to perform accumulative retransmission or selective retransmission with respect to AM DRB while PDCP reestablishment procedure is performed, to the bearer configuration information.

The RRCConnectionReconfiguration message may include an indicator indicating which ARQ function is to be used by the child IAB node, and whether to use a hop-by-hop ARQ function or an end-to-end ARQ function may be indicated by using the indicator. When the end-to-end ARQ function is set, the parent IAB node may instruct whether to perform a function of transmitting received RLC layer data intact or after split, or an ARQ function as an end of a child node. Also, the parent IAB node may indicate which ARQ function is to be used as a default function, and when an ARQ function is not configured in the RRCConnectionReconfiguration message, the parent IAB node may pre-determine to use one of the hop-by-hop ARQ function or the end-to-end ARQ function as the default function. The parent IAB node may also instruct the child IAB node whether to use a data split function, by using the RRCConnectionReconfiguration message, and may instruct activation (or availability) of each function of an RLC layer described with reference to FIG. 1B or 1D.

The RRCConnectionReconfiguration message may include an indicator indicating whether to use a data concatenation function in the adaptation layer. Also, the RRCConnectionReconfiguration message may include an indicator indicating whether to configure a header of the adaptation layer, and the parent IAB node may assign a type of the header. For example, the parent IAB node may configure which information among the UE identifier, the UE bearer identifier, the QoS identifier, the wireless node identifier, the wireless node address, and the QoS information is to be included in the header. The parent IAB node may configure to omit the header to reduce overhead.

The parent IAB node may configure the RLC channel to be used between the transmission adaptation layer and tje reception adaptation layer, between the child IAB node and the parent IAB node, or between the UE and the wireless node, by using the RRCConnectionReconfiguration message. In particular, the RRCConnectionReconfiguration message may include the number of usable RLC channels, a usable RLC channel identifier, or mapping information of data mapped to an RLC channel (for example, a UE identifier, a UE bearer identifier, QoS information, or QoS identifier mapping information). The RLC channel may be defined as a channel that transmits data according to QoS by grouping data of multiple UEs, based on the QoS information, and may be defined as a channel that transmits data by grouping data for each UE.

The RRCConnectionReconfiguration message may include an indicator indicating whether to perform retransmission based on a PDCP status report in configuration information (pdcp-config) of the PDPC layer. The parent IAB node may instruct the retransmission based on a PDCP status report to be performed by using the indicator of the RRCConnectionReconfiguration message. For example, when a value of the indicator is set to 0, data corresponding to NACK information of the PDCP status report may be checked and data corresponding to ACK information may be discarded even when the PDCP status report is received. On the other hand, when the value of the indicator is set to 1, the data corresponding to the ACK information of the PDCP status report may be discarded and the data corresponding to NACK information may be retransmitted when the PDCP status report is received.

In order for the RRCConnectionReconfiguration message to indicate retransmission based on the PDCP status report to be performed, the configuration information (pdcp-config) of the PDCP layer may include a PDCP data recovery indicator (recoverPDCP). The parent IAB node may configure the UE or the child IAB node to trigger a PDCP data recovery procedure and transmit the PDCP status report, by using the indicator. Also, while the retransmission is performed during the PDCP data recovery procedure, the parent IAB node may perform selective retransmission based on the PDCP status report instead of successful transmission of a lower layer (for example, the RLC layer). In other words, retransmission may be performed only with respect to data indicated as NACK data in which successful transmission is not confirmed in the PDCP status report.

The RRCConnectionReconfiguration message may include an indicator indicating to periodically transmit the PDCP status report such that the PDCP status report is periodically transmitted in the configuration information (pdcp-config) of the PDCP layer. Also, a period or a timer value may be set by using the RRCConnectionSetup message. When the indicator and the configuration are received, the UE or the child IAB node may triger and transmit the PDCP status report according to the period or whenever the timer value expires.

The RRCConnectionReconfiguration message may include an indicator indicating to transmit the PDCP status report such that the PDCP status report is triggered and transmitted in the configuration information (pdcp-config) of the PDCP layer. Also, a timer value may be set by using the RRCConnectionSetup message. When the indicator and the configuration are received, the PDCP layer of the UE or the child IAB node may trigger a timer having the timer value whenever a gap is generated in a PDCP sequence number, and when the gap of the PDCP sequence number is not filled or data corresponding to the PDCP sequence number assumed to be missing is not received until the timer expires, the PDCP layer may trigger the PDCP status report when the timer expires, and configure and transmit the PDCP status report. When the gap of the PDCP sequence number is filled or the data corresponding to the PDCP sequence number assumed to be missing is received before the timer expires, the timer may be stopped and initialized. Here, the timer may be a PDCP reordering timer or a new timer having a value smaller or greater than that of the PDCP reordering timer may be defined.

A PDCP status report prohibit timer may be configured to prevent frequent trigerring of the PDCP status report in the configuration information (pdcp-config) of the PDCP layer, by using the RRCConnectionReconfiguration message. When the PDCP status report prohibit timer is configured, the UE or the child IAB node may trigger the PDCP status report, configure and transmit the PDCP status report, and trigger the PDCP status report prohibit timer. When the PDCP status report prohibit timer is being driven, the PDCP status report may not be additionally transmitted, and the PDCP status report may be transmitted after the PDCP status report prohibit timer expires.

Information about the parent IAB node or the child IAB node, such a congestion level useful to the wireless node, queuing delay, and one-hop air latency between wireless nodes, information about each hop, and the like may be transmitted by using the RRCConnectionReconfiguration message (or a separate newly defined RRC message). Also, wireless hop count from a wireless node that received the RRCConnectionReconfiguration message to an uppermost wireless node (IAB donor) may be indicated. A wireless node that received the wireless hop count via the RRC message may notify a following child node of the hop count after increasing the instructed hop count by 1.

Also, the RRCConnectionReconfiguration message may include configuration information of DRB for processing user data. In operation 1f-35, the UE or the child IAB node may configure the DRB by applying the configuration information described above, and transmit an RCConnectionReconfigurationComplete message to the parent IAB node. The parent IAB node that completed DRB configuration with the UE or the child IAB node may transmit an INITIAL CONTEXT SETUP COMPLETE message to the AMF or the MME and complete the connection.

In operation 1f-40, when the above operations are app completed, the UE or the child IAB node may transmit or receive data to or from the parent IAB node through a core network. According to an embodiment of the disclosure, data transmission processes may largely include three steps of RRC connection establishment, security setting, and DRB configuration. In operation 1f-45, the parent IAB node may transmit an RRCConnectionReconfiguration message to the UE or the child IAB node so as to renew, add, or change configuration for a particular reason.

The parent IAB node may set an indicator indicating, when the child IAB node performs handover, whether to retransmit pre-configured RRC messages to a target parent IAB node or cell, by using the RRCConnectionReconfiguration message. For example, the parent IAB node may instruct the RRC messages that were transmitted within a few seconds before a handover indication message is received, before handover is performed, or before the RRC message is received, to be retransmitted. Also, the indicator may be indicated for each pre-configured RRC message. In other words, multiple indicators may indicate retransmission of each RRC message. Alternatively, the indicator of the retransmission may be indicated in a form of a bitmap instructing each RRC message.

The RRCConnectionReconfiguration message may add an indicator indicating to perform the PDCP data recovery procedure to the PDCP configuration information. Also, the RRCConnectionReconfiguration message may add an indicator indicating whether to perform the PDCP data recovery procedure with respect to the SRB or the DRB to the bearer configuration information. Also, the RRCConnectionReconfiguration message may add an indicator indicating whether to discard data remaining in a PDCP layer with respect to the SRB or the DRB to the bearer configuration information.

The RRCConnectionReconfiguration message may add an indicator indicating whether to perform accumulative retransmission or selective retransmission with respect to AM DRB while PDCP reestablishment procedure is performed, to the bearer configuration information.

The RRCConnectionReconfiguration message may include an indicator indicating which ARQ function is to be used by the child IAB node, and whether to use a hop-by-hop ARQ function or an end-to-end ARQ function may be indicated by using the indicator. When the end-to-end ARQ function is set, the parent IAB node may instruct whether to perform a function of transmitting received RLC layer data intact or after split, or an ARQ function as an end of a child node. Also, the parent IAB node may indicate which ARQ function is to be used as a default function, and when an ARQ function is not configured in the RRCConnectionReconfiguration message, the parent IAB node may pre-determine to use one of the hop-by-hop ARQ function or the end-to-end ARQ function as the default function. The parent IAB node may also instruct the child IAB node whether to use a data split function, by using the RRCConnectionReconfiguration message, and may instruct activation (or availability) of each function of an RLC layer described with reference to FIG. 1B or 1D.

The RRCConnectionReconfiguration message may include an indicator indicating whether to use a data concatenation function in the adaptation layer. Also, the RRCConnectionReconfiguration message may include an indicator indicating whether to configure a header of the adaptation layer, and the parent IAB node may assign a type of the header. For example, the parent IAB node may configure which information among the UE identifier, the UE bearer identifier, the QoS identifier, the wireless node identifier, the wireless node address, and the QoS information is to be included in the header. The parent IAB node may configure to omit the header to reduce overhead.

The parent IAB node may configure the RLC channel to be used between the transmission adaptation layer and tje reception adaptation layer, between the child IAB node and the parent IAB node, or between the UE and the wireless node, by using the RRCConnectionReconfiguration message. In particular, the RRCConnectionReconfiguration message may include the number of usable RLC channels, a usable RLC channel identifier, or mapping information of data mapped to an RLC channel (for example, a UE identifier, a UE bearer identifier, QoS information, or QoS identifier mapping information). The RLC channel may be defined as a channel that transmits data according to QoS by grouping data of multiple UEs, based on the QoS information, and may be defined as a channel that transmits data by grouping data for each UE.

The RRCConnectionReconfiguration message may include an indicator indicating whether to perform retransmission based on a PDCP status report in configuration information (pdcp-config) of the PDPC layer. The parent IAB node may instruct the retransmission based on a PDCP status report to be performed by using the indicator of the RRCConnectionReconfiguration message. For example, when a value of the indicator is set to 0, data corresponding to NACK information of the PDCP status report may be checked and data corresponding to ACK information may be discarded even when the PDCP status report is received. On the other hand, when the value of the indicator is set to 1, the data corresponding to the ACK information of the PDCP status report may be discarded and the data corresponding to NACK information may be retransmitted when the PDCP status report is received.

In order for the RRCConnectionReconfiguration message to indicate retransmission based on the PDCP status report to be performed, the configuration information (pdcp-config) of the PDCP layer may include a PDCP data recovery indicator (recoverPDCP). The parent IAB node may configure the UE or the child IAB node to trigger a PDCP data recovery procedure and transmit the PDCP status report, by using the indicator. Also, while the retransmission is performed during the PDCP data recovery procedure, the parent IAB node may perform selective retransmission based on the PDCP status report instead of successful transmission of a lower layer (for example, the RLC layer). In other words, retransmission may be performed only with respect to data indicated as NACK data in which successful transmission is not confirmed in the PDCP status report.

The RRCConnectionReconfiguration message may include an indicator indicating to periodically transmit the PDCP status report such that the PDCP status report is periodically transmitted in the configuration information (pdcp-config) of the PDCP layer. Also, a period or a timer value may be set by using the RRCConnectionSetup message. When the indicator and the configuration are received, the UE or the child IAB node may triger and transmit the PDCP status report according to the period or whenever the timer value expires.

The RRCConnectionReconfiguration message may include an indicator indicating to transmit the PDCP status report such that the PDCP status report is triggered and transmitted in the configuration information (pdcp-config) of the PDCP layer. Also, a timer value may be set by using the RRCConnectionSetup message. When the indicator and the configuration are received, the PDCP layer of the UE or the child IAB node may trigger a timer having the timer value whenever a gap is generated in a PDCP sequence number, and when the gap of the PDCP sequence number is not filled or data corresponding to the PDCP sequence number assumed to be missing is not received until the timer expires, the PDCP layer may trigger the PDCP status report when the timer expires, and configure and transmit the PDCP status report. When the gap of the PDCP sequence number is filled or the data corresponding to the PDCP sequence number assumed to be missing is received before the timer expires, the timer may be stopped and initialized. Here, the timer may be a PDCP reordering timer or a new timer having a value smaller or greater than that of the PDCP reordering timer may be defined.

A PDCP status report prohibit timer may be configured to prevent frequent trigerring of the PDCP status report in the configuration information (pdcp-config) of the PDCP layer, by using the RRCConnectionReconfiguration message. When the PDCP status report prohibit timer is configured, the UE or the child IAB node may trigger the PDCP status report, configure and transmit the PDCP status report, and trigger the PDCP status report prohibit timer. When the PDCP status report prohibit timer is being driven, the PDCP status report may not be additionally transmitted, and the PDCP status report may be transmitted after the PDCP status report prohibit timer expires.

Information about the parent IAB node or the child IAB node, such a congestion level useful to the wireless node, queuing delay, and one-hop air latency between wireless nodes, information about each hop, and the like may be transmitted by using the RRCConnectionReconfiguration message (or a separate newly defined RRC message). Also, wireless hop count from a wireless node that received the RRCConnectionReconfiguration message to an uppermost wireless node (IAB donor) may be indicated. A wireless node that received the wireless hop count via the RRC message may notify a following child node of the hop count after increasing the instructed hop count by 1.

In the disclosure, a bearer may include an SRB and a DRB. In the disclosure, a UM DRB denotes a DRB using an RLC layer operating in an unacknowledged mode (UM), and an AM DRB denotes a DRB using an RLC layer operating in an acknowledged mode (AM).

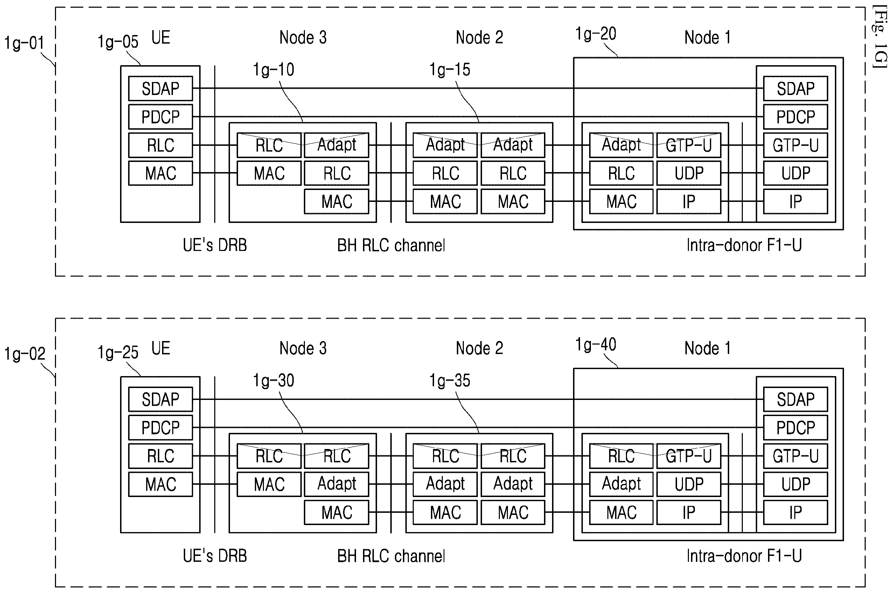

FIG. 1G is a diagram of a protocol layer that each of wireless nodes may include in a next-generation mobile communication system to which an embodiment of the disclosure is applied. In particular, FIG. 1G is a diagram showing a protocol layer that each of wireless nodes may include in a next-generation mobile communication system supporting wireless backhaul to which an embodiment of the disclosure is applied.

Referring to FIG. 1G, protocol layers of wireless nodes supporting wireless backhaul may be largely divided into two types. The two types may be classified based on a position of an adaptation (ADAP) layer. A protocol layer structure may include a protocol layer structure 1g-01 in which an ADAP layer is driven on an RLC layer (i.e. RLC layer is lower layer of the ADAP layer), and a protocol layer structure 1g-02 in which an ADAP layer is driven below an RLC layer (i.e. ADAP layer is lower layer of the RLC layer).

In FIG. 1G, a UE 1g-05 is a protocol layer and may drive all of a PHY layer, an MAC layer, an RLC layer, a PDCP layer, and an SDAP layer. Wireless nodes (for example, wireless nodes that perform a wireless backhaul function of receiving and transmitting data between a UE and an IAB donor, i.e., a node 3 1g-10 or a node 2 1g-15) may drive the PHY layer, the MAC layer, the RCL layer, and the ADAP layer. Also, an uppermost wireless node (for example, an uppermost node that supports wireless backhaul and transmits data by being connected to a core network, i.e., an IAB donor or a node 1 1g-20) may drive all of the PHY layer, the MAC layer, the RLC layer, the PDCP layer, and the SDAP layer. Meanwhile, the uppermost wireless node may include a central unit (CU) and a distributed unit (DU) connected via wires. According to an embodiment of the disclosure, the CU may drive the SDAP layer and the PDCP layer, and the DU may drive the RLC layer, the MAC layer, and the PHY layer.

The ADAP layer may identify a plurality of bearers of a plurality of UEs and map the plurality of bearers to an RCL channel. Also, when identifying the plurality of bearers of the plurality of UEs, the ADAP layer may group data, based on the UE or QoS to map the data to one RLC channel, process the data as a group, and reduce overhead by grouping the data mapped to the one RLC channel via a data concatenation function. Here, the data concatenation function may denote a function in which one header or a small number of headers is configured for a plurality of pieces of data, a header field of indicating concatenated data is indicated to distinguish each piece of data, and a header is not configured for each piece of data unnecessarily to reduce overhead.

In the protocol layer structure 1g-01 of FIG. 1G, the node 3 1g-10 may drive first RLC layers identical to those corresponding to each data bearer of the UE 1g-05, so as to process data received from the UE 1g-05. Also, the node 3 1g-10 may process pieces of data received from the plurality of RLC layers by using the ADAP layer, and map the processed pieces of data to a new RLC channel and second RLC layers corresponding to the new RLC channel. The ADAP layer of the node 3 1g-10 may distinguish a plurality of bearers of a plurality of UEs and map the plurality of bearers to an RCL channel. Also, when the plurality of bearers of the plurality of UEs are distinguished, the ADAP layer may group data based on a UE or QoS to map the data to one RLC channel, and may group and process data in the second RLC layer. The RLC channel may be defined as a channel that transmits data according to QoS by grouping data of multiple UEs, based on the QoS information, and may be defined as a channel that transmits data by grouping data for each UE.

The node 3 1g-10 may perform a procedure of distributing UL transmission resources received from the parent IAB node. The node 3 1g-10 may perform the procedure of distributing the UL transmission resources according to QoS information of the RLC channel (or the second RLC layer), priority, an amount of transmittable data (for example, an amount of data allowed in a current UL transmission resource or a token), or an amount of data stored in a buffer with respect to the RLC channel (or the second RLC layer). Also, the node 3 1g-10 may transmit data of each RLC channel to the parent IAB node b using a split function or a concatenation function, according to the distributed resources.

The first RLC layer may denote an RLC layer that processes data corresponding to a bearer, like an RLC layer corresponding to each bearer of the UE, and the second RLC layer may denote an RLC layer that processes data mapped by the ADAP layer based on the UE, QoS, or mapping information configured by the parent IAB node.

In the protocol layer structure 1g-01 of FIG. 1G, the node 2 1g-10 may drive second RLC layers corresponding to those of a child IAB node (the node 3 1g-10), and process data according to an RLC channel.

In the protocol layer structure 1g-01 of FIG. 1G, the uppermost node 1 1g-20 may drive second RLC layers corresponding to those of a child IAB node (the node 2 1g-15), and process data according to an RLC channel. The ADAP layer of the uppermost node 1 1g-20 may map pieces of data processed with respect to the RLC channel to PDCP layers for each bearer of each UE. Also, the PDCP layer of the uppermost node 1 1g-20 corresponding to each bearer of each UE may process received data, transmit the data to the SDAP layer, and transmit the data to the core network.

In the protocol layer structure 1g-02 of FIG. 1G, a node 3 1g-30 may drive first RLC layers identical to those corresponding to each data bearer of a UE 1g-25, so as to process data received from the UE 1g-25. The node 3 1g-30 may identically process data received fro a plurality of RLC layers by driving the first RLC layers. Also, an ADAP layer of the node 3 1g-30 may process pieces of data processed by using the first RLC layer and map the pieces of data to new RLC channels. The ADAP layer may distinguish a plurality of bearers of a plurality of UEs and map the plurality of bearers to an RCL channel. Also, when the plurality of bearers of the plurality of UEs are distinguished, the ADAP layer may group data based on a UE or QoS to map the data to one RLC channel, and may group and process the data. The RLC channel may be defined as a channel that transmits data according to QoS by grouping data of multiple UEs, based on the QoS information, and may be defined as a channel that transmits data by grouping data for each UE.

The node 3 1g-30 may perform a procedure of distributing UL transmission resources received from the parent IAB node. According to an embodiment of the disclosure, the node 3 1g-30 may perform the procedure of distributing the UL transmission resources according to QoS information of the RLC channel, priority, an amount of transmittable data (for example, an amount of data allowed in a current UL transmission resource or a token), or an amount of data stored in a buffer with respect to the RLC channel. Also, the node 3 1g-30 may transmit data of each RLC channel to the parent IAB node b using a split function or a concatenation function, according to the distributed resources.

In the protocol layer structure 1g-02 of FIG. 1G, a node 2 1g-35 may process received data corresponding to the RLC channel of a child IAB node (the node 3 1g-30), according to the RLC channel. An ADAP layer of the node 2 1g-35 may map pieces of data received with respect to the RLC channel to first RLC layers for each bearer of each UE. Also, the first RLC layer corresponding to each bearer of each UE of the wireless node may process received data to again transmit and process data to a transmission first RLC layer, and again transmit the data to the ADAP layer. The ADAP layer may map the data received from the plurality of RLC layers again to the RLC channels, and transmit the data to a next parent IAB node according to distribution of UL transmission resources.

In the protocol layer structure 1g-02 of FIG. 1G, an uppermost node 1 1g-40 may process received data with respect to the RLC channel of a child IAB node (the node 2 1g-35), according to the RLC channel. Also, an ADAP layer of the node 1 1g-40 may map pieces of data received with respect to the RLC channel to first RLC layers corresponding to each bearer of each UE.

According to an embodiment of the disclosure, a wireless node may drive first RLC layers corresponding to each bearer of each UE, process received data, and transmit the data to PDCP layers according to each bearer of each UE. A PDCP layer of an uppermost node corresponding to each bearer of each UE may process received data, transmit the data to an SDAP layer, and transmit the data to a core network.

FIG. 1H is a diagram for describing a bearer managing and processing method of wireless nodes in a next-generation mobile communication system, according to an embodiment of the disclosure.

Referring to FIG. 1H, a wireless node 1h-04 (for example, a UE) may transmit or receive data to or from an uppermost wireless node 1h-01 (for example, an IAB donor) connected to a core network, through a node 3 1h-03 (for example, an intermediate wireless node or an IAB node) and a node 2 1h-02 (for example, a wireless node or an IAB node).

According to an embodiment of the disclosure, first SRB 1h-31, 1h-21, and 1h-11 for configuring RRC connection with a parent IAB node may be configured for each wireless node, in an IAB network. A first SRB 1h-31, 1h-21, and 1h-11 may be connected to a PHY layer, an MAC layer, and an RLC layer in an intermediate wireless node, and may be directly connected to a PDCP layer without being connected to an ADAP layer. Also, a first SRB 1h-31, 1h-21, and 1h-11 may be used to exchange RRC messages between two wireless nodes connected to one wireless link, and may perform a separate encoding and decoding or integrity protection and integrity verification procedure in a connected PDCP layer.

Also, according to an embodiment of the disclosure, the UE accessed wireless node 3 1h-03 (for example, the UE accessed IAB node) may configure second SRB 1h-22, and 1h-12 so as to transmit or receive an NAS message through the uppermost wireless node 1h-01 (for example, the node 1) for network configuration with respect to the corresponding UE. The UE accessed wireless node 3 1h-03 identifies an RRC message received through the first SRB 1h-31, 1h-21, and 1h-11, and data that needs to be transmitted to a core network as the NAS message may be transmitted to the wireless node 2 1h-02 through the second SRB 1h-22, and 1h-12, and the wireless node 2 1h-02 may transmit the corresponding data to the uppermost wireless node 1 1h-01 again through the second SRB 1h-22, and 1h-12. The uppermost wireless node 1 1h-01 that received the data transmits the corresponding data to the core network, and upon receiving response data from the core network, transmits the response data to the wireless node 3 1h-03 through the second SRB 1h-22, and 1h-12, and the wireless node 3 1h-03 may transmit the response data to the UE 1h-04 through the first SRB 1h-31, 1h-21, and 1h-11. The second SRB 1h-22, and 1h-12 may be connected to a PHY layer, an MAC layer, an RLC layer, and an ADAP layer in intermediate wireless nodes (for example, the wireless node 2 1h-02 or the wireless node 3 1h-03). In other words, unlike the first SRB 1h-31, 1h-21, and 1h-11, the second SRB 1h-22, and 1h-12 may be mapped to a new RLC layer through the ADAP layer and transmitted to a next wireless node.

According to an embodiment of the disclosure, the UE accessed wireless node 3 1h-03 (for example, the UE accessed IAB node) may generate and manage corresponding DRBs to process data received from the UE, and DRBs 1h-32, 1h-33, 1h-23, 1h-24, 1h-13, 1h-14 may be connected to the PHY layer, the MAC layer, the RLC layer, and the ADAP layer. Accordingly, the UE 1h-04 accessed wireless node 3 1h-03 may transmit data corresponding to the DRB to a next wireless node by mapping the data to a new RLC layer through the ADAP layer. Here, the intermediate wireless node 2 1h-02 may transmit or receive data by being connected to the PHY layer, the MAC layer, the RLC layer, and the ADAP layer so as to process data received from the child IAB node 3 1h-03 through the RLC channel.

Regarding the bearer managing and processing method of the wireless nodes, according to an embodiment of the disclosure, each wireless node performs a data concatenation function in the ADAP layer with respect to data corresponding to the DRBs of the UE, and does not perform a data concatenation function on the first SRB 1h-31, 1h-21, and 1h-11 because the ADAP layer is not connected.

Also, in the bearer managing and processing method of the wireless nodes, according to an embodiment of the disclosure, a security key used to perform encoding and integrity protection procedures on the data with respect to the first SRBs 1h-31, 1h-21, and 1h-11 may be determined by the parent IAB node of each wireless link. In other words, the first SRBs 1h-31, 1h-21, and 1h-11 may share and use the same security key, but to reinforce security, may parent IAB nodes may individually configure the security keys (for example, the security key for the first SRB 1h-31 is set by the wireless node 3 1h-03 and the security key for the first SRB 1h-21 is set by the wireless node 2 1h-02). Also, regarding the second SRB 1h-22, and 1h-12, each intermediate wireless node does not perform separate encoding and integrity protection except for encoding and integrity protection applied to the NAS message. Also, each intermediate wireless node performs the encoding and integrity protection described above for the first SRB 1h-31, 1h-21, and 1h-11, but does not perform separate encoding and integrity protection on the DRBs excluding the first SRB 1h-31, 1h-21, and 1h-11.

Also, in the bearer managing and processing method of the wireless nodes, according to an embodiment of the disclosure, a third SRB may be defined and used. The third SRB may be used as a control bearer for transmitting or receiving a control message between each of wireless nodes and an uppermost wireless node 1h-01. In other words, a bearer for transmitting or receiving a message for the uppermost wireless node 1h-01 to directly control each wireless node (for example, an RRC message or an interface message of an upper layer) may be defined and used. For example, the third SRB is configured between the uppermost wireless node 1 1h-01 and the wireless node 2 1h-02 to exchange a control message, the third SRB is configured between the uppermost wireless node 1 1h-01 and the wireless node 3 1h-03 to exchange a control message, and wireless node 2 1h-02 may transmit data corresponding to the third SRB to the uppermost wireless node 1 1h-01 and the wireless node 3 1h-03.

Hereinafter, a method regarding bearer management and data process of wireless nodes in a mobile communication system supporting wireless backhaul will be described. Also, a method, performed by wireless nodes, of recovering data loss that may occur due to disconnection or congestion of a wireless link will be described. In particular, a method and procedure of retransmitting lost data based on a PDCP status report in a PDCP layer of two end wireless nodes of a wireless backhaul network will be described.

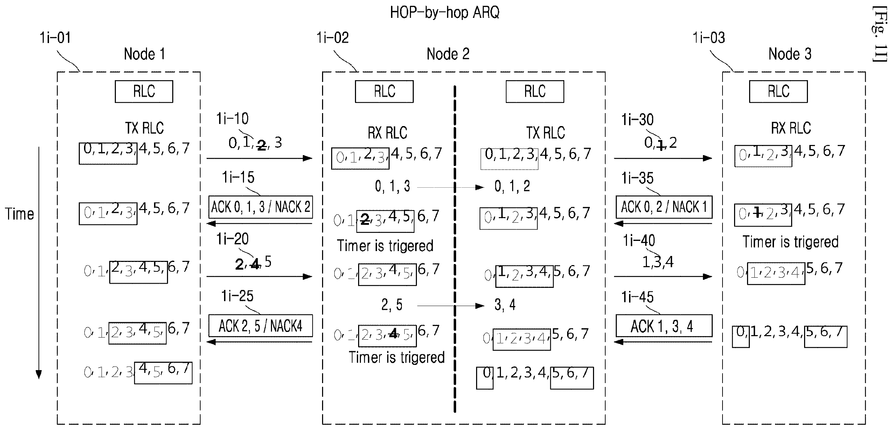

FIG. 1I is a diagram showing a method of transmitting data without loss in a wireless link of a next-generation mobile communication system to which an embodiment of the disclosure is applied, in a data level among RLC layers.

In particular, FIG. 1I is a diagram showing a hop-by-hop ARQ method in which data is transmitted without loss in a wireless link of a next-generation mobile communication system supporting wireless backhaul, in a data level between RLC layers. FIG. 1I shows a scenario in which data is transmitted from an RLC layer of a wireless node 1 11-01 to an RLC layer of a wireless node 3 11-03.

The hop-by-hop ARQ method may independently drive an ARQ function in a wireless link between two wireless nodes (for example, a UE, an IAB node, or an IAB donor). For example, when data is transmitted from a wireless node 1 1i-01 (for example, a UE) of FIG. 1I to a wireless node 3 1i-03 (for example, an IAB donor) through a wireless node 2 1i-02 (for example, an IAB node), three wireless nodes and two wireless links are generated. According to an embodiment of the disclosure, two wireless nodes may independently perform an ARQ function for each of two wireless links.

In other words, with respect to the wireless link between the wireless node 1 1i-01 and the wireless node 2 1i-02, the wireless node 1 1i-01 may drive a transmission RLC window, assign an independent RLC sequence number, transmit data, perform a polling function, a split function, or the like, receive an RLC status report (RLC status PDU), and operate the transmission RLC window based on RLC ACK of the RLC status report.

Also, with respect to the wireless link between the wireless node 1 1i-01 and the wireless node 2 1i-02, the wireless node 2 1i-02 may drive a reception RLC window, identify an RLC sequence number with respect to received data to perform a loss detection function, drive a timer when an RLC sequence number gap is generated, configure and transmit an RLC status report when the timer expires, and indicate successful transmission by configuring the RLC status report corresponding to polling when an RLC header verifies the polling to drive a function of requesting a transmission RLC layer for retransmission and transmission window movement.

Also, with respect to a wireless link between the wireless node 2 1i-02 (for example, an IAB node) and the wireless node 3 i1-03 (for example, an IAB donor), the wireless node 2 1i-02 may drive a transmission RLC window, assign an independent RLC sequence number, transmit data, perform a polling function, a split function, and the like, and receive an RLC status report (RLC status PDU) to operate the transmission RLC window, based on RLC ACK of the RLC status report.

Also, with respect to the wireless link between the wireless node 2 1i-02 and the wireless node 3 1i-03, the wireless node 3 1i-03 may drive a reception RLC window, identify an RLC sequence number with respect to received data to perform a loss detection function, drive a timer when an RLC sequence number gap is generated, configure and transmit an RLC status report when the timer expires, and indicate successful transmission by configuring the RLC status report corresponding to polling when an RLC header verifies the polling to drive a function of requesting a transmission RLC layer for retransmission and transmission window movement.

Referring to FIG. 1I, the wireless node 2 1i-02 is connected to the wireless node 1 1i-01 via a wireless link and to the wireless node 3 1i-03 via a wireless link.

The wireless node 2 1i-02 may process data of an RLC layer received from the wireless node 1 1i-01. In particular, the wireless node 2 1i-02 assigns a new RLC sequence number after reading and analyzing an RLC header, newly configures a new RLC header to generate data of a transmission RLC layer, and transmit the data to a reception RLC layer of the wireless node 3 1i-03.

Also, the wireless node 2 1i-02 may process data of an RLC layer received from the wireless node 3 1i-03. In particular, the wireless node 2 1i-02 assigns a new RLC sequence number after reading and analyzing an RLC header, newly configures a new RLC header to generate data of a transmission RLC layer, and transmit the data to a reception RLC layer of the wireless node 1 1i-01.

In other words, when the hop-by-hop ARQ method is used, wireless nodes transmitting or receiving data in the middle may receive data of an RLC layer and transmit the data after reconstructing (restoring) the data, and during the reconstruction, discard a received RLC header, generate a new RLC header, and transmit the new RLC header with the data. The wireless nodes may manage and maintain a mapping table so as to record mapping information of an RLC sequence number of the newly generated RLC header and an RLC sequence number of the discarded RLC header.

According to an embodiment of the disclosure, the hop-by-hop ARQ method may include following functions.
1. A wireless node transmitting data and a wireless node receiving data for each wireless link independently perform an ARQ function.
2. An independent RLC sequence number is assigned and used for each wireless link
3. A reception RLC layer of a wireless node receiving data for each wireless link generates and transmits an independent RLC status report, and a transmission RLC layer of a wireless node transmitting data receives the RLC status report and performs retransmission and transmission window movement.
4. A function of retransmitting data for each wireless link is performed.
5. When wireless nodes transmitting data from one wireless link to another wireless link may receive data of an RLC layer and transmit the data after reconstructing the data, and during the reconstruction, discard a received RLC header, generate a new RLC header, and transmit the new RLC header with the data. Also, a mapping table may be managed and maintained so as to record mapping information of an RLC sequence number of the newly generated RLC header and an RLC sequence number of the discarded RLC header.
6. When a data split function is required according to UL transmission resources, an RLC header may be newly configured by updating an RLC header field value or inserting an additional field to the RLC header, according to a data split function.

An embodiment of the disclosure based on the hop-by-hop ARQ method will be described in detail by referring to FIG. 1I.

In the current embodiment of the disclosure, it is assumed that wireless nodes use an RLC sequence number of a 3 bit length in a network supporting wireless backhaul for convenience of description. In other words, 0 through 7 may be assigned and used as the RLC sequence number, and a size of an RLC window may be 4 that is half the length of the RLC sequence number.

First, the transmission RLC layer of the wireless node 1 1i-1 may assign RLC sequence numbers respectively to pieces of data received from an upper layer. Also, pieces of data corresponding to the RLC sequence numbers 0 through 3 may be transmitted to the the wireless node 2 1i-02 (a parent IAB node) through a wireless link 1i-10.

It is assumed that the data corresponding to the RLC sequence number is lost in the wireless link 1i-10. Then, a reception RLC layer of the wireless node 2 1i-02 (the parent IAB node) receives the data corresponding to the RLC sequence numbers 0, 1, and 3, and at this time, may determine that the RLC sequence number 2 may be lost and trigger a timer.

When the data corresponding to the RLC sequence number 2 does not arrive until the timer expires, the reception RLC layer of the the wireless node 2 1i-02 (the parent IAB node) configures and transmits an RLC status report 1i-15 to the transmission RLC layer of the wireless node 1 i1-01. The RLC status report 1i-15 may include information (ACK) that the RLC sequence numbers 0, 1, and 3 are successfully received and information (NACK) that the RLC sequence number 2 is not successfully received.

Upon receiving the RLC status report 1i-15, the wireless node 1 1i-01 may move the transmission RLC window, based on the information of the RLC sequence number whose successful transmission is verified and retransmit the data corresponding to the RLC sequence number whose successful transmission is not verified. In other words, the wireless node 1 1i-01 may retransmit the RLC sequence number 2 (11-20). At this time, the wireless node 1 1i-01 may transmit the data corresponding to the RLC sequence number 2 for retransmission and data corresponding to RLC sequence numbers 4 and 5 for new transmission.

According to an embodiment of the disclosure, it is assumed that the data corresponding to the RLC sequence number 4 is lost. The reception RLC layer of the wireless node 2 i1-02 may assume that the RLC sequence number 4 is lost and trigger a timer, and when the timer expires, may transmit an RLC status report 1i-25 to continuously perform the ARQ function.

Meanwhile, upon receiving the data corresponding to the RLC sequence numbers 0, 1, and 3 from the wireless node 1 1i-01, the wireless node 2 i1-02 may read and remove the RLC header. The wireless node 2 1i-02 may assign new RLC sequence numbers 0, 1, and 2 for a wireless link between the wireless node 2 i1-02 and the wireless node 3 1i-03 to newly configure the RLC header, configures data, and transmit the data to the wireless node 3 i1-03. The ARQ operation between the wireless node 1 1i-01 and the wireless node 2 1i-02 may be operated as indicated by reference numerals 1i-30, 1i-35, 1i-40, and 1i-45 independently between the wireless node 2 1i-02 and the wireless node 3 1i-03.

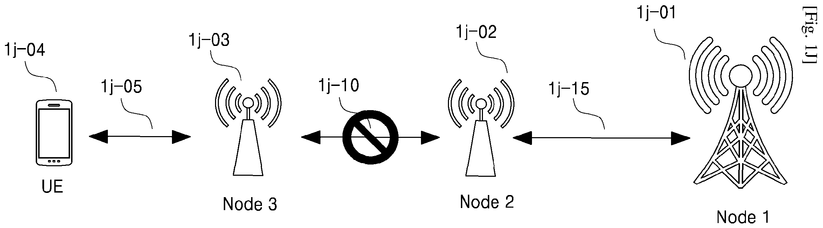

FIG. 1J is a diagram for describing data loss that may occur in a wireless node of a next-generation mobile communication system to which an embodiment of the disclosure is applied.

Referring to FIG. 1J, a wireless node (for example, a UE 1j-04) may transmit or receive data to or from an uppermost wireless node 1j-01 (for example, an IAB donor) connected to a core network, through a node 3 1j-03 (for example, an intermediate wireless node or an IAB node) and a node 2 1j-02 (for example, a wireless node or an IAB node).

Data may be lost when a wireless link is disconnected due to an obstacle between the wireless node 3 1j-03 and the wireless node 2 1j-02 or when the wireless link is disconnected due to a retransmission number exceeding the highest retransmission number. Also, the data may be lost due to buffer overflow caused by data congestion of the wireless node 3 1j-03 or the wireless node 2 1j-02.

The data loss is unable to be completely prevented even by using the hop-by-hop ARQ method shown in FIG. 1I. Even when the UE 1j-04 receives an RLC status report that successful transmission is verified from the wireless node 3 1j-03 (15-05), that is a parent IAB node, data may be lost due to data congestion and buffer overflow of the wireless node 3 1j-03, and the data loss may occur due to disconnection of a wireless link 1j-10.

According to an embodiment of the disclosure, when data congestion or buffer overflow occurs in a wireless node, a parent IAB node is changed, or a wireless link is disconnected, a separate control message (for example, an RRC message) requesting a data loss recovery procedure may be used. In other words, when the above issues occur, the wireless node may indicate the parent IAB node, a child IAB node, an uppermost wireless node, or a UE that the issues occurred in the wireless node or data is lost, through the separate control message.

Also, according to an embodiment of the disclosure, the wireless node may notify another wireless node about congestion or wireless link disconnection, by using a certain field of an ADAP header or a certain field of an RLC header. For example, the wireless node may transmit an instruction (for example, an instruction to reduce data transmission) to perform congestion control because congestion is occurred, to a source wireless node that generates most traffic of data, by using the certain field of the ADAP header or the certain field of the RLC header. Upon receiving such instruction, the source wireless node may notify that the congestion control is performed (or data transmission is reduced) or an indication that the congestion is occurred is received, by using another certain field of the ADAP header or another certain field of the RLC header. Also, the wireless node may indicate that the congestion is occurred by using a certain field of an IP header, and indicate to perform congestion control because the congestion is occurred, by using a certain field of a TCP header. Also, the source wireless node may indicate that the congestion control is performed, by using a certain field of the TCP header.

Also, according to an embodiment of the disclosure, a TimeToLive (TTL) field may be introduced to the ADAP header to prevent congestion that may occur in a network. An ADAP layer may set a TTL field value in a header of the ADAP layer for a service allowing data loss, such as an RLC unacknowledge mode (UM), and set an IAB node to discard data when a a certain hop count is passed or a certain time is passed. Also, the ADAP layer may not set the TTL field value in the header of the ADAP layer for a service that does not allow data loss, such as an RCL acknowledge mode (AM), and instruct the IAB node not to discard data by setting 0 or an infinite value when the TTL field value is set.

In other words, according to an embodiment of the disclosure, the ADAP layer may set or not set the TTL field value of the ADAP header, considering QoS of a service corresponding to the data, an RLC mode, or a transmission permission delay, or the like. Also, the ADAP layer may differently set the TTL field value of the ADAP header, considering QoS of a service corresponding to the data, an RLC mode, or a transmission permission delay, or the like. In addition, the ADAP layer may differently set the TTL field value by distinguishing data transmitted in the RLC UM and data transmitted in the RLC AM. Further, the ADAP layer may notify the IAB node that the congestion is occurred by defining new MAC CE.

Hereinafter, a method of recovering lost data when data loss is occurred as in FIG. 1I will be described. In particular, a method of recovering lost data through an end-to-end PDCP layer for recovering data loss that may occur in wireless nodes of a next-generation mobile communication system supporting wireless backhaul will be described. The method through the PDCP layer may be applied to a next-generation mobile communication system that does not support wireless backhaul, an LTE system or an NR system, or a similar communication system.

First, a PDCP data recovery procedure according to an embodiment of the disclosure for recovering data loss will be described.

According to an embodiment of the disclosure, when a report that data loss is occurred is received or the data loss is detected, a wireless node (a parent IAB node or an uppermost wireless node) may add an indicator for performing retransmission based on a PDCP status report to PDCP configuration information (for example, pdcp-config) of a control message (for example, an RRC message or an upper layer message), instruct retransmission based on the PDCP status report, and set an indicator (receoverPDCP) for performing a PDCP data recovery procedure. The wireless node may configure and generate PDCP status information in a PDCP layer, and transmit the PDCP status information to a UE. Upon receiving such a control message, the UE may perform the PDCP data recovery procedure in the PDCP layer corresponding to the PDCP configuration information. Because the control message indicates to perform retransmission based on the PDCP status report, the UE may selectively retransmit data in an ascending order of a count value with respect to data whose successful transmission indicated by the PDCP status report is not confirmed, instead of selectively retransmitting the data in the ascending order of the count value with respect to the data whose successful transmission is not confirmed from a lower layer while performing the PDCP data recovery procedure.

According to an embodiment of the disclosure, because retransmission is performed by the PDCP layer of the UE in the scenario shown in FIG. 1J, data may be recovered even when lost, in a data level of an RLC layer of an intermediate wireless node. In other words, even when data is lost despite that the RLC layer of the intermediate wireless node indicated successful transmission via an RLC status report, the lost data may be recovered because the PDCP layer performs retransmission.

Next, a PDCP data recovery procedure according to another embodiment of the disclosure for recovering data loss will be described.

According to an embodiment of the disclosure, when a report that data loss is occurred is received or the data loss is detected, a wireless node (a parent IAB node or an uppermost wireless node) may set an indicator (receoverPDCP) for performing a PDCP data recovery procedure in PDCP configuration information (for example, pdcp-config) of a control message (for example, an RRC message or an upper layer message). The wireless node may configure and generate PDCP status information in a PDCP layer, and transmit the PDCP status information to a UE.

Hereinafter, a detailed PDCP data recovery procedure will be described.
- When a PDCP status report is not received, pieces of PDCP data whose successful transmission is not confirmed by a lower layer from among pieces of data (for example, PDCP PDUs or PDCP SDUs) that have been transmitted to an RLC layer that is reestablished or connection released are selectively retransmitted in an ascending order of a count value.
- When a PDCP status report is received, pieces of PDCP data whose successful transmission is not confirmed by the PDCP status report from among pieces of data (for example, PDCP PDUs or PDCP SDUs) that have been transmitted to an RLC layer that is reestablished or connection released are selectively retransmitted in an ascending order of a count value. Then, pieces of PDCP data whose successful transmission is confirmed is discarded from the PDCP status report.

Upon receiving a control message, a UE may perform a PDCP data recovery procedure in a PDCP layer corresponding to PDCP configuration information, and because a PDCP status report is received, the UE may selectively retransmit data in an ascending order of count value with respect to data whose successful transmission indicated by the PDCP status report is not confirmed, instead of selectively retransmitting the data in the ascending order of the count value with respect to data whose successful transmission is not confirmed from a lower layer, while performing the PDCP data recovery procedure.

According to an embodiment of the disclosure, because retransmission is performed by the PDCP layer of the UE in the scenario shown in FIG. 1J, data may be recovered even when lost, in a data level of an RLC layer of an intermediate wireless node. In other words, even when data is lost despite that the RLC layer of the intermediate wireless node indicated successful transmission via an RLC status report, the lost data may be recovered because the PDCP layer performs retransmission.

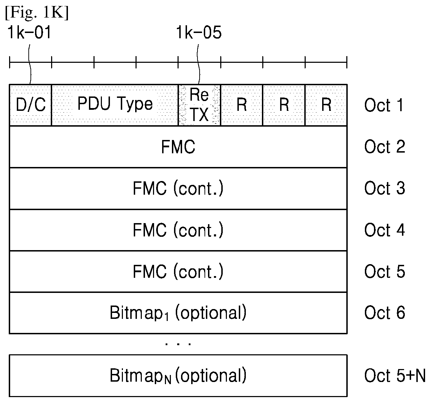

FIG. 1K is a diagram for describing a method of recovering data loss, according to an embodiment of the disclosure.

Referring to FIG. 1K, a retransmission procedure based on a PDCP status report, in which data loss is recovered, according to an embodiment of the disclosure will be described. In particular, in a PDCP status report format 1k-01 of FIG. 1K, a 1-bit ReTX field 1k-05 may be defined and used as a new field, by using a reserved (R) field.

When set in a particular value among 0 or 1, for example, 1, the ReTX field 1k-05 may instruct to perform a retransmission procedure based on a PDCP status report. In other words, when the ReTX field 1k-05 is set in the particular value (for example, 1) upon receiving the PDCP status report, a UE may selectively retransmit pieces of data whose successful transmission is not confirmed (NACK) in the PDCP status report, in an ascending order of a count value. Then, the UE may perform a data discard procedure on data whose successful transmission is confirmed (ACK) in the PDCP status report.

When set in a particular value among 0 or 1, for example, 0, the ReTX field 1k-05 may instruct not to perform a retransmission procedure based on a PDCP status report. In other words, when the ReTX field 1k-05 is set in the particular value (for example, 0) upon receiving the PDCP status report, the UE may perform the data discard procedure on the data whose successful transmission is confirmed (ACK) in the PDCP status report.

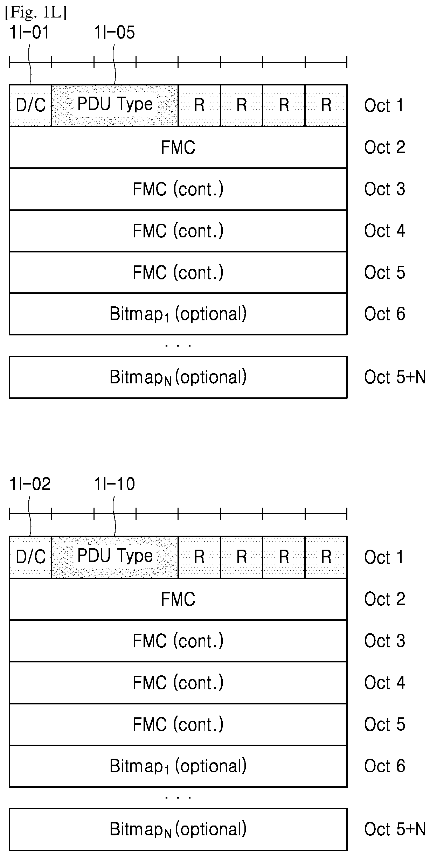

FIG. 1L is a diagram for describing a method of recovering data loss, according to another embodiment of the disclosure.

Referring to FIG. 1L, a retransmission procedure based on a PDCP status report, in which data loss is recovered, according to another embodiment of the disclosure will be described. In particular, a first PDCP status report 11-01 and a second PDCP status report 11-02 of FIG. 1L may be used. The first and second PDCP status reports 11-01 and 11-02 may be distinguished y defining different values in PDU type fields 11-05 and 11-10.

When a UE received the first PDCP status report 11-01, the UE may not perform the retransmission procedure based on a PDCP status report. In other words, upon receiving the first PDCP status report 11-01, the UE may perform a data discard procedure on data whose successful transmission is confirmed (ACK) in the first PDCP status report 11-01.

When a UE received the second PDCP status report 11-02, the UE may perform the retransmission procedure based on a PDCP status report. In other words, upon receiving the second PDCP status report 11-02, the UE may selectively retransmit data whose successful transmission is not confirmed (NACK) in the second PDCP status report 11-02, in an ascending order of a count value. Then, the UE may perform a data discard procedure on data whose successful transmission is confirmed (ACK) in the second PDCP status report 11-02.

Hereinafter, a method of generating and transmitting a PDCP status report periodically or whenever a PDCP sequence gap is generated and a timer expires, such that end wireless nodes periodically verify whether data is lost in the middle, a next-generation mobile communication system supporting wireless backhaul, will be described. At this time as well, retransmission may be requested by applying the retransmission method based on a PDCP status report.

According to an embodiment of the disclosure, as shown in FIG. 1F, an indicator, a period, or a timer value for transmitting a PDCP status report periodically may be set such that the PDCP status report is periodically transmitted in configuration information (pdcp-config) of a PDCP layer of an RRC message. Upon receiving such setting, a UE may trigger and transmit the PDCP status report periodically or whenever the timer value exposires.

According to an embodiment of the disclosure, the indicator for transmitting the PDCP status report or the timer value may be set such that the PDCP status report is triggered and transmitted in the configuration information (pdcp-config) of the PDCP layer. Upon receiving such setting, the PDCP layer of the UE may trigger a timer having the timer value whenever there is a gap in PDCP sequence numbers, and when the PDCP sequence number gap is not filled until the timer expires or data corresponding to a PDCP sequence number assumed to be lost is not received, the UE may trigger, configure, and transmit the PDCP status report when the timer expires. When the gap of the PDCP sequence number is filled or the data corresponding to the PDCP sequence number assumed to be missing is received before the timer expires, the timer may be stopped and initialized. According to an embodiment of the disclosure, the timer may be a PDCP reordering timer or a new timer having a value smaller or greater than that of the PDCP reordering timer may be defined. For example, when the PDCP sequence number gap is generated, a new timer having a value smaller than that of a PDCP reordering timer is started and the PDCP reordering timer may also be started. Also, when the new timer having the small value expires, the PDCP status report is configured and transmitted, and the UE may standby until data that is retransmitted is received until the PDCP reordering timer expires.

According to an embodiment of the disclosure, a PDCP status report prohibit timer may be set to prevent the PDCP status report from being frequently triggered in the configuration information (pdcp-config) of the PDCP layer. When the PDCP status report prohibit timer is set, the PDCP status report is triggered or is configured and transmitted, and the PDCP status report prohibit timer may be triggered. When the PDCP status report prohibit timer is being driven, the PDCP status report may not be additionally transmitted, and the PDCP status report may be transmitted after the PDCP status report prohibit timer expires.

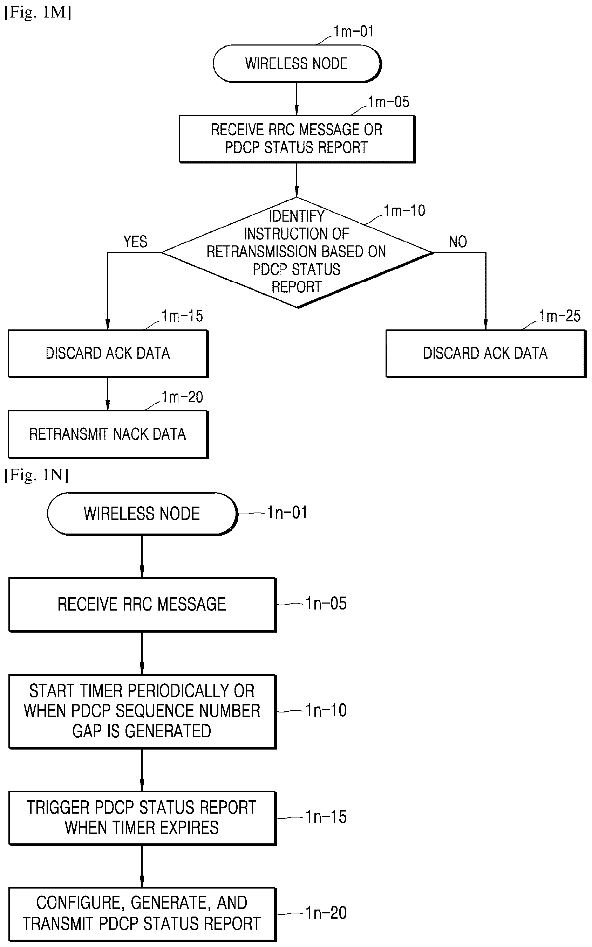

FIG. 1M is a diagram for describing operations of a wireless mode performing retransmission based on a PDCP status report, according to an embodiment of the disclosure.

Referring to FIG. 1M, a wireless node 1m-01 (for example, a UE, an intermediate wireless node, or an uppermost wireless node) receives an RRC message or a PDCP status report via a PDCP control PDU, in operation 1m-05. Then, in operation 1m-10, the received RRC message or the PDCP control PDU is identified.

When retransmission based on a PDCP status report is instructed, the wireless node 1m-01 performs operation 1m-15 to read and analyze the PDCP status report in a PDCP layer of the wireless node 1m-01, and performs a discard procedure on data whose successful transmission is confirmed (ACK). Then, in operation 1m-20, the wireless node 1m-01 retransmits data whose successful transmission is not confirmed (NACK) in an ascending order of PDCP sequence number or count value.

When retransmission based on a PDCP status report is not instructed, the wireless node 1m-01 performs operation 1m-25 to read and analyze the PDCP status report in a PDCP layer of the wireless node 1m-01, and performs a discard procedure on data whose successful transmission is confirmed (ACK).

According to an embodiment of the disclosure, the operations of the wireless node 1m-01 may be applied to the retransmission procedure based on a PDCP status report, in which data loss is recovered.

FIG. 1N is a diagram for describing operations of a wireless node performing retransmission based on a PDCP status report, according to another embodiment of the disclosure.

Referring to FIG. 1N, a wireless node 1n-01 (for example, a UE, an intermediate wireless node, or an uppermost wireless node) receives an RRC message in operation 1n-05. Then, in operation 1n-10, the wireless node 1n-01 identifies the received RRC message, and when an indicator, a period, or a timer value for transmitting a PDCP status report periodically is set such that the PDCP status report is periodically transmitted in configuration information (pdcp-config) of a PDCP layer of the received RRC message, a PDCP layer of the wireless node 1n-01 may start a timer according to the set period or the timer value. In operation 1n-15, the wireless node 1n-01 triggers the PDCP status report whenever the timer expires, and in operation 1n-20, the wireless node 1n-01 may configure, generate, and transmit the PDCP status report.

According to another embodiment of the disclosure, the wireless node 1n-01 may trigger the timer having the timer value whenever a PDCP sequence number gap is generated, in operation 1n-10. In operation 1n-15, when the PDCP sequence number gap is not filled or data corresponding to a PDCP sequence number assumed to be lost is not received until the timer expires, the wireless node 1n-01 triggers the PDCP status report when the timer expires, and in operation 1n-20, the wireless node 1n-01 may configure, generate, and transmit the PDCP status report. Here, when the gap of the PDCP sequence number is filled or the data corresponding to the PDCP sequence number assumed to be lost is received before the timer expires, the timer may be stopped and initialized. According to an embodiment of the disclosure, the operations of the wireless node 1n-01 may be applied to the retransmission procedure based on a PDCP status report, in which data loss is recovered.

PDCP layer-based retransmission and PDCP status report configuration and transmission methods, according to an embodiment of the disclosure may be applied not only to an AM bearer, but also to a UM bearer.

According to an embodiment of the disclosure, the PDCP layer may drive a PDCP reordering timer, wherein the PDCP reordering timer may be driven when a PDCP sequence number gap is generated based on PDCP sequence numbers in a reception PDCP layer, and when data corresponding to the PDCP sequence number gap is not received until the PDCP reordering timer expires, data is transmitted to an upper layer in an ascending order of the PDCP sequence numbers of count values, and a reception window is moved. Accordingly, when the data corresponding to the PDCP sequence number gap is received after the PDCP reordering timer expires, the data is not data in the receive window, and thus is discarded, and thus data loss occurs.

As such, a wireless node (for example, a reception PDCP layer of an uppermost wireless node) that transmitted an RRC message or a PDCP status report to trigger retransmission based on a PDCP layer (for example, retransmission based on a PDCP status report), according to an embodiment of the disclosure, may stop or initialize a PDCP ordering timer of the reception PDCP layer and not move a reception window until retransmitted data is received, so as to normally receive the retransmitted data in the reception window. For example, such operations may be performed when retransmission based on a PDCP status report is triggered via an RRC message.

Hereinafter, methods to which the embodiments of the disclosure may be expanded and applied to prevent data loss that may occur when a UE performs handover in a next-generation mobile communication system supporting IAB network will be described.

When a UE verifies successful data transmission (ACK) through an RLC status report from an accessed wireless node, the UE does not retransmit data whose successful transmission is verified to a newly accessed wireless node during handover. However, when a previous accessed wireless node is unable to successfully transmit the data to an uppermost wireless node due to congestion or a wireless link failure, data loss occurrs.

Accordingly, when instructing handover to the UE, a base station (or the uppermost wireless node or a wireless node) may perform the embodiments of the disclosure described with reference to FIGS. 1J and 1K to prevent data loss via retransmission based on a PDCP status report.

As another method, according to an embodiment of the disclosure, the base station (or the wireless node) may instruct to perform the retransmission based on a PDCP status report when instructing handover to the UE. In other words, data whose successful transmission is confirmed (ACK) (for example, a PDCP SDU or a PDCP PDU) may be discarded and data whose successful transmission is not confirmed (NACK) may be retransmitted in the PDCP status report.

A PDCP reestablishment procedure according to an embodiment of the disclosure is as follows.
- When retransmission based on a PDCP status report is not instructed, all pieces of data (or PDCP SDUs) are transmitted or retransmitted from first data (for example, a PDCP SDU) whose successful transmission is not confirmed from lower layers with respect to AM DRB in an ascending order of count values set before PDCP reestablishment. In particular, such a procedure may be performed as follows.
   ∘ When a header compression procedure is set, header compression is performed on data (or **PDCP SDU)** to be transmitted or retransmitted.
   ∘ When integrity protection is set, the integrity protection is performed and encoding is performed.
   ∘ A PDCP header and data is transmitted to a lower layer as a PDCP PDU.
- When retransmission based on a PDCP status report is instructed, pieces of data whose successful transmission is confirmed (ACK) in a received PDCP status report with respect to AM DRB (for example, PDCP SDUs or PDCP PDUs) are discarded, data whose successful transmission is not confirmed (NACK) is retransmitted, and pieces of data (or PDCP SDUs) are transmitted or retransmitted in an ascending order of count values set before PDCP reestablishment. In particular, such a procedure may be performed as follows.
   ∘ When a header compression procedure is set, header compression is performed on data (or PDCP SDU) to be transmitted or retransmitted.
   ∘ When integrity protection is set, the integrity protection is performed and encoding is performed.
   ∘ A PDCP header and data is transmitted to a lower layer as a PDCP PDU.

Data loss may be prevented when a base station instructs the PDCP reestablishment procedure according to the embodiment of the disclosure, when a next-generation mobile communication system supporting IAB network instructs handover.

Also, in the IAB network described in the disclosure, wireless nodes read headers of pieces of RLC data when receiving, transmitting, and delivering data, and when the data to be transmitted is an RLC status report, do not apply a split operation, thereby preventing a portion of the RLC status report from being lost or received late. In other words, the wireless node may prioritize the RLC status report and adds the RLC status report to transmission resources, thereby preventing the RLC status report from being lost.

The above embodiments of the disclosure may be performed by a UE, or may be performed by a wireless node, an intermediate wireless node, or an uppermost wireless node. When the embodiments of the disclosure are performed by the UE, a wireless node accessed by the UE may trigger the embodiments of the disclosure, and when the embodiments of the disclosure are performed by a child IAB node, a parent IAB node accessed y the child IAB node may trigger the embodiments of the disclosure.

FIG. 1O is a diagram of a structure of a UE or a wireless node, according to an embodiment of the disclosure. Referring to FIG. 1O, the UE includes a radio frequency (RF) processor 1o-10, a baseband processor 1o-20, a storage 1o-30, and a controller 1o-40.

The RF processor 1o-10 may perform functions for transmitting and receiving signals through radio channels, e.g., signal band conversion and amplification. That is, the RF processor 1o-10 up-converts a baseband signal provided from the baseband processor 1o-20, to a RF band signal and transmit the RF band signal through an antenna, and down-converts a RF band signal received through an antenna, to a baseband signal. For example, the RF processor 1o-10 may include a transmit filter, a receive filter, an amplifier, a mixer, an oscillator, a digital-to-analog convertor (DAC), and an analog-to-digital convertor (ADC). Although only a single antenna is illustrated in FIG. 1O, the UE may include multiple antennas. The RF processor 1o-10 may include a plurality of RF chains. The RF processor 1o-10 may perform beamforming. For beamforming, the RF processor 1o-10 may adjust phases and amplitudes of signals transmitted or received through multiple antennas or antenna elements. The RF processor 1o-10 may perform multiple input multiple output (MIMO) and may receive data of multiple layers in the MIMO operation. The RF processor 1o-10 may perform received beam sweeping by appropriately configuring multiple antennas or antenna elements, or adjust a direction and a beam width of the received beam to coordinate with a transmit beam, under the control of the controller 1o-40.

The baseband processor 1o-20 may convert between a baseband signal and a bitstream based on PHY layer specifications of a system. For example, for data transmission, the baseband processor 1o-20 may generate complex symbols by encoding and modulating a transmit bitstream. For data reception, the baseband processor 1o-20 may reconstruct a received bitstream by demodulating and decoding a baseband signal provided from the RF processor 1o-10. For example, according to an OFDM scheme, for data transmission, the baseband processor 1o-20 generates complex symbols by encoding and modulating a transmit bitstream, maps the complex symbols to subcarriers, and then configures OFDM symbols by performing inverse fast Fourier transformation (IFFT) and cyclic prefix (CP) insertion. For data reception, the baseband processor 1o-20 may split a baseband signal provided from the RF processor 1o-10, in OFDM symbol units, reconstruct signals mapped to subcarriers by performing fast Fourier transformation (FFT), and then reconstruct a received bitstream by demodulating and decoding the signals.

The baseband processor 1o-20 and the RF processor 1o-10 transmit and receive signals as described above. As such, each of the baseband processor 1o-20 and the RF processor 1o-10 may also be called a transmitter, a receiver, a transceiver, or a communicator. At least one of the baseband processor 1o-20 or the RF processor 1o-10 may include multiple communication modules to support multiple different radio access technologies. Also, at least one of the baseband processor 1o-20 or the RF processor 1o-10 may include multiple communication modules to process signals of different frequency bands. For example, the different radio access technologies may include an LTE network, NR network, etc. The different frequency bands may include a super high frequency (SHF) (e.g., 2.5 GHz and 2 GHz) band and a mmWave (e.g., 60 GHz) band. The UE may transmit and receive signals with a base station by using the baseband processor 1o-20 and the RF processor 1o-10 may as described above. Here, the signal may include control information and data.

The storage 1o-30 may store data for operation of the UE described above, e.g., basic programs, application programs, and configuration information. The storage 1o-30 may provide the stored data upon request by the controller 1o-40. The storage 1o-30 may be configured in storage medium, such as ROM, RAM, a hard disk, CD-ROM, or DVD, or a combination thereof. Also, the storage 1o-30 may be configured in a plurality of memories. According to an embodiment of the disclosure, the storage 1o-30 may store programs for supporting beam-based collaborative communication.

The controller 1o-40 may control overall operations of the UE. For example, the controller 1o-40 may transmit and receive signals through the baseband processor 1o-20 and the RF processor 1o-10. The controller 1o-40 may record and read data on and from the storage 1o-30. In this regard, the controller 1o-40 may include at least one processor. For example, the controller 1o-40 may include a communication processor (CP) for controlling communications and an application processor (AP) for controlling an upper layer such as an application program.

According to an embodiment of the disclosure, the controller 1o-40 includes a multiconnection processor 1o-42 configured to perform processing to operate in a multi-connection mode. For example, the controller 1o-40 may control the UE of FIG. 1O to perform a procedure of operations of the UE.

FIG. 1P is a block diagram of a transmission/reception point (TRP), a base station, or a wireless node in a wireless communication system to which an embodiment of the disclosure is applied. Referring to FIG. 1P, a base station may include an RF processor 1p-10, a baseband processor 1p-20, a communicator 1p-30, a storage 1p-40, and a controller 1p-50.

The RF processor 1p-10 may perform functions for transmitting and receiving signals through radio channels, e.g., signal band conversion and amplification. That is, the RF processor 1p-10 up-converts a baseband signal provided from the baseband processor 1p-20, to a RF band signal and transmit the RF band signal through an antenna, and down-converts a RF band signal received through an antenna, to a baseband signal. For example, the RF processor 1p-10 may include a transmit filter, a receive filter, an amplifier, a mixer, an oscillator, a DAC, and an ADC. Although only a single antenna is illustrated in FIG. 1P, the base station may include multiple antennas. The RF processor 1p-10 may include a plurality of RF chains. In addition, the RF processor 1p-10 may perform beamforming. For beamforming, the RF processor 11-10 may adjust phases and amplitudes of signals transmitted or received through multiple antennas or antenna elements. The RF processor 1p-10 may perform a downward MIMO operation by transmitting at least one layer.

The baseband processor 1p-20 may convert between a baseband signal and a bitstream based on physical layer specifications of a first radio access technology. For example, for data transmission, the baseband processor 1p-20 may generate complex symbols by encoding and modulating a transmit bitstream. For data reception, the baseband processor 1p-20 may reconstruct a received bitstream by demodulating and decoding a baseband signal provided from the RF processor 1p-10. For example, according to an OFDM scheme, for data transmission, the baseband processor 1p-20 generates complex symbols by encoding and modulating a transmit bitstream, maps the complex symbols to subcarriers, and then configures OFDM symbols by performing IFFT and CP insertion. For data reception, the baseband processor 1p-20 may split a baseband signal provided from the RF processor 1p-10, in OFDM symbol units, reconstruct signals mapped to subcarriers by performing FFT, and then reconstruct a received bitstream by demodulating and decoding the signals. The baseband processor 1p-20 and the RF processor 1p-10 may transmit and receive signals as described above. As such, each of the baseband processor 1p-20 and the RF processor 1p-10 may also be called a transmitter, a receiver, a transceiver, a communicator, or a wireless communicator.

The communicator 1p-30 may provide an interface for communicating with other nodes in a network. The base station may transmit and receive signals with a UE by using the baseband processor 1p-20 and the RF processor 1p-10. Here, the signal may include control information and data.

The storage 1p-40 may store data for operation of the base station described above, e.g., basic programs, application programs, and configuration information. In particular, the storage 1p-40 may store information about bearers allocated for a connected UE, a measurement report transmitted from the connected UE, etc. The storage 1p-40 may store criteria information used to determine whether to provide or release multiconnection to or from the UE. The storage 1p-40 may provide the stored data upon request by the controller 1p-50. The storage 1p-40 may be configured in storage medium, such as ROM, RAM, a hard disk, CD-ROM, or DVD, or a combination thereof. Also, the storage 1p-40 may be configured in a plurality of memories. According to an embodiment of the disclosure, the storage 1p-40 may store programs for supporting beam-based collaborative communication.

The controller 1p-50 may control overall operations of the base station. For example, the controller 1p-50 may transmit and receive signals through the baseband processor 1p-20 and the RF processor 1p-10 or through the communicator 1p-30. The controller 1p-50 may record and read data on and from the storage 1p-40. In this regard, the controller 1p-50 may include at least one processor. According to an embodiment of the disclosure, the controller 1p-50 includes a multiconnection processor 1p-52 configured to perform processing to operate in a multi-connection mode.

In a next-generation mobile communication system, a base station having various structures may be realized and various wireless connection technologies may be present. In this case, because each wireless node (IAB node or IAB donor) transmit data in a network structure supporting wireless backhaul or IAB, end wireless nodes (for example, a UE, an IAB node, or an uppermost wireless node (IAB donor)) use a method of predicting transmission delay between ends, considering the number of wireless links present between the end wireless nodes. For example, when setting a PDCP reordering timer or an RLC reassembling timer, the number of wireless links, i.e., a hop count, between end wireless nodes may be considered.

According to an embodiment of the disclosure, a method of calculating a hop count between end wireless nodes will be described, and in addition, a method of reflecting transmission delay considering the hop count and correctly adjusting a timer value of a receiver will be described.

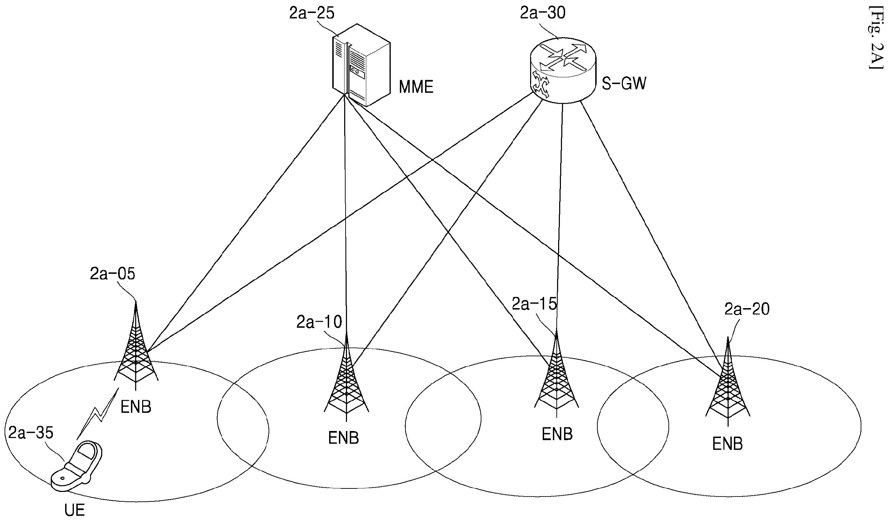

FIG. 2A is a diagram showing a structure of an LTE system to which an embodiment of the disclosure is applied.

Referring to FIG. 2A, a RAN of the LTE system may includes eNBs or NBs 2a-05, 2a-10, 2a-15, and 2a-20, a MME2 2a-25, and an S-GW 2a-30. A UE or terminal 2a-35 may access an external network via the eNB 2a-05, 2a-10, 2a-15, or 2a-20 and the S-GW 2a-30.

In FIG. 2A, the eNB 2a-05, 2a-10, 2a-15, or 2a-20 may correspond to an NB of a UMTS. Each eNB 2a-05, 2a-10, 2a-15, or 2a-20 may be connected to the UE 2a-35 through radio channels and may perform complex functions compared to the existing NB. Because all user traffic including real-time services such as VoIP is serviced through shared channels in the LTE system, an entity for collating buffer status information of UEs, available transmission power status information, channel state information, etc. and performing scheduling is used and each of the eNBs 2a-05, 2a-10, 2a-15, and 2a-20 serves as such an entity. A single eNB generally controls multiple cells. For example, the LTE system may use radio access technology such as OFDM at a bandwidth of 20 MHz to achieve a data rate of 100 Mbps. The LTE system may also use AMC to determine a modulation scheme and a channel coding rate in accordance with a channel state of the UE 2a-35. The S-GW 2a-30 is an entity for providing data bearers and may configure or release the data bearers under the control of the MME 2a-25. The MME 2a-25 is an entity for performing a mobility management function and various control functions for the UE 2a-35 and may be connected to the eNBs 2a-05, 2a-10, 2a-15, and 2a-20.

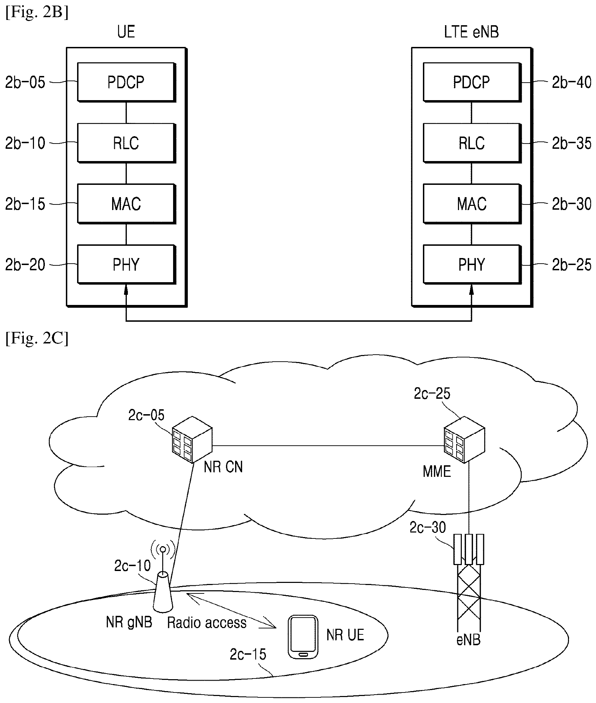

FIG. 2B is a diagram of a radio protocol architecture in an LTE system to which an embodiment of the disclosure is applied.

Referring to FIG. 2B, the radio protocol architecture of the LTE system may include PDCP layers 2b-05 and 2b-40, RLC layers 2b-10 and 2b-35, and MAC layers 2b-15 and 2b-30 respectively for a UE and an eNB. The PDCP layer 2b-05 or 2b-40 is in charge of IP header compression/decompression, etc. Main functions of the PDCP layer 2b-05 or 2b-40 are summarized below.
- Header compression and decompression: ROHC only
- Transfer of user data
- In-sequence delivery of upper layer PDUs at PDCP re-establishment procedure for RLC AM
- For split bearers in DC (only support for RLC AM): PDCP PDU routing for transmission and PDCP PDU reordering for reception
- Duplicate detection of lower layer SDUs at PDCP re-establishment procedure for RLC AM
- Retransmission of PDCP SDUs at handover and, for split bearers in DC, of PDCP PDUs at PDCP data-recovery procedure, for RLC AM
- Ciphering and deciphering
- Timer-based SDU discard in uplink

The RLC layer 2b-10 or 2b-35 may perform, for example, an ARQ operation by reconfiguring PDCP PDUs to appropriate sizes. Main functions of the RLC layer 2b-10 or 2b-35 are summarized below.
- Transfer of upper layer PDUs
- Error Correction through ARQ (only for AM data transfer)
- Concatenation, segmentation and reassembly of RLC SDUs (only for UM and AM data transfer)
- Re-segmentation of RLC data PDUs (only for AM data transfer)
- Reordering of RLC data PDUs (only for UM and AM data transfer)
- Duplicate detection (only for UM and AM data transfer)
- Protocol error detection (only for AM data transfer)
- RLC SDU discard (only for UM and AM data transfer)
- RLC re-establishment

The MAC layer 2b-15 or 2b-30 is connected to multiple RLC layers configured for a single UE and may multiplex RLC PDUs into a MAC PDU and demultiplex the RLC PDUs from the MAC PDU. Main functions of the MAC layer 2b-15 or 2b-30 are summarized below.
- Mapping between logical channels and transport channels
- Multiplexing/demultiplexing of MAC SDUs belonging to one or different logical channels into/from TB delivered to/from the physical layer on transport channels
- Scheduling information reporting
- Error correction through HARQ
- Priority handling between logical channels of one UE
- Priority handling between UEs by means of dynamic scheduling
- MBMS service identification
- Transport format selection
- Padding

A PHY layer 2b-20 or 2b-25 may channel-code and modulate upper layer data into OFDM symbols and transmit the OFDM symbols through a radio channel, or demodulate OFDM symbols received through a radio channel and channel-decode and deliver the OFDM symbols to an upper layer.

FIG. 2C is a diagram of a structure of a next-generation mobile communication system, to which an embodiment of the disclosure is applied.

Referring to FIG. 2C, a RAN of the next-generation mobile communication system (e.g., a NR or 5G system) may include an NR NB or NR gNB 2c-10 and an NR CN or an NR CN 2c-05. An NR UE or UE 2c-15 may access an external network via the NR gNB 2c-10 and the NR CN 2c-05.

In FIG. 2C, the NR gNB 2c-10 may correspond to an eNB of an existing LTE system. The NR gNB 2c-10 is connected to the NR UE 2c-15 through radio channels and may provide superior services compared to an existing NB. Because all user traffic is serviced through shared channels in the next-generation mobile communication system, an entity for collating buffer status information of UEs, available transmission power status information, channel state information, etc. and performing scheduling is used and such operations may be performed by the NR gNB 2c-10. A single NR gNB 2c-10 may control multiple cells. In the next-generation mobile communication system, a bandwidth greater than the maximum bandwidth of LTE may be given to achieve a current ultrahigh data rate, and beamforming technology may be added to radio access technology such as OFDM. The LTE system may also use AMC to determine a modulation scheme and a channel coding rate in accordance with a channel state of the NR UE 2c-15. The NR CN 2c-05 may perform functions such as mobility support, bearer configuration, QoS configuration, and the like. The NR CN 2c-05 is an entity for performing a mobility management function and various control functions for the NR UE 2c-15 and may be connected to multiple NR gNBs. The next generation mobile communication system may cooperate with the existing LTE system, and the NR CN 2c-05 may be connected to an MME 2c-25 through a network interface. The MME 2c-25 may be connected to an existing eNB 2c-30.

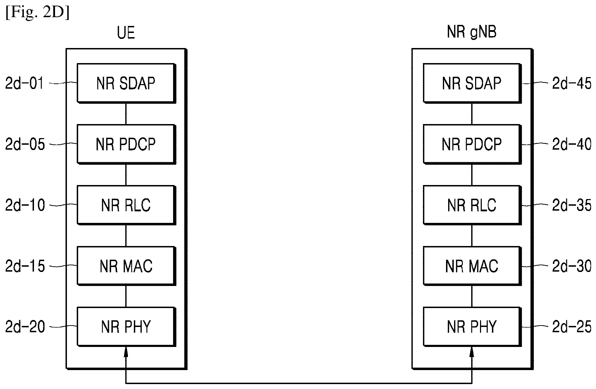

FIG. 2D is a diagram of a radio protocol architecture of a next-generation mobile communication system to which an embodiment of the disclosure is applied.

Referring to FIG. 2D, the radio protocol architecture of the next-generation mobile communication system may include NR SDAP layers 2d-01 and 2d-45, NR PDCP layers 2d-05 and 2d-40, NR RLC layers 2d-10 and 2d-35, NR MAC layers 2d-15 and 2d-30, and NR PHY layers 2d-20 and 2d-25 respectively for a UE and a NR gNB. Main functions of the NR SDAP layers 2d-01 and 2d-45 may include some of the following functions.
- Transfer of user plane data
- Mapping between a QoS flow and a data radio bearer (DRB) for both DL and UL
- Marking QoS flow ID in both DL and UL packets
- Reflective QoS flow to DRB mapping for the UL SDAP PDUs

With respect to the NR SDAP layer 2d-01, the UE may receive, via an RRC message, setting on whether to use a header of the NR SDAP layer 2d-01 or whether to use a function of the NR SDAP layer 2d-01 for each NR PDCP layer 2d-05, for each bearer, or for each logical channel, and when an SDAP header is set, the UE may instruct a NAS reflective QoS 1-bit indicator and an AS reflective QoS 1-bit indicator of the SDAP header to update or reset mapping information regarding the data bearer and the QoS flow of UL and DL. The SDAP header may include QoS flow ID indicating QoS. The QoS information may be used as data processing priority information, scheduling information, etc. for supporting a smooth service.

Meanwhile, main functions of the NR PDCP layer 2d-05 or 2d-40 may include some of the following functions.
- Header compression and decompression: ROHC only
- Transfer of user data
- In-sequence delivery of upper layer PDUs
- Out-of-sequence delivery of upper layer PDUs
- PDCP PDU reordering for reception
- Duplicate detection of lower layer SDUs
- Retransmission of PDCP SDUs
- Ciphering and deciphering
- Timer-based SDU discard in uplink

Here, the reordering of the NR PDCP layer 2d-05 or 2d-40 may include at least one of a function of reordering PDCP PDUs received from a lower layer, based on a PDCP sequence number (SN) or a function of delivering data to an upper layer in an order. Alternatively, the reordering of the NR PDCP layer 2d-05 or 2d-40 may include at least one of a function of immediately delivering the reordered data without considering an order, a function of recording missing PDCP PDUs by reordering the PDCP PDUs, a function of reporting status information of the missing PDCP PDUs to a transmitter, or a function of requesting to retransmit the missing PDCP PDUs.

Main functions of the NR RLC layer 2d-10 or 2d-35 may include at least some of the following functions.
- Transfer of upper layer PDUs
- In-sequence delivery of upper layer PDUs
- Out-of-sequence delivery of upper layer PDUs
- Error correction through ARQ
- Concatenation, segmentation and reassembly of RLC SDUs
- Re-segmentation of RLC data PDUs
- Reordering of RLC data PDUs
- Duplicate detection
- Protocol error detection
- RLC SDU discard
- RLC re-establishment

Here, the in-sequence delivery function of the NR RLC layer 2d-10 or 2d-35 may include a function of delivering RLC SDUs received from a lower layer to an upper layer in an order. The in-sequence delivery function of the NR RLC layer 2d-10 or 2d-35 may include at least one of a function of reassembling multiple RLC SDUs segmented from a RLC SDU and delivering the RLC SDU when the segmented RLC SDUs are received, a function of reordering received RLC PDUs, based ona RLC SN or PDCP SN, a function of recording missing RLC PDUs by reordering the RLC PDUs, a function of reporting status information of the missing RLC PDUs to a transmitter, a function of requesting to retransmit the missing RLC PDUs, a function of delivering only RLC SDUs previous to a missing RLC SDU, to the upper entity in order, when the missing RLC SDU exists, a function of delivering all RLC SDUs received before a timer is started, to the upper layer in order, although a missing RLC SDU exists, when a certain timer is expired, or a function of delivering all RLC SDUs received up to a current time, to the upper layer in order, although a missing RLC SDU exists, when a certain timer is expired.

Also, the out-of-sequence delivery function of the NR RLC layer 2d-10 or 2d-35 may process the RLC PDUs in order of reception (in order of arrival regardless of sequence numbers) and deliver the RLC PDUs to a PDCP layer out of order (out-of sequence delivery), and reassemble segments received or stored in a buffer, into a whole RLC PDU and process and deliver the RLC PDU to the PDCP layer. The NR RLC layer 2d-10 or 2d-35 may not have a concatenation function, and the concatenation function may be performed by the NR MAC layer 2d-15 or 2d-30 or be replaced with a multiplexing function of the NR MAC layer 2d-15 or 2d-30.

The out-of-sequence delivery function of the NR RLC layer 2d-10 or 2d-35 may include a function of delivering RLC SDUs received from a lower layer to an upper layer out of order. The out-of-sequence delivery function of the NR RLC layer 1d-10 or 1d-35 may include at least one of a function of reassembling multiple RLC SDUs segmented from a RLC SDU and delivering the RLC SDU when the segmented RLC SDUs are received or a function of storing RLC SNs or PDCP SNs of received RLC PDUs and recording missing RLC PDUs by ordering the RLC PDUs.

The NR MAC layer 2d-15 or 2d-30 may be connected to multiple NR RLC layers configured for a single UE, and main functions of the NR MAC layer 2d-15 or 2d-30 may include at least some of the following functions.
- Mapping between logical channels and transport channels
- Multiplexing/demultiplexing of MAC SDUs
- Scheduling information reporting
- Error correction through HARQ
- Priority handling between logical channels of one UE
- Priority handling between UEs by means of dynamic scheduling
- MBMS service identification
- Transport format selection
- Padding

The NR PHY layer 2d-20 or 2d-25 may channel-code and modulate upper layer data into OFDM symbols and transmit the OFDM symbols through a radio channel or may demodulate OFDM symbols received through a radio channel and channel-decode and deliver the OFDM symbols to an upper layer.

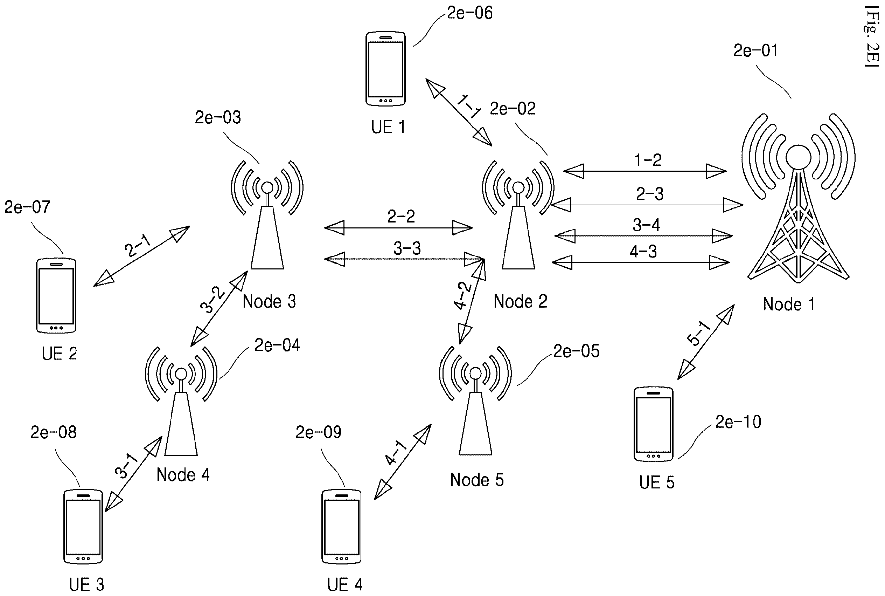

FIG. 2E is a diagram of a network structure of a next-generation mobile communication system to which an embodiment of the disclosure is applied. In particular, FIG. 2E is a diagram showing a network structure supporting wireless backhaul in the next-generation mobile communication system to which an embodiment of the disclosure is applied.

Referring to FIG. 2E, a wireless backhaul network or an IAB network may include a plurality of wireless nodes (for example, IAB nodes or IAB donors). In the IAB network, a UE may establish RRC connection by accessing any wireless node, and transmit or receive data. Also, each wireless node may be a child IAB node and have another wireless node as a parent IAB node, and establish RRC connection with a parent IAB node to transmit or receive data.

According to an embodiment of the disclosure, a child IAB node may denote a UE or an IAB node, and may denote a wireless node that receives, from a parent IAB node (or an IAB donor), and applies wireless connection establishment configuration, RRC configuration information, bearer configuration information, and configuration information of each PDCP, RLC, MAC, or PHY layer.

According to an embodiment of the disclosure, a parent IAB node may denote an IAB node or an IAB donor. The parent IAB node may denote a wireless node that configures, to the child IAB node, the wireless connection establishment configuration, the RRC configuration information, the bearer configuration information, and the configuration information of each PDCP, RLC, MAC, or PHY layer.

Referring to FIG. 2E, the IAB donor may denote a wireless node that is connected to a core network and transmits data to an upper layer, such as a node 1 2e-01. Also, the IAB node may denote any one of nodes 2 through 5 2e-02 through 2e-05 that assists delivery of data between a UE and an IAB donor end.

UEs 1 through 4 2e-06 through 2e-09 may establish RRC connection by accessing wireless nodes (for example, IAB nodes or IAB donors), and transmit or receive data. For example, the UE 2 2e-07 may establish RRC connection by accessing the node 3 2e-032 and transmit or receive data. The node 3 2e-03 may receive or transmit data received from the UE 2 2e-07 or data to be transmitted to the UE 2 2e-07 from or to the node 2 2e-02 that is a parent IAB node. Also, the node 2 2e-02 may receive or transmit data received from the node 3 2e-03 or data to be transmitted to the node 3 2e-03 from or to the node 1 2e-01 that is a parent IAB node.

The UE 1 2e-06 may establish RRC connection by accessing the node 2 2e-02 and transmit or receive data. The node 2 2e-02 may receive or transmit data received from the UE 1 2e-06 or data to be transmitted to the UE 1 2e-06 from or to the node 1 2e-01 that is a parent IAB node. UE 5 1e-10 may directly establish RRC connection by accessing the node 1 1e-01 that is a parent IAB node and transmit or receive data

As described above with reference to FIG. 2E, according to an embodiment of the disclosure, a UE establishes RRC connection by accessing a wireless node having best signal strength, and transmit or receive data. Also, according to an embodiment of the disclosure, an IAB network may support delivery of multi-hop data through intermediate wireless nodes such that a UE delivers data to a wireless node connected to a core network and receives data from the wireless network connected to the core network.

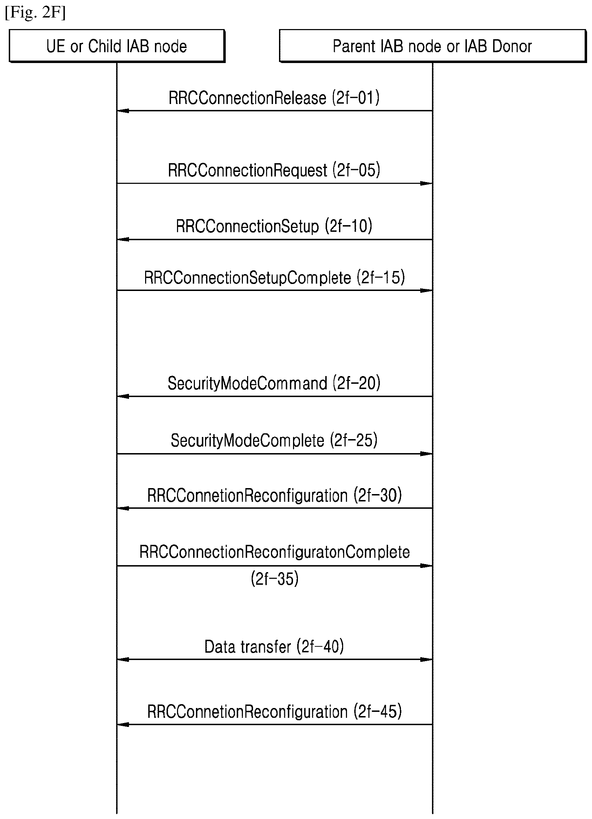

FIG. 2F is a diagram for describing a method, performed by a UE, of performing RRC connection establishment in a wireless backhaul network or an IAB network of a next-generation communication system, according to an embodiment of the disclosure. In particular, FIG. 2F is a diagram for describing a method of performing RRC connection establishment when a UE establishes connection with a wireless node (IAB node or IAB donor) or when a child IAB node establishes connection with a parent IAB node (IAB node or IAB donor), in the IAB network of a next-generation mobile communication system according to an embodiment of the disclosure.

Referring to FIG. 2F, in operation 2f-01, when a UE or a child IAB node does not transmit or receive data due to a particular reason or for a certain period of time in an RRC connection mode, a parent IAB node may transmit an RRCConnectionRelease message to the UE or the child IAB node such that the UE or the child IAB node switch to an RRC idle mode or an RRC inactive mode. According to an embodiment of the disclosure, when data to be transmitted is generated, the UE or the child IAB node in which current connection is not established (hereinafter, referred to as an idle mode UE) may perform an RRC connection establishment process with the parent IAB node when in the RRC idle mode and perform an RRC connection resume process with the parent IAB node when in the RRC inactive mode.

In operation 2f-05, the UE or the child IAB node may establish reverse transmission synchronization with the parent IAB node through a random access process, and transmit an RRCConnectionRequest message (or an RRCResumeRequest message) to the parent IAB node. The RRCConnectionRequest message (or the RRCResumeRequest message) may include an identifier of the UE or the child IAB node, establishmentCause, and the like.

In operation 2f-10, the parent IAB node may transmit an RRCConnectionSetup message (or an RRCResume message) such that the UE or the child IAB node establishes RRC connection The RRCConnectionSetup message may include at least one of configuration information for each logical channel, configuration information for each bearer, configuration information of a PDCP layer, configuration information of an RLC layer, or configuration information of an MAC layer.

The RRCConnectionSetup message (or the RRCResume message) may include an indicator indicating, when the child IAB node performs handover, whether to retransmit pre-configured RRC messages to a target parent IAB node or cell. When the UE or the child IAB node performs handover, the parent IAB node may use such an indicator to configure whether the pre-configured RRC messages are to be retransmitted to the target parent IAB node or cell. For example, the parent IAB node may instruct the RRC messages that were transmitted within a few seconds before a handover indication message is received, before handover is performed, or before the RRC message is received, to be retransmitted. Also, the parent IAB node may instruct an indicator for each pre-configured RRC message. In other words, multiple indicators may indicate retransmission of each RRC message. Alternatively, the parent IAB node may instruct the retransmission in a form of a bitmap instructing each RRC message.

The RRCConnectionSetup message (or the RRCResume message) may add an indicator indicating a PDCP data recovery procedure to the PDCP configuration information. Also, the RRCConnectionSetup message may add an indicator indicating whether to perform a PDCP data recovery procedure with respect to a signaling radio bearer (SRB) or a data radio bearer (DRB) to the bearer configuration information. Also, the RRCConnectionSetup message may add an indicator indicating whether to discard data remaining in a PDCP layer with respect to the SRB or the DRB to the bearer configuration information.

The RRCConnectionSetup message (or the RRCResume message) may add an indicator indicating whether to perform accumulative retransmission or selective retransmission with respect to AM DRB while PDCP reestablishment procedure is performed, to the bearer configuration information.

The RRCConnectionSetup message (or the RRCResume message) may include an indicator indicating which ARQ function is to be used by the child IAB node. The parent IAB node may instruct whether to use a hop-by-hop ARQ function or an end-to-end ARQ function by using the indicator of the RRCConnectionSetup message. When the end-to-end ARQ function is set, the parent IAB node may instruct whether to perform a function of transmitting received RLC layer data intact or after split, or an ARQ function as an end of a child node. Also, the parent IAB node may instruct which ARQ function is to be used as a default function, and when an ARQ function is not configured in the above message, the parent IAB node may pre-configure to use one of the hop-by-hop ARQ function and the end-to-end ARQ function as the default function. The parent IAB node may also instruct the child IAB node whether to use a data split function, by using the RRCConnectionSetup message, and may instruct activation (or availability) of each function of an RLC layer described with reference to FIG. 1B or 1D.

The RRCConnectionSetup message (or the RRCResume message) may include an indicator indicating whether to use a data concatenation function in an adaptation layer. Also, the RRCConnectionSetup message may include an indicator indicating whether to configure a header of the adaptation layer, and may assign a type of the header. For example, the parent IAB node may use the RRCConnectionSetup message to configure which information with respect to a UE identifier, a UE bearer identifier, a QoS identifier, a wireless node identifier, a wireless node address, or QoS information is to be included in the header. According to an embodiment of the disclosure, the parent IAB node may configure to omit the header to reduce overhead.

The parent IAB node may configure an RLC channel to be used between a transmission adaptation layer and a reception adaptation layer, between a child IAB node and a parent IAB node, or between a UE and a wireless node, by using the RRCConnectionSetup message (or the RRCResume message). In particular, the RRCConnectionSetup message may include the number of usable RLC channels, a usable RLC channel identifier, or mapping information of data mapped to an RLC channel (for example, a UE identifier, a UE bearer identifier, QoS information, or QoS identifier mapping information). The RLC channel may be defined as a channel that transmits data according to QoS by grouping data of multiple UEs, based on the QoS information, and may be defined as a channel that transmits data by grouping data for each UE.

The RRCConnectionSetup message (or the RRCResume message) may include an indicator indicating whether to perform retransmission based on a PDCP status report in configuration information (pdcp-config) of the PDPC layer. The parent IAB node may instruct the retransmission based on a PDCP status report to be performed by using the indicator of the RRCConnectionSetup message. For example, when a value of the indicator is set to 0, data corresponding to NACK information of the PDCP status report may be checked and data corresponding to ACK information may be discarded even when the PDCP status report is received. On the other hand, when the value of the indicator is set to 1, the data corresponding to the ACK information of the PDCP status report may be discarded and the data corresponding to NACK information may be retransmitted when the PDCP status report is received.

In order for the RRCConnectionSetup message (or the RRCResume message) to indicate retransmission based on the PDCP status report to be performed, the configuration information (pdcp-config) of the PDCP layer may include a PDCP data recovery indicator (recoverPDCP). The parent IAB node may configure the UE or the child IAB node to trigger a PDCP data recovery procedure and transmit the PDCP status report, by using the indicator. Also, while the retransmission is performed during the PDCP data recovery procedure, the parent IAB node may perform selective retransmission based on the PDCP status report instead of successful transmission of a lower layer (for example, the RLC layer). In other words, retransmission may be performed only with respect to data indicated as NACK data in which successful transmission is not confirmed in the PDCP status report.

The RRCConnectionSetup message (or the RRCResume message) may include an indicator indicating to periodically transmit the PDCP status report such that the PDCP status report is periodically transmitted in the configuration information (pdcp-config) of the PDCP layer. Also, a period or a timer value may be set by using the RRCConnectionSetup message. When the indicator and the configuration are received, the UE or the child IAB node may triger and transmit the PDCP status report according to the period or whenever the timer value expires.

The RRCConnectionSetup message (or the RRCResume message) may include an indicator indicating to transmit the PDCP status report such that the PDCP status report is triggered and transmitted in the configuration information (pdcp-config) of the PDCP layer. Also, a timer value may be set by using the RRCConnectionSetup message. When the indicator and the configuration are received, the PDCP layer of the UE or the child IAB node may trigger a timer having the timer value whenever a gap is generated in a PDCP sequence number, and when the gap of the PDCP sequence number is not filled or data corresponding to the PDCP sequence number assumed to be missing is not received until the timer expires, the PDCP layer may trigger the PDCP status report when the timer expires, and configure and transmit the PDCP status report. When the gap of the PDCP sequence number is filled or the data corresponding to the PDCP sequence number assumed to be missing is received before the timer expires, the timer may be stopped and initialized. Here, the timer may be a PDCP reordering timer or a new timer having a value smaller or greater than that of the PDCP reordering timer may be defined.

A PDCP status report prohibit timer may be configured to prevent frequent trigerring of the PDCP status report in the configuration information (pdcp-config) of the PDCP layer, by using the RRCConnectionSetup message (or the RRCResume message). When the PDCP status report prohibit timer is configured, the UE or the child IAB node may trigger the PDCP status report, configure and transmit the PDCP status report, and trigger the PDCP status report prohibit timer. When the PDCP status report prohibit timer is being driven, the PDCP status report may not be additionally transmitted, and the PDCP status report may be transmitted after the PDCP status report prohibit timer expires.

Information about the parent IAB node or the child IAB node, such a congestion level useful to the wireless node, queuing delay, and one-hop air latency between wireless nodes, information about each hop, and the like may be transmitted by using the RRCConnectionSetup message (or a separate newly defined RRC message or the RRCResume message). Also, wireless hop count from a wireless node that received the RRCConnectionSetup message to an uppermost wireless node (IAB donor) may be indicated. A wireless node that received the wireless hop count via the RRC message may notify a following child node of the hop count after increasing the instructed hop count by 1.

In operation 2f-15, the UE or the child IAB node that established the RRC connection may transmit an RRCConnectionSetupComplete message (or an RRCResumeComplete message) to the parent IAB node.

The RRCConnectionSetupComplete message may include SERVICE REQUEST message that is a control message in which the UE or the child IAB node requests an AMF or an MME for bearer configuration for a certain service. The parent IAB node may transmit the SERVICE REQUEST message included in the RRCConnectionSetupComplete message to the AMF or the MME. The AMF or the MME may determine whether to provide a service requested by the UE or the child IAB node.

As a result of the determination, when the service requested by the UE or the child IAB node is to be provided, the AMF or MME may transmit an INITIAL CONTEXT SETUP REQUEST message to the parent IAB node. The INITIAL CONTEXT SETUP REQUEST message includes QoS information to be applied in configuring a DRB, security information (e.g., a security key, a security algorithm, or the like) to be applied to the DRB, or the like.

In operations 2f-20 through 2f-25, the parent IAB node may exchange a SecurityModeCommand message and a SecurityModeComplete message with the UE or the child IAB node to set security. In operation 2f-30, the parent IAB node may transmit an RRCConnectionReconfiguration message to the UE or the child IAB node when the security setting is completed.

The parent IAB node may set an indicator indicating, when the child IAB node performs handover, whether to retransmit pre-configured RRC messages to a target parent IAB node or cell, by using the RRCConnectionReconfiguration message. For example, the parent IAB node may instruct the RRC messages that were transmitted within a few seconds before a handover indication message is received, before handover is performed, or before the RRC message is received, to be retransmitted. Also, the indicator may be indicated for each pre-configured RRC message. In other words, multiple indicators may indicate retransmission of each RRC message. Alternatively, the indicator of the retransmission may be indicated in a form of a bitmap instructing each RRC message.

The RRCConnectionReconfiguration message may add an indicator indicating to perform the PDCP data recovery procedure to the PDCP configuration information. Also, the RRCConnectionReconfiguration message may add an indicator indicating whether to perform the PDCP data recovery procedure with respect to the SRB or the DRB to the bearer configuration information. Also, the RRCConnectionReconfiguration message may add an indicator indicating whether to discard data remaining in a PDCP layer with respect to the SRB or the DRB to the bearer configuration information.

The RRCConnectionReconfiguration message may add an indicator indicating whether to perform accumulative retransmission or selective retransmission with respect to AM DRB while PDCP reestablishment procedure is performed, to the bearer configuration information.

The RRCConnectionReconfiguration message may include an indicator indicating which ARQ function is to be used by the child IAB node, and whether to use a hop-by-hop ARQ function or an end-to-end ARQ function may be indicated by using the indicator. When the end-to-end ARQ function is set, the parent IAB node may instruct whether to perform a function of transmitting received RLC layer data intact or after split, or an ARQ function as an end of a child node. Also, the parent IAB node may indicate which ARQ function is to be used as a default function, and when an ARQ function is not configured in the RRCConnectionReconfiguration message, the parent IAB node may pre-determine to use one of the hop-by-hop ARQ function or the end-to-end ARQ function as the default function. The parent IAB node may also instruct the child IAB node whether to use a data split function, by using the RRCConnectionReconfiguration message, and may instruct activation (or availability) of each function of an RLC layer described with reference to FIG. 1B or 1D.

The RRCConnectionReconfiguration message may include an indicator indicating whether to use a data concatenation function in the adaptation layer. Also, the RRCConnectionReconfiguration message may include an indicator indicating whether to configure a header of the adaptation layer, and the parent IAB node may assign a type of the header. For example, the parent IAB node may configure which information among the UE identifier, the UE bearer identifier, the QoS identifier, the wireless node identifier, the wireless node address, and the QoS information is to be included in the header. The parent IAB node may configure to omit the header to reduce overhead.

The parent IAB node may configure the RLC channel to be used between the transmission adaptation layer and tje reception adaptation layer, between the child IAB node and the parent IAB node, or between the UE and the wireless node, by using the RRCConnectionReconfiguration message. In particular, the RRCConnectionReconfiguration message may include the number of usable RLC channels, a usable RLC channel identifier, or mapping information of data mapped to an RLC channel (for example, a UE identifier, a UE bearer identifier, QoS information, or QoS identifier mapping information). The RLC channel may be defined as a channel that transmits data according to QoS by grouping data of multiple UEs, based on the QoS information, and may be defined as a channel that transmits data by grouping data for each UE.

The RRCConnectionReconfiguration message may include an indicator indicating whether to perform retransmission based on a PDCP status report in configuration information (pdcp-config) of the PDPC layer. The parent IAB node may instruct the retransmission based on a PDCP status report to be performed by using the indicator of the RRCConnectionReconfiguration message. For example, when a value of the indicator is set to 0, data corresponding to NACK information of the PDCP status report may be checked and data corresponding to ACK information may be discarded even when the PDCP status report is received. On the other hand, when the value of the indicator is set to 1, the data corresponding to the ACK information of the PDCP status report may be discarded and the data corresponding to NACK information may be retransmitted when the PDCP status report is received.

In order for the RRCConnectionReconfiguration message to indicate retransmission based on the PDCP status report to be performed, the configuration information (pdcp-config) of the PDCP layer may include a PDCP data recovery indicator (recoverPDCP). The parent IAB node may configure the UE or the child IAB node to trigger a PDCP data recovery procedure and transmit the PDCP status report, by using the indicator. Also, while the retransmission is performed during the PDCP data recovery procedure, the parent IAB node may perform selective retransmission based on the PDCP status report instead of successful transmission of a lower layer (for example, the RLC layer). In other words, retransmission may be performed only with respect to data indicated as NACK data in which successful transmission is not confirmed in the PDCP status report.

The RRCConnectionReconfiguration message may include an indicator indicating to periodically transmit the PDCP status report such that the PDCP status report is periodically transmitted in the configuration information (pdcp-config) of the PDCP layer. Also, a period or a timer value may be set by using the RRCConnectionSetup message. When the indicator and the configuration are received, the UE or the child IAB node may triger and transmit the PDCP status report according to the period or whenever the timer value expires.

The RRCConnectionReconfiguration message may include an indicator indicating to transmit the PDCP status report such that the PDCP status report is triggered and transmitted in the configuration information (pdcp-config) of the PDCP layer. Also, a timer value may be set by using the RRCConnectionSetup message. When the indicator and the configuration are received, the PDCP layer of the UE or the child IAB node may trigger a timer having the timer value whenever a gap is generated in a PDCP sequence number, and when the gap of the PDCP sequence number is not filled or data corresponding to the PDCP sequence number assumed to be missing is not received until the timer expires, the PDCP layer may trigger the PDCP status report when the timer expires, and configure and transmit the PDCP status report. When the gap of the PDCP sequence number is filled or the data corresponding to the PDCP sequence number assumed to be missing is received before the timer expires, the timer may be stopped and initialized. Here, the timer may be a PDCP reordering timer or a new timer having a value smaller or greater than that of the PDCP reordering timer may be defined.

A PDCP status report prohibit timer may be configured to prevent frequent trigerring of the PDCP status report in the configuration information (pdcp-config) of the PDCP layer, by using the RRCConnectionReconfiguration message. When the PDCP status report prohibit timer is configured, the UE or the child IAB node may trigger the PDCP status report, configure and transmit the PDCP status report, and trigger the PDCP status report prohibit timer. When the PDCP status report prohibit timer is being driven, the PDCP status report may not be additionally transmitted, and the PDCP status report may be transmitted after the PDCP status report prohibit timer expires.

Information about the parent IAB node or the child IAB node, such a congestion level useful to the wireless node, queuing delay, and one-hop air latency between wireless nodes, information about each hop, and the like may be transmitted by using the RRCConnectionReconfiguration message (or a separate newly defined RRC message). Also, wireless hop count from a wireless node that received the RRCConnectionReconfiguration message to an uppermost wireless node (IAB donor) may be indicated. A wireless node that received the wireless hop count via the RRC message may notify a following child node of the hop count after increasing the instructed hop count by 1.

Also, the RRCConnectionReconfiguration message may include configuration information of DRB for processing user data. In operation 2f-35, the UE or the child IAB node may configure the DRB by applying the configuration information described above, and transmit an RCConnectionReconfigurationComplete message to the parent IAB node. The parent IAB node that completed DRB configuration with the UE or the child IAB node may transmit an INITIAL CONTEXT SETUP COMPLETE message to the AMF or the MME and complete the connection.

In operation 2f-40, when the above operations are app completed, the UE or the child IAB node may transmit or receive data to or from the parent IAB node through a core network. According to an embodiment of the disclosure, data transmission processes may largely include three steps of RRC connection establishment, security setting, and DRB configuration. In operation 2f-45, the parent IAB node may transmit an RRCConnectionReconfiguration message to the UE or the child IAB node so as to renew, add, or change configuration for a particular reason.

The parent IAB node may set an indicator indicating, when the child IAB node performs handover, whether to retransmit pre-configured RRC messages to a target parent IAB node or cell, by using the RRCConnectionReconfiguration message. For example, the parent IAB node may instruct the RRC messages that were transmitted within a few seconds before a handover indication message is received, before handover is performed, or before the RRC message is received, to be retransmitted. Also, the indicator may be indicated for each pre-configured RRC message. In other words, multiple indicators may indicate retransmission of each RRC message. Alternatively, the indicator of the retransmission may be indicated in a form of a bitmap instructing each RRC message.

The RRCConnectionReconfiguration message may add an indicator indicating to perform the PDCP data recovery procedure to the PDCP configuration information. Also, the RRCConnectionReconfiguration message may add an indicator indicating whether to perform the PDCP data recovery procedure with respect to the SRB or the DRB to the bearer configuration information. Also, the RRCConnectionReconfiguration message may add an indicator indicating whether to discard data remaining in a PDCP layer with respect to the SRB or the DRB to the bearer configuration information.

The RRCConnectionReconfiguration message may add an indicator indicating whether to perform accumulative retransmission or selective retransmission with respect to AM DRB while PDCP reestablishment procedure is performed, to the bearer configuration information.

The RRCConnectionReconfiguration message may include an indicator indicating which ARQ function is to be used by the child IAB node, and whether to use a hop-by-hop ARQ function or an end-to-end ARQ function may be indicated by using the indicator. When the end-to-end ARQ function is set, the parent IAB node may instruct whether to perform a function of transmitting received RLC layer data intact or after split, or an ARQ function as an end of a child node. Also, the parent IAB node may indicate which ARQ function is to be used as a default function, and when an ARQ function is not configured in the RRCConnectionReconfiguration message, the parent IAB node may pre-determine to use one of the hop-by-hop ARQ function or the end-to-end ARQ function as the default function. The parent IAB node may also instruct the child IAB node whether to use a data split function, by using the RRCConnectionReconfiguration message, and may instruct activation (or availability) of each function of an RLC layer described with reference to FIG. 1B or 1D.

The RRCConnectionReconfiguration message may include an indicator indicating whether to use a data concatenation function in the adaptation layer. Also, the RRCConnectionReconfiguration message may include an indicator indicating whether to configure a header of the adaptation layer, and the parent IAB node may assign a type of the header. For example, the parent IAB node may configure which information among the UE identifier, the UE bearer identifier, the QoS identifier, the wireless node identifier, the wireless node address, and the QoS information is to be included in the header. The parent IAB node may configure to omit the header to reduce overhead.

The parent IAB node may configure the RLC channel to be used between the transmission adaptation layer and tje reception adaptation layer, between the child IAB node and the parent IAB node, or between the UE and the wireless node, by using the RRCConnectionReconfiguration message. In particular, the RRCConnectionReconfiguration message may include the number of usable RLC channels, a usable RLC channel identifier, or mapping information of data mapped to an RLC channel (for example, a UE identifier, a UE bearer identifier, QoS information, or QoS identifier mapping information). The RLC channel may be defined as a channel that transmits data according to QoS by grouping data of multiple UEs, based on the QoS information, and may be defined as a channel that transmits data by grouping data for each UE.

The RRCConnectionReconfiguration message may include an indicator indicating whether to perform retransmission based on a PDCP status report in configuration information (pdcp-config) of the PDPC layer. The parent IAB node may instruct the retransmission based on a PDCP status report to be performed by using the indicator of the RRCConnectionReconfiguration message. For example, when a value of the indicator is set to 0, data corresponding to NACK information of the PDCP status report may be checked and data corresponding to ACK information may be discarded even when the PDCP status report is received. On the other hand, when the value of the indicator is set to 1, the data corresponding to the ACK information of the PDCP status report may be discarded and the data corresponding to NACK information may be retransmitted when the PDCP status report is received.

In order for the RRCConnectionReconfiguration message to indicate retransmission based on the PDCP status report to be performed, the configuration information (pdcp-config) of the PDCP layer may include a PDCP data recovery indicator (recoverPDCP). The parent IAB node may configure the UE or the child IAB node to trigger a PDCP data recovery procedure and transmit the PDCP status report, by using the indicator. Also, while the retransmission is performed during the PDCP data recovery procedure, the parent IAB node may perform selective retransmission based on the PDCP status report instead of successful transmission of a lower layer (for example, the RLC layer). In other words, retransmission may be performed only with respect to data indicated as NACK data in which successful transmission is not confirmed in the PDCP status report.

The RRCConnectionReconfiguration message may include an indicator indicating to periodically transmit the PDCP status report such that the PDCP status report is periodically transmitted in the configuration information (pdcp-config) of the PDCP layer. Also, a period or a timer value may be set by using the RRCConnectionSetup message. When the indicator and the configuration are received, the UE or the child IAB node may triger and transmit the PDCP status report according to the period or whenever the timer value expires.

The RRCConnectionReconfiguration message may include an indicator indicating to transmit the PDCP status report such that the PDCP status report is triggered and transmitted in the configuration information (pdcp-config) of the PDCP layer. Also, a timer value may be set by using the RRCConnectionSetup message. When the indicator and the configuration are received, the PDCP layer of the UE or the child IAB node may trigger a timer having the timer value whenever a gap is generated in a PDCP sequence number, and when the gap of the PDCP sequence number is not filled or data corresponding to the PDCP sequence number assumed to be missing is not received until the timer expires, the PDCP layer may trigger the PDCP status report when the timer expires, and configure and transmit the PDCP status report. When the gap of the PDCP sequence number is filled or the data corresponding to the PDCP sequence number assumed to be missing is received before the timer expires, the timer may be stopped and initialized. Here, the timer may be a PDCP reordering timer or a new timer having a value smaller or greater than that of the PDCP reordering timer may be defined.

A PDCP status report prohibit timer may be configured to prevent frequent trigerring of the PDCP status report in the configuration information (pdcp-config) of the PDCP layer, by using the RRCConnectionReconfiguration message. When the PDCP status report prohibit timer is configured, the UE or the child IAB node may trigger the PDCP status report, configure and transmit the PDCP status report, and trigger the PDCP status report prohibit timer. When the PDCP status report prohibit timer is being driven, the PDCP status report may not be additionally transmitted, and the PDCP status report may be transmitted after the PDCP status report prohibit timer expires.

Information about the parent IAB node or the child IAB node, such a congestion level useful to the wireless node, queuing delay, and one-hop air latency between wireless nodes, information about each hop, and the like may be transmitted by using the RRCConnectionReconfiguration message (or a separate newly defined RRC message). Also, wireless hop count from a wireless node that received the RRCConnectionReconfiguration message to an uppermost wireless node (IAB donor) may be indicated. A wireless node that received the wireless hop count via the RRC message may notify a following child node of the hop count after increasing the instructed hop count by 1.

In the disclosure, a bearer may include an SRB and a DRB. In the disclosure, a UM DRB denotes a DRB using an RLC layer operating in a UM, and an AM DRB denotes a DRB using an RLC layer operating in an AM.

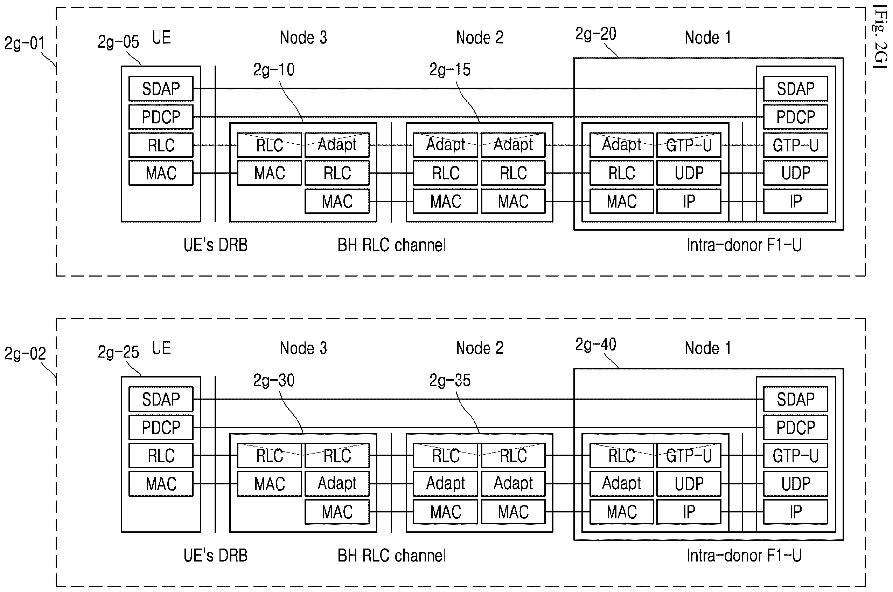

FIG. 2G is a diagram of a protocol layer that each of wireless nodes may include in a next-generation mobile communication system to which an embodiment of the disclosure is applied. In particular, FIG. 2G is a diagram showing a protocol layer that each of wireless nodes may include in a next-generation mobile communication system supporting wireless backhaul to which an embodiment of the disclosure is applied.

Referring to FIG. 2G, protocol layers of wireless nodes supporting wireless backhaul may be largely divided into two types. The two types may be classified based on a position of an ADAP layer. A protocol layer structure may include a protocol layer structure 2g-01 in which an ADAP layer is driven on an RLC layer (i.e. RLC layer is lower layer of the ADAP layer), and a protocol layer structure 2g-02 in which an ADAP layer is driven below an RLC layer (i.e. ADAP layer is lower layer of the RLC layer).

In FIG. 2G, a UE 2g-05 is a protocol layer and may drive all of a PHY layer, an MAC layer, an RLC layer, a PDCP layer, and an SDAP layer. Wireless nodes (for example, wireless nodes that perform a wireless backhaul function of receiving and transmitting data between a UE and an IAB donor, a node 3 2g-10 or a node 2 2g-15) may drive the PHY layer, the MAC layer, the RCL layer, and the ADAP layer. Also, an uppermost wireless node (for example, an uppermost node that supports wireless backhaul and transmits data by being connected to a core network, i.e., an IAB donor or a node 1 2g-20) may drive all of the PHY layer, the MAC layer, the RLC layer, the PDCP layer, and the SDAP layer. Meanwhile, the uppermost wireless node may include a CU and a DU connected via wires. According to an embodiment of the disclosure, the CU may drive the SDAP layer and the PDCP layer, and the DU may drive the RLC layer, the MAC layer, and the PHY layer.

The ADAP layer may identify a plurality of bearers of a plurality of UEs and map the plurality of bearers to an RCL channel. Also, when identifying the plurality of bearers of the plurality of UEs, the ADAP layer may group data, based on the UE or QoS to map the data to one RLC channel, process the data as a group, and reduce overhead by grouping the data mapped to the one RLC channel via a data concatenation function. Here, the data concatenation function may denote a function in which one header or a small number of headers is configured for a plurality of pieces of data, a header field of indicating concatenated data is indicated to distinguish each piece of data, and a header is not configured for each piece of data unnecessarily to reduce overhead.

In the protocol layer structure 2g-01 of FIG. 2G, the node 3 2g-10 may drive first RLC layers identical to those corresponding to each data bearer of the UE 2g-05, so as to process data received from the UE 2g-05. Also, the node 3 2g-10 may process pieces of data received from the plurality of RLC layers by using the ADAP layer, and map the processed pieces of data to a new RLC channel and second RLC layers corresponding to the new RLC channel. The ADAP layer of the node 3 2g-10 may distinguish a plurality of bearers of a plurality of UEs and map the plurality of bearers to an RCL channel. Also, when the plurality of bearers of the plurality of UEs are distinguished, the ADAP layer may group data based on a UE or QoS to map the data to one RLC channel, and may group and process data in the second RLC layer. The RLC channel may be defined as a channel that transmits data according to QoS by grouping data of multiple UEs, based on the QoS information, and may be defined as a channel that transmits data by grouping data for each UE.

The node 3 2g-10 may perform a procedure of distributing UL transmission resources received from the parent IAB node. The node 3 2g-10 may perform the procedure of distributing the UL transmission resources according to QoS information of the RLC channel (or the second RLC layer), priority, an amount of transmittable data (for example, an amount of data allowed in a current UL transmission resource or a token), or an amount of data stored in a buffer with respect to the RLC channel (or the second RLC layer). Also, the node 3 2g-10 may transmit data of each RLC channel to the parent IAB node b using a split function or a concatenation function, according to the distributed resources.

The first RLC layer may denote an RLC layer that processes data corresponding to a bearer, like an RLC layer corresponding to each bearer of the UE, and the second RLC layer may denote an RLC layer that processes data mapped by the ADAP layer based on the UE, QoS, or mapping information configured by the parent IAB node.

In the protocol layer structure 2g-01 of FIG. 2G, the node 2 2g-10 may drive second RLC layers corresponding to those of a child IAB node (the node 3 2g-10), and process data according to an RLC channel.

In the protocol layer structure 2g-01 of FIG. 2G, the uppermost node 1 2g-20 may drive second RLC layers corresponding to those of a child IAB node (the node 2 2g-15), and process data according to an RLC channel. The ADAP layer of the uppermost node 1 2g-20 may map pieces of data processed with respect to the RLC channel to PDCP layers for each bearer of each UE. Also, the PDCP layer of the uppermost node 1 2g-20 corresponding to each bearer of each UE may process received data, transmit the data to the SDAP layer, and transmit the data to the core network.

In the protocol layer structure 2g-02 of FIG. 2G, a node 3 2g-30 may drive first RLC layers identical to those corresponding to each data bearer of a UE 2g-25, so as to process data received from the UE 2g-25. The node 3 2g-30 may identically process data received fro a plurality of RLC layers by driving the first RLC layers. Also, an ADAP layer of the node 3 2g-30 may process pieces of data processed by using the first RLC layer and map the pieces of data to new RLC channels. The ADAP layer may distinguish a plurality of bearers of a plurality of UEs and map the plurality of bearers to an RCL channel. Also, when the plurality of bearers of the plurality of UEs are distinguished, the ADAP layer may group data based on a UE or QoS to map the data to one RLC channel, and may group and process the data. The RLC channel may be defined as a channel that transmits data according to QoS by grouping data of multiple UEs, based on the QoS information, and may be defined as a channel that transmits data by grouping data for each UE.

The node 3 2g-30 may perform a procedure of distributing UL transmission resources received from the parent IAB node. According to an embodiment of the disclosure, the node 3 2g-30 may perform the procedure of distributing the UL transmission resources according to QoS information of the RLC channel, priority, an amount of transmittable data (for example, an amount of data allowed in a current UL transmission resource or a token), or an amount of data stored in a buffer with respect to the RLC channel. Also, the node 3 2g-30 may transmit data of each RLC channel to the parent IAB node b using a split function or a concatenation function, according to the distributed resources.

In the protocol layer structure 2g-02 of FIG. 2G, a node 2 2g-35 may process received data corresponding to the RLC channel of a child IAB node (the node 3 2g-30), according to the RLC channel. An ADAP layer of the node 2 2g-35 may map pieces of data received with respect to the RLC channel to first RLC layers for each bearer of each UE. Also, the first RLC layer corresponding to each bearer of each UE of the wireless node may process received data to again transmit and process data to a transmission first RLC layer, and again transmit the data to the ADAP layer. The ADAP layer may map the data received from the plurality of RLC layers again to the RLC channels, and transmit the data to a next parent IAB node according to distribution of UL transmission resources.

In the protocol layer structure 2g-02 of FIG. 2G, an uppermost node 1 2g-40 may process received data with respect to the RLC channel of a child IAB node (the node 2 2g-35), according to the RLC channel. Also, an ADAP layer of the node 1 2g-40 may map pieces of data received with respect to the RLC channel to first RLC layers corresponding to each bearer of each UE.

According to an embodiment of the disclosure, a wireless node may drive first RLC layers corresponding to each bearer of each UE, process received data, and transmit the data to PDCP layers according to each bearer of each UE. A PDCP layer of an uppermost node corresponding to each bearer of each UE may process received data, transmit the data to an SDAP layer, and transmit the data to a core network.

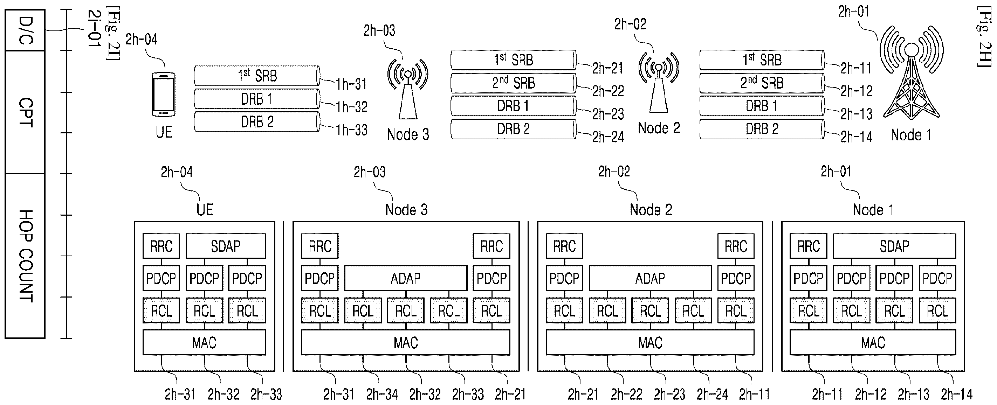

FIG. 2H is a diagram for describing a bearer managing and processing method of wireless nodes in a next-generation mobile communication system, according to an embodiment of the disclosure.

Referring to FIG. 2H, a wireless node 2h-04 (for example, a UE) may transmit or receive data to or from an uppermost wireless node 2h-01 (for example, an IAB donor) connected to a core network, through a node 3 2h-03 (for example, an intermediate wireless node or an IAB node) and a node 2 2h-02 (for example, a wireless node or an IAB node).

According to an embodiment of the disclosure, first SRB 2h-31, 2h-21, and 2h-11 for configuring RRC connection with a parent IAB node may be configured for each wireless node, in an IAB network. A first SRB 2h-31, 2h-21, and 2h-11 may be connected to a PHY layer, an MAC layer, and an RLC layer in an intermediate wireless node, and may be directly connected to a PDCP layer without being connected to an ADAP layer. Also, a first SRB 2h-31, 2h-21, and 2h-11 may be used to exchange RRC messages between two wireless nodes connected to one wireless link, and may perform a separate encoding and decoding or integrity protection and integrity verification procedure in a connected PDCP layer.

Also, according to an embodiment of the disclosure, the UE accessed wireless node 3 2h-03 (for example, the UE accessed IAB node) may configure second SRB 2h-22, and 2h-12 so as to transmit or receive an NAS message through the uppermost wireless node 2h-01 (for example, the node 1) for network configuration with respect to the corresponding UE. The UE accessed wireless node 3 2h-03 identifies an RRC message received through the first SRB 2h-31, 2h-21, and 2h-11, and data that needs to be transmitted to a core network as the NAS message may be transmitted to the wireless node 2 2h-02 through the second SRB 2h-22 and 2h-12, and the wireless node 2 2h-02 may transmit the corresponding data to the uppermost wireless node 1 2h-01 again through the second SRB 2h-22 and 2h-12. The uppermost wireless node 1 2h-01 that received the data transmits the corresponding data to the core network, and upon receiving response data from the core network, transmits the response data to the wireless node 3 2h-03 through the second SRB 2h-22 and 2h-12, and the wireless node 3 2h-03 may transmit the response data to the UE 2h-04 through the first SRB 2h-31, 2h-21, and 2h-11. The second SRB 2h-22 and 2h-12 may be connected to a PHY layer, an MAC layer, an RLC layer, and an ADAP layer in intermediate wireless nodes (for example, the wireless node 2 2h-02 or the wireless node 3 2h-03). In other words, unlike the first SRB 2h-31, 2h-21, and 2h-11, the second SRB 2h-22 and 2h-12 may be mapped to a new RLC layer through the ADAP layer and transmitted to a next wireless node.

According to an embodiment of the disclosure, the UE 2h-04 accessed wireless node 3 2h-03 (for example, the UE accessed IAB node) may generate and manage corresponding DRBs to process data received from the UE, and DRBs 2h-32, 2h-33, 2h-23, 2h-24, 2h-13, 2h-14 may be connected to the PHY layer, the MAC layer, the RLC layer, and the ADAP layer. Accordingly, the UE accessed wireless node 3 2h-03 may transmit data corresponding to the DRB to a next wireless node by mapping the data to a new RLC layer through the ADAP layer. Here, the intermediate wireless node 2 2h-02 may transmit or receive data by being connected to the PHY layer, the MAC layer, the RLC layer, and the ADAP layer so as to process data received from the child IAB node 3 2h-03 through the RLC channel.

Regarding the bearer managing and processing method of the wireless nodes, according to an embodiment of the disclosure, each wireless node performs a data concatenation function in the ADAP layer with respect to data corresponding to the DRBs of the UE, and does not perform a data concatenation function on the first SRB 2h-31, 2h-21, and 2h-11 because the ADAP layer is not connected.

Also, in the bearer managing and processing method of the wireless nodes, according to an embodiment of the disclosure, a security key used to perform encoding and integrity protection procedures on the data with respect to the first SRBs 2h-31, 2h-21, and 2h-11 may be determined by the parent IAB node of each wireless link. In other words, the first SRBs 2h-31, 2h-21, and 2h-11 may share and use the same security key, but to reinforce security, may parent IAB nodes may individually configure the security keys (for example, the security key for the first SRB 2h-31 is set by the wireless node 3 2h-03 and the security key for the first SRB 2h-21 is set by the wireless node 2 2h-02). Also, regarding the second SRB 2h-22 and 2h-12, each intermediate wireless node does not perform separate encoding and integrity protection except for encoding and integrity protection applied to the NAS message. Also, each intermediate wireless node performs the encoding and integrity protection described above for the first SRB, but does not perform separate encoding and integrity protection on the DRBs excluding the first SRB 2h-31, 2h-21, and 2h-11.

Also, in the bearer managing and processing method of the wireless nodes, according to an embodiment of the disclosure, a third SRB may be defined and used. The third SRB may be used as a control bearer for transmitting or receiving a control message between each of wireless nodes and an uppermost wireless node 2h-01. In other words, a bearer for transmitting or receiving a message for the uppermost wireless node 2h-01 to directly control each wireless node (for example, an RRC message or an interface message of an upper layer) may be defined and used. For example, the third SRB is configured between the uppermost wireless node 1 2h-01 and the wireless node 2 2h-02 to exchange a control message, the third SRB is configured between the uppermost wireless node 1 2h-01 and the wireless node 3 2h-03 to exchange a control message, and wireless node 2 2h-02 may transmit data corresponding to the third SRB to the uppermost wireless node 1 2h-01 and the wireless node 3 2h-03.

Hereinafter, a method of calculating a hop count between end wireless nodes in a next-generation mobile communication system supporting wireless backhaul will be described. For example, in FIG. 2H, a method of notifying the wireless node 3 2h-03 that a hop count is 2 because there are two wireless links between the wireless node 3 2h-03 and the wireless node 1 2h-01 is described. As another example, in FIG. 2H, a method of notifying the UE 2h-04 that a hop count is 3 because there are three wireless links between the UE 2h-04 and the wireless node 1 2h-01 is described.

According to an embodiment of the disclosure, a new RRC message or a new indicator in an existing RRC message may be defined such that each wireless node is able to calculate a hop count between wireless nodes. Such a new RRC message or new indicator of the existing RRC message may maintain 0 or a positive integer value, and when a wireless node receives the new RRC message or the new indicator of the existing RRC message from a parent IAB node or a child IAB node, the wireless node may identify the new RRC message or the new indicator of the existing RRC message, read the positive integer value, and determine a hop count. Also, a hop count field for maintaining the positive integer value may be defined, and the uppermost wireless node (for example, the node 1 2h-01) or the UE 2h-04 may set a value of the hop count field to 1 when transmitting the new RRC message or the existing RRC message including the hop count field to a next wireless node to indicate that the hop count between wireless nodes is 1. For example, upon receiving the new RRC message or the existing RRC message including the hop count field from the UE 2h-04, the wireless node 3 2h-03 that is the next wireless node may identify the value of the hop count field to determine that the hop count is 1, and may increase the value of the hop count field by 1 when transmitting the new RRC message or the existing RRC message including the hop count field to the wireless node 2 2h-02 that is a next wireless node. In other words, each wireless node may identify and store the hop count whenever the new RRC message or the existing RRC message including the hop count field is received, and transmit the new RRC message or the existing RRC message to a next wireless node after increasing the hop count field by 1 to notify the hop count.

According to an embodiment of the disclosure, the new RRC message or the existing RRC message including the hop count field may be transmitted or received through the first SRB or the second SRB of FIG. 2H.

According to another embodiment of the disclosure, because the uppermost wireless node (for example, the wireless node 1 2h-01) manages the IAB network, it may be assumed that the uppermost wireless node is aware of all hop counts with each wireless node. In this case, the uppermost wireless node may directly set the value of the hop count field for each wireless node and transmit the new RRC message or the existing RRC message including the hop count field to each wireless node. Upon receiving the new RRC message or the existing RRC message including the hop count field, each wireless node may read the value of the hop count field to determine the hop count from a current wireless node to the uppermost wireless node.

According to an embodiment of the disclosure, the new RRC message or the existing RRC message including the hop count field may be transmitted or received through the third SRB or the second SRB of FIG. 2H.

FIG. 2I is a diagram for describing a method, performed by a next-generation mobile communication system supporting wireless backhaul, of calculating a hop count between end wireless nodes, according to an embodiment of the disclosure.

Referring to FIG. 2I, according to an embodiment of the disclosure, an RLC layer may define an RLC control PDU. Here, the RLC control PDU may have a hop count value for calculating a hop count. Also, a D/C field (2i-01) for distinguishing an RLC data PDU and an RLC control PDU or a control PDU type (CPT) field for indicating an RLC control PDU having a hop count field among RLC control PDUs may be provided.

According to an embodiment of the disclosure, the hop count field of the RLC control PDU may maintain 0 or a positive integer value, and when the RLC control PDU is received from a parent IAB node or a child IAB node, a hop count is identified by identifying the hop count field of the received RLC control PDU and read the positive integer value. Also, an uppermost wireless node (for example, the wireless node 1 2h-01) or the UE 2h-04 may indicate that a hop count between wireless nodes is 1 by setting a value of a hop count field of a newly defined RLC control PDU including the hop count field to 1. For example, upon receiving the RLC control PDU including the hop count field from the UE 2h-04, the wireless node 3 2h-03 that is the next wireless node may identify the value of the hop count field to determine that the hop count is 1, and may increase the value of the hop count field by 1 when transmitting the RLC conrol PDU including the hop count field to the wireless node 2 2h-02 that is a next wireless node. In other words, each wireless node may identify and store the hop count whenever the newly defined RLC control PDU including the hop count field is received, and transmit the newly defined RLC control PDU to a next wireless node after increasing the hop count field by 1 to notify the hop count.

According to an embodiment of the disclosure, the RLC control PDU including the hop count field may be transmitted or received through DRBs of FIG. 2H.

Referring to FIG. 2I, according to an embodiment of the disclosure, an ADAP layer may define an ADAP control PDU. Here, the ADAP control PDU may have a hop count value for calculating a hop count. Also, a D/C field for distinguishing an ADAP data PDU and an ADAP control PDU or a control PDU type (CPT) field for indicating an ADAP control PDU having a hop count field among ADAP control PDUs may be provided.

According to an embodiment of the disclosure, the hop count field of the ADAP control PDU may maintain 0 or a positive integer value, and when the ADAP control PDU is received from a parent IAB node or a child IAB node, a hop count is identified by identifying the hop count field of the received ADAP control PDU and read the positive integer value. Also, an uppermost wireless node (for example, the wireless node 1 2h-01) or the UE 2h-04 may indicate that a hop count between wireless nodes is 1 by setting a value of a hop count field of a newly defined ADAP control PDU including the hop count field to 1. For example, upon receiving the ADAP control PDU including the hop count field from the UE 2h-04, the wireless node 3 2h-03 that is the next wireless node may identify the value of the hop count field to determine that the hop count is 1, and may increase the value of the hop count field by 1 when transmitting the ADAP conrol PDU including the hop count field to the wireless node 2 2h-02 that is a next wireless node. In other words, each wireless node may identify and store the hop count whenever the newly defined ADAP control PDU including the hop count field is received, and transmit the newly defined ADAP control PDU to a next wireless node after increasing the hop count field by 1 to notify the hop count.

According to an embodiment of the disclosure, the ADAP control PDU including the hop count field may be transmitted or received through DRBs of FIG. 2H.

According to an embodiment of the disclosure, a PDCP layer may drive a PDCP reordering timer, and an RLC layer may drive an RLC reassembly timer. The PDCP reordering timer is driven when a PDCP sequence number gap is generated based on PDCP sequence numbers in the PDCP layer, and when data corresponding to the PDCP sequence number gap is not received until the PDCP reordering timer expires, pieces of data is transmitted to an upper layer in an ascending order of the PDCP sequence numbers of count values and a reception window is moved. Accordingly, when the data corresponding to the PDCP sequence number gap is received after the PDCP reordering timer expires, the data is not data in the receive window, and thus is discarded, and thus data loss occurs.

On the other hand, the RLC layer drives the RLC reassembly timer, wherein the RLC reassembly timer is driven when an RLC sequence number gap is generated based on RLC sequence numbers in the RLC layer, and when data corresponding to the RLC sequence number gap is not received until the RLC reassembly timer expires, the RLC layer triggers an RLC status report and configures and transmits the RLC status report. Then, the RLC layer instructs that successful transmission is not confirmed for the data corresponding to the RLC sequence number gap in the RLC status report to request retransmission. Accordingly, when a value of the RLC reassembly timer is set to be small, retransmission is requested unnecessarily or frequently, thereby wasting transmission resources.

As described above, appropriate values are set for the PDCP reordering timer of the PDCP layer and the RLC reassembly timer of the RLC layer. In order to prevent data loss caused by the PDCP reordering timer, the value of the PDCP reordering timer considers highest retransmission delay of the RLC layer and highest retransmission delay of an MAC layer, and the value of the RLC reassembly timer considers highest retransmission delay of the MAC layer.

In the next-generation mobile communication system supporting wireless backhaul, the highest retransmission delay gradually increases as the hop count between the wireless nodes increases. Accordingly, the PDCP reordering timer of the PDCP layer and the RLC reassembly timer of the RLC layer are set considering the hop count between end wireless nodes.

According to an embodiment of the disclosure, when a wireless node determines a hop count by calculating the hop count between wireless nodes, a parent IAB node may calculate a value of the a PDCP reordering timer of a PDCP layer and a value of an RLC reassembly timer of an RLC layer of a child IAB node via an RRC message (for example, an RRCSetup message or an RRCReconfiguration message) described with reference to FIG. 2F, and reset the hop count by reflecting the determined hop count.

According to an embodiment of the disclosure, when the wireless node determines the hop count by calculating the hop count between wireless nodes, the parent IAB node may automatically adjust timer values by reflecting the hop count. In other words, for example, the timer value may be updated by calculating (new timer value) = (current timer value / stored hop count) x (new calculated hop count). The timer value may be updated when the stored hop count and the new calculated hop count are different from each other.

Hereinafter, a method, performed by each intermediate wireless node (IAB node), of discarding stored data, in the IAB network of FIG. 2I.

According to an embodiment of the disclosure, each intermediate wireless node may discard data whose successful transmission is confirmed (ACK), based on a received RLC status report. In other words, the data may be discarded based on ACK of the RLC status report. Also, an RLC discard timer may be defined and set. In other words, whenever the RLC layer receives the data, the RLC discard timer may be driven for each data and the data may be immediately discarded when the RLC discard timer expires. Here, the RLC discard timer may be set in RLC configuration information of an RRC message (for example, an RRSetup message or an RRCReconfiguration message) described with reference to FIG. 2H.

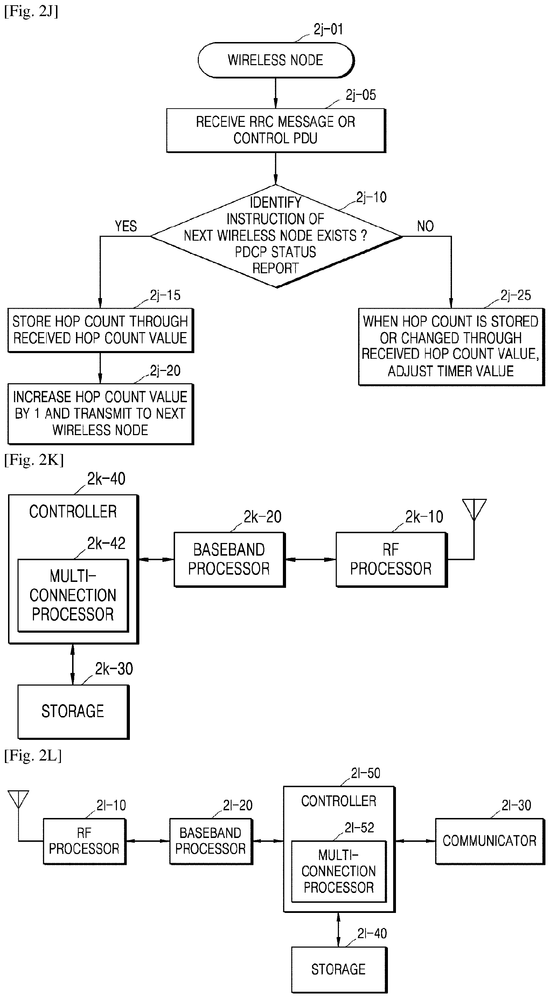

FIG. 2J is a diagram for describing operations of a wireless node (2j-01), wherein a next-generation mobile communication system supporting wireless backhaul calculates a hop count and reflects the hop count, according to an embodiment of the disclosure.

Referring to FIG. 2J, when an RRC message, an RLC control PDU, or an ADAP control PDU including a hop count field is received (2j-05), a wireless node reads (2j-10)and stores a value of the hop count field. When there is a next wireless node to which data, the RRC message, or the control PDU is to be transmitted, a hop count may be stored through a hop count value(2j-15), the hop count value may be increased by 1, and then the hop count value may be transmitted to the next wireless node(2j-20). When there is no next wireless node to which the data, the RRC message, or the control PDU is to be transmitted, the hop count may be stored through the hop count value to be compared with a pre-stored hop count, and when the hop count is changed, the new hop count is reflected to newly set and adjust the PDCP reordering timer of the PDCP layer and the RLC reassembly timer of the RLC layer (2j-25).

FIG. 2K is a diagram of a structure of a UE or a wireless node, according to an embodiment of the disclosure. Referring to FIG. 2K, the UE includes an RF processor 2k-10, a baseband processor 2k-20, a storage 2k-30, and a controller 2k-40.

The RF processor 2k-10 may perform functions for transmitting and receiving signals through radio channels, e.g., signal band conversion and amplification. That is, the RF processor 2k-10 up-converts a baseband signal provided from the baseband processor 2k-20, to a RF band signal and transmit the RF band signal through an antenna, and down-converts a RF band signal received through an antenna, to a baseband signal. For example, the RF processor 2k-10 may include a transmit filter, a receive filter, an amplifier, a mixer, an oscillator, a DAC, and an ADC. Although only a single antenna is illustrated in FIG. 2K, the UE may include multiple antennas. Also, the RF processor 2k-10 may include a plurality of RF chains. Furthermore, the RF processor 2k-10 may perform beamforming. For the beamforming, the RF processor 2k-10 may adjust phases and amplitudes of signals transmitted or received through multiple antennas or antenna elements. The RF processor 2k-10 may perform MIMO and may receive data of multiple layers in the MIMO operation. The RF processor 2k-10 may perform received beam sweeping by appropriately configuring multiple antennas or antenna elements, or adjust a direction and a beam width of the received beam to coordinate with a transmit beam, under the control of the controller 2k-40.

The baseband processor 2k-20 may convert between a baseband signal and a bitstream based on PHY layer specifications of a system. For example, for data transmission, the baseband processor 2k-20 may generate complex symbols by encoding and modulating a transmit bitstream. For data reception, the baseband processor 2k-20 may reconstruct a received bitstream by demodulating and decoding a baseband signal provided from the RF processor 2k-10. For example, according to an OFDM scheme, for data transmission, the baseband processor 2k-20 may generate complex symbols by encoding and modulating a transmit bitstream, maps the complex symbols to subcarriers, and then configure OFDM symbols by performing IFFT and CP insertion. For data reception, the baseband processor 2k-20 may split a baseband signal provided from the RF processor 2k-10, in OFDM symbol units, reconstruct signals mapped to subcarriers by performing FFT, and then reconstruct a received bitstream by demodulating and decoding the signals.

The baseband processor 2k-20 and the RF processor 2k-10 transmit and receive signals as described above. As such, each of the baseband processor 2k-20 and the RF processor 2k-10 may also be called a transmitter, a receiver, a transceiver, or a communicator. At least one of the baseband processor 2k-20 or the RF processor 2k-10 may include multiple communication modules to support multiple different radio access technologies. Also, at least one of the baseband processor 2k-20 or the RF processor 2k-10 may include multiple communication modules to process signals of different frequency bands. For example, the different radio access technologies may include an LTE network, NR network, etc. The different frequency bands may include a super high frequency (SHF) (e.g., 2.5 GHz and 2 GHz) band and a mmWave (e.g., 60 GHz) band. The UE may transmit and receive signals with a base station by using the baseband processor 2k-20 and the RF processor 2k-10 may as described above. Here, the signal may include control information and data.

The storage 2k-30 may store data for operation of the UE described above, e.g., basic programs, application programs, and configuration information. The storage 2k-30 may provide the stored data upon request by the controller 2k-40. The storage 2k-30 may be configured in storage medium, such as ROM, RAM, a hard disk, CD-ROM, or DVD, or a combination thereof. Also, the storage 2k-30 may be configured in a plurality of memories. According to an embodiment of the disclosure, the storage 2k-30 may store programs for supporting beam-based collaborative communication.

The controller 2k-40 may control overall operations of the UE. For example, the controller 2k-40 may transmit and receive signals through the baseband processor 2k-20 and the RF processor 2k-10. The controller 2k-40 may record and read data on and from the storage 2k-30. To this end, the controller 2k-40 may include at least one processor. According to an embodiment of the disclosure, the controller 2k-40 includes a multiconnection processor 2k-42 configured to perform processing to operate in a multi-connection mode. For example, the controller 2k-40 may control the UE of FIG. 2k-42 to perform a procedure of operations of the UE. For example, the controller 2k-40 may include a CP for controlling communications and an AP for controlling an upper layer such as an application program.

FIG. 2L is a block diagram of a TRP, a base station, or a wireless node in a wireless communication system to which an embodiment of the disclosure is applied. Referring to FIG. 2L, a base station may include an RF processor 21-10, a baseband processor 21-20, a communicator 21-30, a storage 21-40, and a controller 21-50.

The RF processor 21-10 may perform functions for transmitting and receiving signals through radio channels, e.g., signal band conversion and amplification. That is, the RF processor 21-10 up-converts a baseband signal provided from the baseband processor 21-20, to a RF band signal and transmit the RF band signal through an antenna, and down-converts a RF band signal received through an antenna, to a baseband signal. For example, the RF processor 21-10 may include a transmit filter, a receive filter, an amplifier, a mixer, an oscillator, a DAC, and an ADC. Although only a single antenna is illustrated in FIG. 2L, the base station may include multiple antennas. The RF processor 21-10 may include a plurality of RF chains. In addition, the RF processor 21-10 may perform beamforming. For beamforming, the RF processor 21-10 may adjust phases and amplitudes of signals transmitted or received through multiple antennas or antenna elements. The RF processor 21-10 may perform a downward MIMO operation by transmitting at least one layer.

The baseband processor 2l-20 may convert between a baseband signal and a bitstream based on physical layer specifications of a first radio access technology. For example, for data transmission, the baseband processor 21-20 may generate complex symbols by encoding and modulating a transmit bitstream. For data reception, the baseband processor 21-20 may reconstruct a received bitstream by demodulating and decoding a baseband signal provided from the RF processor 21-10. For example, according to an OFDM scheme, for data transmission, the baseband processor 21-20 generates complex symbols by encoding and modulating a transmit bitstream, maps the complex symbols to subcarriers, and then configures OFDM symbols by performing IFFT and CP insertion. For data reception, the baseband processor 21-20 may split a baseband signal provided from the RF processor 21-10, in OFDM symbol units, reconstruct signals mapped to subcarriers by performing FFT, and then reconstruct a received bitstream by demodulating and decoding the signals. The baseband processor 21-20 and the RF processor 21-10 may transmit and receive signals as described above. As such, each of the baseband processor 21-20 and the RF processor 21-10 may also be called a transmitter, a receiver, a transceiver, a communicator, or a wireless communicator.

The communicator 2l-30 may provide an interface for communicating with other nodes in a network. The base station may transmit and receive signals with a UE by using the baseband processor 21-20 and the RF processor 21-10. Here, the signal may include control information and data.

The storage 21-40 may store data for operation of the base station described above, e.g., basic programs, application programs, and configuration information. In particular, the storage 21-40 may store information about bearers allocated for a connected UE, a measurement report transmitted from the connected UE, etc. The storage 21-40 may store criteria information used to determine whether to provide or release multiconnection to or from the UE. The storage 21-40 may provide the stored data upon request by the controller 21-50. The storage 21-40 may be configured in storage medium, such as ROM, RAM, a hard disk, CD-ROM, or DVD, or a combination thereof. Also, the storage 21-40 may be configured in a plurality of memories. According to an embodiment of the disclosure, the storage 21-40 may store programs for supporting beam-based collaborative communication.

The controller 21-50 may control overall operations of the base station. For example, the controller 21-50 may transmit and receive signals through the baseband processor 21-20 and the RF processor 21-10 or through the communicator 2l-30. The controller 21-50 may record and read data on and from the storage 21-40. In this regard, the controller 21-50 may include at least one processor. According to an embodiment of the disclosure, the controller 2l-50 includes a multiconnection processor 21-52 configured to perform processing to operate in a multi-connection mode.

The methods according to the embodiments of the disclosure described in the claims or the detailed description may be implemented in hardware, software, or a combination of hardware and software.

When the methods are implemented in software, a computer-readable recording medium having one or more programs (software modules) recorded thereon may be provided. The one or more programs recorded on the computer-readable recording medium are configured to be executable by one or more processors in a device. The one or more programs include instructions to execute the methods according to the embodiments of the disclosure described in the claims or the detailed description.

The programs (e.g., software modules or software) may be stored in random access memory (RAM), non-volatile memory including flash memory, read-only memory (ROM), electrically erasable programmable read-only memory (EEPROM), a magnetic disc storage device, a compact disc-ROM (CD-ROM), a digital versatile disc (DVD), another type of optical storage device, or a magnetic cassette. Alternatively, the programs may be stored in a memory system including a combination of some or all of the above-mentioned memory devices. In addition, each memory device may be included by a plural number.

The programs may also be stored in an attachable storage device which is accessible through a communication network such as the Internet, an intranet, a local area network (LAN), a wireless LAN (WLAN), or a storage area network (SAN), or a combination thereof. The storage device may be connected through an external port to an apparatus performing the embodiments of the disclosure. Another storage device on the communication network may also be connected to the apparatus performing the embodiments of the disclosure.

According to the embodiments of the disclosure, a service may be effectively provided in a wireless communication system.

In the afore-described embodiments of the disclosure, elements included in the disclosure are expressed in a singular or plural form according to the embodiments of the disclosure. However, the singular or plural form is appropriately selected for convenience of explanation and the disclosure is not limited thereto. As such, an element expressed in a plural form may also be configured as a single element, and an element expressed in a singular form may also be configured as plural elements.

Meanwhile, the embodiments of the disclosure described with reference to the present specification and the drawings are merely illustrative of specific examples to easily facilitate description and understanding of the disclosure, and are not intended to limit the scope of the disclosure. In other words, it will be apparent to one of ordinary skill in the art that other modifications based on the technical ideas of the disclosure are feasible. Also, the embodiments of the disclosure may be combined with each other. For example, a portion of one embodiment of the disclosure and a portion of another embodiment of the disclosure may be combined with each other to enable a base station and a UE to operate. Also, other modifications based on technical ideas of the embodiments of the disclosure may be implemented in various systems, such as an FFD LTE system, a TDD LTE system, a 5G system, and an NR system.

Although the present disclosure has been described with various embodiments, various changes and modifications may be suggested to one skilled in the art. It is intended that the present disclosure encompass such changes and modifications as fall within the scope of the appended claims.

## Claims

1. An integrated access backhaul, IAB, node (1h-02, 1h-03), comprising:
a transceiver (1p-30); and
a controller (1p-50) coupled with the transceiver (1p-30) and configured to:
identify at least one of a buffer overflow or a radio link failure, RLF,
generate, by an adaptation, ADAP, entity of the IAB node (1h-02, 1h-03), a control message including a first field and a D/C field of an ADAP header, wherein the D/C field indicates that the control message is an ADAP control protocol data unit, PDU,
wherein in case that the buffer overflow is identified, the first field indicates information for controlling flow of data, and
wherein in case that the RLF is identified, the first field indicates information for notifying the RLF, and
transmit, to at least one of a parent IAB node or a child IAB node via at least one radio link control, RLC, channel connected to the ADAP entity, the control message.

2. The IAB node (1h-02, 1h-03) of claim 1, wherein the controller (1p-50) is configured to:
identify data corresponding to at least two data radio bearers, DRBs (1h-13, 1h-23, 1h-32; 1h-14, 1h-24; 1h-33), of at least one user equipment, UE (1h-04); and
map the data corresponding to the at least two DRBs (1h-13, 1h-23, 1h-32; 1h-14, 1h-24; 1h-33) of the at least one UE to the at least one RLC channel, based on a predetermined configuration.

3. The IAB node (1h-02, 1h-03) of claim 1, wherein the controller (1p-50) is configured to:
configure a signal radio bearer, SRB, connecting to a packet data convergence protocol, PDCP, entity via an RLC entity bypassing the ADAP entity; and
process a radio resource control, RRC, message via the SRB.

4. A communication method of an integrated access backhaul, IAB, node (1h-02, 1h-03), the communication method comprising:
identifying at least one of a buffer overflow or a radio link failure, RLF;
generating, by an adaptation, ADAP, entity of the IAB node (1h-02, 1h-03), a control message including a first field and a D/C field of an ADAP header, wherein the D/C field indicates that the control message is an ADAP control protocol data unit, PDU;
wherein in case that the buffer overflow is identified, the first field indicates information for controlling flow of data, and
wherein in case that the RLF is identified, the first field indicates information for notifying the RLF, and
transmitting, to at least one of a parent IAB node or a child IAB node via at least one radio link control, RLC, channel connected to the ADAP entity, the control message.

5. The communication method of claim 4, further comprising:
identifying data corresponding to at least two data radio bearers, DRBs (1h-13, 1h-23, 1h-32; 1h-14, 1h-24; 1h-33), of at least one user equipment, UE (1h-04); and
mapping the data corresponding to the at least two DRBs (1h-13, 1h-23, 1h-32; 1h-14, 1h-24; 1h-33) of the at least one UE to the at least one RLC channel, based on a predetermined configuration.

6. The communication method of claim 4, further comprising:
configuring a signal radio bearer, SRB, connecting to a packet data convergence protocol, PDCP, entity via an RLC entity bypassing the ADAP entity; and
processing a radio resource control, RRC, message via the SRB.

## Patentansprüche

1. Knoten (1h-02, 1h-03) für integrierten Zugriffs-Backhaul, IAB, umfassend:
einen Transceiver (1p-30); und
eine Steuerung (1p-50), die mit dem Transceiver (1p-30) gekoppelt ist und konfiguriert ist zum:
Identifizieren von mindestens einem von einem Pufferüberlauf oder einem Funkverbindungsausfall, RLF,
Erzeugen, durch eine Anpassungsinstanz, ADAP-Instanz, des IAB-Knotens (1h-02, 1h-03), einer Steuernachricht, die ein erstes Feld und ein D/C-Feld eines ADAP-Headers beinhaltet, wobei das D/C-Feld angibt, dass die Steuernachricht eine ADAP-Steuerprotokolldateneinheit, PDU, ist,
wobei, falls der Pufferüberlauf identifiziert wird, das erste Feld Informationen zur Steuerung des Datenflusses angibt, und
wobei, falls der RLF identifiziert wird, das erste Feld Informationen zur Benachrichtigung über den RLF angibt, und
Übertragen der Steuernachricht an mindestens einen von einem übergeordneten IAB-Knoten oder einem untergeordneten IAB-Knoten über mindestens einen mit der ADAP-Instanz verbundenen Funkverbindungssteuerkanal, RLC-Kanal.

2. IAB-Knoten (1h-02, 1h-03) nach Anspruch 1, wobei die Steuerung (1p-50) konfiguriert ist zum:
Identifizieren von Daten, die mindestens zwei Datenfunkträgern, DRBs (1h-13, 1h-23, 1h-32; 1h-14, 1h-24; 1h-33), mindestens eines Benutzergerätes, UE (1h-04), entsprechen; und
Zuordnen der Daten, die den mindestens zwei DRBs (1h-13, 1h-23, 1h-32; 1h-14, 1h-24; 1h-33) des mindestens einen UE entsprechen, zu dem mindestens einen RLC-Kanal basierend auf einer vorgegebenen Konfiguration.

3. IAB-Knoten (1h-02, 1h-03) nach Anspruch 1, wobei die Steuerung (1p-50) konfiguriert ist zum:
Konfigurieren eines Signalfunkträgers, SRB, der über eine RLC-Instanz, die die ADAP-Instanz umgeht, mit einer Paketdatenkonvergenzprotokollinstanz, PDCP-Instanz, verbunden ist; und
Verarbeiten einer Funkressourcensteuernachricht, RRC-Nachricht, über den SRB.

4. Kommunikationsverfahren eines Knotens (1h-02, 1h-03) für integrierten Zugriffs-Backhaul, IAB, wobei das Kommunikationsverfahren Folgendes umfasst:
Identifizieren von mindestens einem von einem Pufferüberlauf oder einem Funkverbindungsausfall, RLF;
Erzeugen, durch eine Anpassungsinstanz, ADAP-Instanz, des IAB-Knotens (1h-02, 1h-03), einer Steuernachricht, die ein erstes Feld und ein D/C-Feld eines ADAP-Headers beinhaltet, wobei das D/C-Feld angibt, dass die Steuernachricht eine ADAP-Steuerprotokolldateneinheit, PDU, ist;
wobei, falls der Pufferüberlauf identifiziert wird, das erste Feld Informationen zur Steuerung des Datenflusses angibt, und
wobei, falls der RLF identifiziert wird, das erste Feld Informationen zur Benachrichtigung über den RLF angibt, und
Übertragen der Steuernachricht an mindestens einen von einem übergeordneten IAB-Knoten oder einem untergeordneten IAB-Knoten über mindestens einen mit der ADAP-Instanz verbundenen Funkverbindungssteuerkanal, RLC-Kanal.

5. Kommunikationsverfahren nach Anspruch 4, ferner umfassend:
Identifizieren von Daten, die mindestens zwei Datenfunkträgern, DRBs (1h-13, 1h-23, 1h-32; 1h-14, 1h-24; 1h-33), mindestens eines Benutzergerätes, UE (1h-04), entsprechen; und
Zuordnen der Daten, die den mindestens zwei DRBs (1h-13, 1h-23, 1h-32; 1h-14, 1h-24; 1h-33) des mindestens einen UE entsprechen, zu dem mindestens einen RLC-Kanal basierend auf einer vorgegebenen Konfiguration.

6. Kommunikationsverfahren nach Anspruch 4, ferner umfassend:
Konfigurieren eines Signalfunkträgers, SRB, der über eine RLC-Instanz, die die ADAP-Instanz umgeht, mit einer Paketdatenkonvergenzprotokollinstanz, PDCP-Instanz, verbunden ist; und
Verarbeiten einer Funkressourcensteuernachricht, RRC-Nachricht, über den SRB.

## Revendications

1. Nœud de liaison terrestre d'accès intégré, IAB, (1h-02, 1h-03), comprenant :
un émetteur-récepteur (1p-30) ; et
une commande (1p-50), couplée à l'émetteur-récepteur (1p-30) et configurée pour :
identifier au moins au moins l'un d'un dépassement de mémoire tampon ou d'une défaillance de liaison radio, RLF,
générer, par une entité d'adaptation, ADAP, du nœud IAB (1h-02, 1h-03), un message de commande comprenant un premier champ et un champ D/C d'un en-tête ADAP, dans lequel le champ D/C indique que le message de commande est une unité de données de protocole, PDU, de commande, ADAP,
dans lequel, au cas où le dépassement de mémoire tampon est identifié, le premier champ indique des informations permettant de commander le flux de données, et
dans lequel, au cas où le RLF est identifié, le premier champ indique des informations pour notifier le RLF, et
transmettre le message de commande à au moins l'un d'un nœud IAB parent ou d'un nœud IAB enfant via au moins un canal de commande de liaison radio, RLC, connecté à l'entité ADAP.

2. Nœud IAB (1h-02, 1h-03) selon la revendication 1, dans lequel la commande (1p-50) est configurée pour :
identifier des données correspondant à au moins deux supports radio de données, DRB (1h-13, 1h-23, 1h-32 ; 1h-14, 1h-24 ; 1h-33), d'au moins un équipement utilisateur, UE (1h-04) ; et
mapper les données correspondant aux au moins deux DRB (1h-13, 1h-23, 1h-32 ; 1h-14, 1h-24 ; 1h-33) de l'au moins un UE à l'au moins un canal RLC, sur la base d'une configuration prédéterminée.

3. Nœud IAB (1h-02, 1h-03) selon la revendication 1, dans lequel la commande (1p-50) est configurée pour :
configurer un support radio de signal, SRB, se connectant à une entité de protocole de convergence de données par paquets, PDCP, via une entité RLC contournant l'entité ADAP ; et
traiter un message de commande de ressources radio, RRC, via le SRB.

4. Procédé de communication d'un nœud de liaison terrestre d'accès intégré, IAB, (1h-02, 1h-03), comprenant :
identifier au moins l'un d'un dépassement de mémoire tampon ou d'une défaillance de liaison radio, RLF ;
générer, par une entité d'adaptation, ADAP, du nœud IAB (1h-02, 1h-03), un message de commande comprenant un premier champ et un champ D/C d'un en-tête ADAP, dans lequel le champ D/C indique que le message de commande est une unité de données de protocole, PDU, de commande, ADAP ;
dans lequel, au cas où le dépassement de mémoire tampon est identifié, le premier champ indique des informations permettant de commander le flux de données, et
dans lequel, au cas où le RLF est identifié, le premier champ indique des informations pour notifier le RLF, et
transmettre le message de commande à au moins l'un d'un nœud IAB parent ou d'un nœud IAB enfant via au moins un canal de commande de liaison radio, RLC, connecté à l'entité ADAP.

5. Procédé de communication de la revendication 4, comprenant en outre :
identifier des données correspondant à au moins deux supports radio de données, DRB (1h-13, 1h-23, 1h-32 ; 1h-14, 1h-24 ; 1h-33), d'au moins un équipement utilisateur, UE (1h-04) ; et
mapper les données correspondant aux au moins deux DRB (1h-13, 1h-23, 1h-32 ; 1h-14, 1h-24 ; 1h-33) de l'au moins un UE à l'au moins un canal RLC, sur la base d'une configuration prédéterminée.

6. Procédé de communication de la revendication 4, comprenant en outre :
configurer un support radio de signal, SRB, se connectant à une entité de protocole de convergence de données par paquets, PDCP, via une entité RLC contournant l'entité ADAP ; et
traiter un message de commande de ressources radio, RRC, via le SRB.
